# EUROPEAN PATENT APPLICATION

(11) **EP 4 447 225 A1**
(43) Date of publication of application: **16.10.2024**
(21) Application number: 23740478.5
(22) Date of filing: 12.01.2023
(51) Int. Cl.: H01Q 1/38, H01Q 1/24, H01Q 5/25, H04M 1/02

(54) **ELECTRONIC DEVICE COMPRISING ANTENNA**

(30) Priority: 12.01.2022 KR 20220004890; 22.02.2022 KR 20220022826
(71) Applicant: Samsung Electronics Co., Ltd, Suwon-si, Gyeonggi-do 16677 (KR)
(72) Inventor: YUN, Sumin, Suwon-si, Gyeonggi-do 16677 (KR); KIM, Hosaeng, Suwon-si, Gyeonggi-do 16677 (KR); YOON, Shinho, Suwon-si, Gyeonggi-do 16677 (KR); CHUN, Jaebong, Suwon-si, Gyeonggi-do 16677 (KR)
(74) Representative: HGF
(86) International application number: PCT/KR2023/000591
(87) International publication number: WO 2023/136635

(57) **Abstract**

An electronic device according to an example embodiment of the present disclosure comprises: a housing including a conductive area and forming the exterior of the electronic device; and an antenna structure positioned in the inner space of the housing, wherein the antenna structure comprises: a printed circuit board including a first surface facing at least one opening formed in the conductive area in correspondence to the antenna structure, and a second surface facing the direction opposite to the first surface; and at least one antenna element positioned on the first surface or positioned inside the printed circuit board so as to be closer to the first surface than to the second surface, and the conductive area can comprise at least one slit extending from the at least one opening.

## Description

### [Technical Field]

Various embodiments of the disclosure relate to an electronic device including an antenna.

### [Background Art]

With the advancement of wireless communication technology, electronic devices are being commonly used in daily life, and the use of content is increasing accordingly. This rapid increase in content usage may require an expansion of network processing capacity. Electronic devices include multiple antennas to support various communication technologies.

The foregoing information may be provided as background art (related art) to aid in understanding the disclosure. None of the information described above is claimed or suggested to be applicable as prior art related to the disclosure.

### [Disclosure of Invention]

### [Technical Problem]

As the range of available applications for electronic devices like smartphones continues to expand, the number of antennas included in the electronic devices is increasing. As electronic devices are becoming slimmer while adding components for different functions, it becomes more difficult to position antennas in the limited space inside the electronic devices while reducing electrical interference with various elements and ensuring desired radiation performance or coverage (or communication range) for the desired frequency band. In addition, when an electronic device transmits radio waves into free space or receives external radio waves using an antenna, external dielectrics, such as the hand holding the electronic device, may affect the transmission and reception of radio waves.

Various embodiments of the disclosure may provide an electronic device including an antenna for reducing the degradation of radio wave transmission/reception performance (or antenna radiation performance) by an external dielectric.

### [Solution to Problem]

According to an example embodiment of the disclosure, an electronic device may include a housing and an antenna structure. The housing may include a conductive area that forms the exterior of the electronic device. The antenna structure may be positioned in an inner space of the housing. The antenna structure may include a printed circuit board and at least one antenna element. The printed circuit board may include a printed circuit board having a first surface and a second surface facing in an opposite direction to the first surface. The first surface of the printed circuit board may face at least one opening formed in the conductive area and corresponding to the antenna structure. The at least one antenna element may be positioned on the first surface or may be positioned inside the printed circuit board and closer to the first surface than to the second surface. The conductive area may include at least one slit extending from the at least one opening.

According to an example embodiment of the disclosure, an electronic device may include a housing and an antenna structure positioned in an inner space of the housing. The housing may include a front plate at least partially forming a front surface of the electronic device, a rear plate at least partially forming a rear surface of the electronic device, and a lateral member at least partially surrounding a space between the front plate and the rear plate and at least partially forming a side surface of the electronic device. The antenna structure may include a printed circuit board including a first surface, facing at least one opening formed in a lateral conductive structure included in the lateral member, and a second surface, facing in a direction opposite to the first surface. The antenna structure may include at least one antenna element positioned on the first surface or positioned inside the printed circuit board and closer to the first surface than to the second surface. The lateral conductive structure may include at least one slit extending from the at least one opening.

### [Advantageous Effects of Invention]

According to various embodiments of the disclosure, the electronic device including an antenna may reduce the influence of external dielectrics, such as hands, on radio wave transmission/reception performance (or antenna radiation performance) and/or coverage.

Other effects that may be obtained or predicted by various embodiments of the disclosure will be disclosed, directly or implicitly in the detailed description of the embodiments of the disclosure. For example, various effects predicted by various embodiments of the disclosure will be disclosed in the detailed description below.

### [Brief Description of Drawings]

FIG. 1 is a block diagram of an electronic device in a network environment according to an embodiment.
FIG. 2 is a block diagram of an electronic device in a network environment including multiple cellular networks according to an embodiment.
FIG. 3 is a perspective view of an electronic device according to an embodiment.
FIG. 4 is a perspective view of an electronic device according to an embodiment.
FIG. 5 is an exploded perspective view of an electronic device according to an embodiment.
FIGS. 6 and 7 are perspective views of an antenna module according to an embodiment.
FIG. 8 illustrates an electronic device viewed in the -x-axis direction in FIG. 3 according to an embodiment.
FIG. 9 is a partial cross-sectional perspective view of an electronic device according to an embodiment.
FIG. 10 is a cross-sectional view of an electronic device according to an embodiment, taken along line A-A' in FIG. 8.
FIG. 11 is a cross-sectional view of an electronic device according to an embodiment, taken along line B-B' in FIG. 8.
FIG. 12 illustrates an electric field distribution in a radiating structure according to an embodiment, and an electric field distribution in a radiating structure according to a comparative example.
FIG. 13 is a graph depicting an antenna gain in a radiating structure according to an embodiment, and an antenna gain in a radiating structure according to a comparative example.
FIG. 14 illustrates an electric field distribution when an external dielectric is adjacent to a radiating structure according to an embodiment, and an electric field distribution when an external dielectric is adjacent to a radiating structure according to a comparative example.
FIG. 15 illustrates a radiation pattern when an external dielectric is adjacent to a radiating structure according to an embodiment, and a radiation pattern when an external dielectric is adjacent to a radiating structure according to a comparative example.
FIG. 16 is a graph depicting antenna radiation performance of a radiating structure according to an embodiment, and antenna radiation performance of a radiating structure according to a comparative example.
FIG. 17 illustrates an electronic device in another embodiment that is a variation of the embodiment of FIG. 8.
FIG. 18 illustrates an electronic device in another embodiment that is a variation of the embodiment of FIG. 8.
FIG. 19 illustrates an electronic device in another embodiment that is a variation of the embodiment of FIG. 8.
FIG. 20 illustrates an electronic device in another embodiment that is a variation of the embodiment of FIG. 8.
FIG. 21 illustrates an electronic device in another embodiment that is a variation of the embodiment of FIG. 20.
FIG. 22 illustrates an electronic device in another embodiment that is a variation of the embodiment of FIG. 20.
FIG. 23 illustrates an electronic device in another embodiment that is a variation of the embodiment of FIG. 22.
FIG. 24 illustrates an electronic device in another embodiment that is a variation of the embodiment of FIG. 22.
FIG. 25 illustrates an electronic device in another embodiment that is a variation of the embodiment of FIG. 22.
FIG. 26 illustrates an electronic device in another embodiment that is a variation of the embodiment of FIG. 25.
FIG. 27 illustrates an electronic device in various embodiments.
FIG. 28 illustrates an electronic device in various embodiments.
FIG. 29 is a cross-sectional view of an electronic device according to an embodiment.
FIG. 30 illustrates an electronic device according to an embodiment.
FIG. 31 illustrates an electronic device according to another embodiment.

### [Mode for the Invention]

Hereinafter, various embodiments of the disclosure disclosed herein will be described with reference to the accompanying drawings.

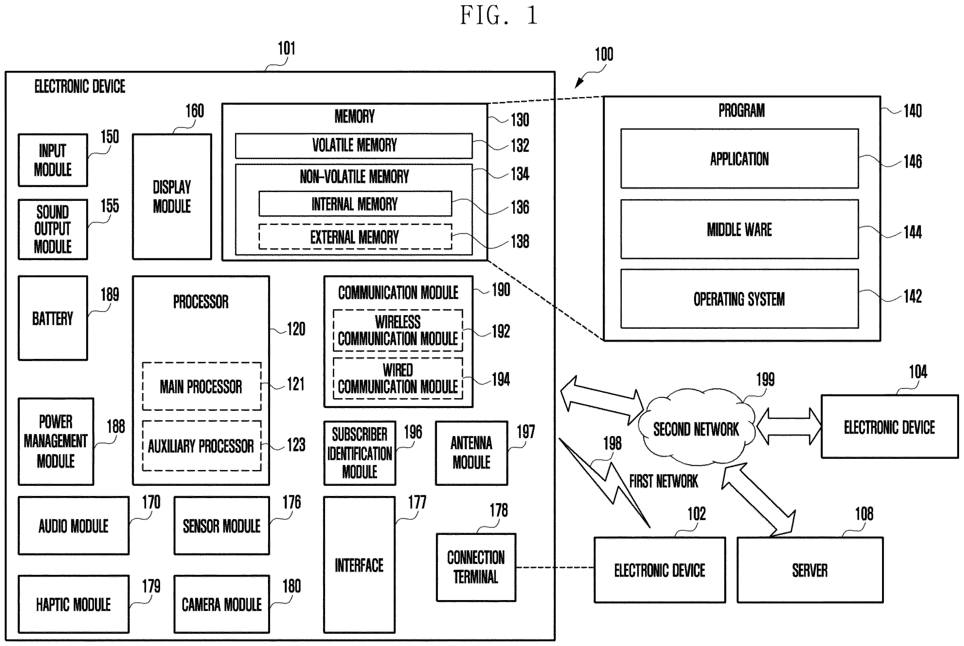

FIG. 1 is a block diagram of an electronic device 101 in a network environment 100 according to an embodiment.

Referring to Fig. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments of the disclosure, at least one (e.g., the connection terminal 178) of the components may be omitted from the electronic device 101, or one or more other components may be added in the electronic device 101. In some embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5th generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4th generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

The term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORETM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

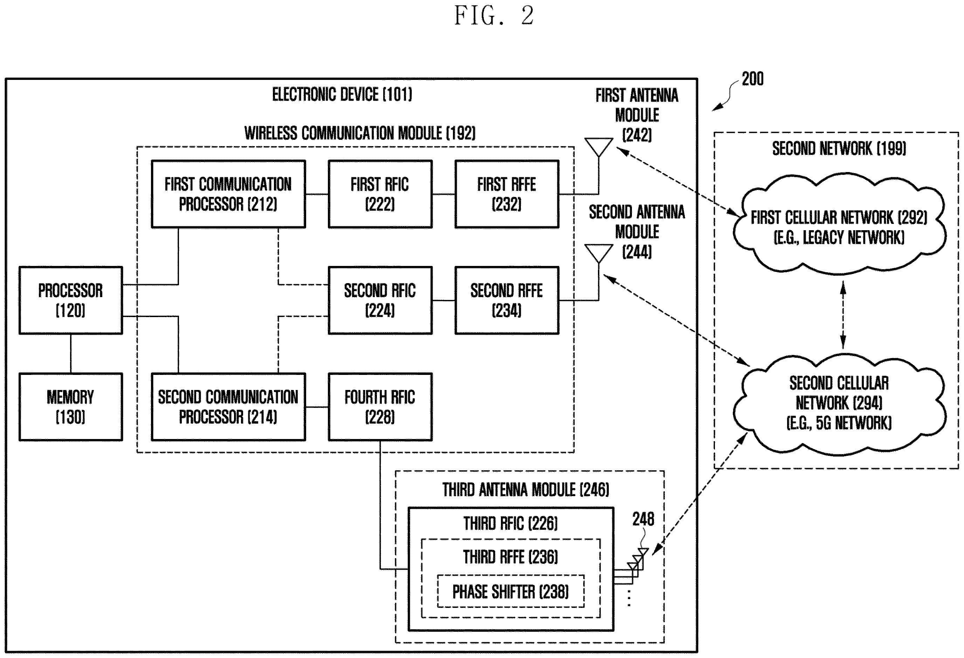

FIG. 2 is a block diagram 200 illustrating an electronic device 101 in a network environment including a plurality of cellular networks to according to an embodiment.

With reference to FIG. 2, the electronic device 101 may include a first communication processor 212, second communication processor 214, first RFIC 222, second RFIC 224, third RFIC 226, fourth RFIC 228, first radio frequency front end (RFFE) 232, second RFFE 234, first antenna module 242, second antenna module 244, and/or antenna 248. The electronic device 101 may include a processor 120 and a memory 130. A second network 199 may include a first cellular network 292 and a second cellular network 294. According to another embodiment, the electronic device 101 may further include at least one of the components described with reference to FIG. 1, and the second network 199 may further include at least one other network. According to an embodiment, the first communication processor 212, second communication processor 214, first RFIC 222, second RFIC 224, fourth RFIC 228, first RFFE 232, and second RFFE 234 may form at least part of the wireless communication module 192. According to another embodiment, the fourth RFIC 228 may be omitted or included as part of the third RFIC 226.

The first communication processor 212 may establish a communication channel of a band to be used for wireless communication with the first cellular network 292 and support legacy network communication through the established communication channel. According to various embodiments, the first cellular network may be a legacy network including a second generation (2G), 3G, 4G, or long term evolution (LTE) network. The second communication processor 214 may establish a communication channel corresponding to a designated band (e.g., about 6 GHz to about 60 GHz) of bands to be used for wireless communication with the second cellular network 294, and support 5G network communication through the established communication channel. According to various embodiments, the second cellular network 294 may be a 5G network defined in 3GPP. Additionally, according to an embodiment, the first communication processor 212 or the second communication processor 214 may establish a communication channel corresponding to another designated band (e.g., about 6 GHz or less) of bands to be used for wireless communication with the second cellular network 294 and support 5G network communication through the established communication channel. According to an embodiment, the first communication processor 212 and the second communication processor 214 may be implemented in a single chip or a single package. According to various embodiments, the first communication processor 212 or the second communication processor 214 may be formed in a single chip or a single package with the processor 120, the auxiliary processor 123, or the communication module 190.

Upon transmission, the first RFIC 222 may convert a baseband signal generated by the first communication processor 212 to a radio frequency (RF) signal of about 700 MHz to about 3 GHz used in the first cellular network 292 (e.g., legacy network). Upon reception, an RF signal may be obtained from the first cellular network 292 (e.g., legacy network) through an antenna (e.g., the first antenna module 242) and be preprocessed through an RFFE (e.g., the first RFFE 232). The first RFIC 222 may convert the preprocessed RF signal to a baseband signal so as to be processed by the first communication processor 212.

Upon transmission, the second RFIC 224 may convert a baseband signal generated by the first communication processor 212 or the second communication processor 214 to an RF signal (hereinafter, 5G Sub6 RF signal) of a Sub6 band (e.g., 6 GHz or less) to be used in the second cellular network 294 (e.g., 5G network). Upon reception, a 5G Sub6 RF signal may be obtained from the second cellular network 294 (e.g., 5G network) through an antenna (e.g., the second antenna module 244) and be pretreated through an RFFE (e.g., the second RFFE 234). The second RFIC 224 may convert the preprocessed 5G Sub6 RF signal to a baseband signal so as to be processed by a corresponding communication processor of the first communication processor 212 or the second communication processor 214.

The third RFIC 226 may convert a baseband signal generated by the second communication processor 214 to an RF signal (hereinafter, 5G Above6 RF signal) of a 5G Above6 band (e.g., about 6 GHz to about 60 GHz) to be used in the second cellular network 294 (e.g., 5G network). Upon reception, a 5G Above6 RF signal may be obtained from the second cellular network 294 (e.g., 5G network) through an antenna (e.g., the antenna 248) and be preprocessed through the third RFFE 236. The third RFIC 226 may convert the preprocessed 5G Above6 RF signal to a baseband signal so as to be processed by the second communication processor 214. According to an embodiment, the third RFFE 236 may be formed as part of the third RFIC 226.

According to an embodiment, the electronic device 101 may include a fourth RFIC 228 separately from the third RFIC 226 or as at least part of the third RFIC 226. In this case, the fourth RFIC 228 may convert a baseband signal generated by the second communication processor 214 to an RF signal (hereinafter, an intermediate frequency (IF) signal) of an intermediate frequency band (e.g., about 9 GHz to about 11 GHz) and transfer the IF signal to the third RFIC 226. The third RFIC 226 may convert the IF signal to a 5G Above 6RF signal. Upon reception, the 5G Above 6RF signal may be received from the second cellular network 294 (e.g., a 5G network) through an antenna (e.g., the antenna 248) and be converted to an IF signal by the third RFIC 226. The fourth RFIC 228 may convert an IF signal to a baseband signal so as to be processed by the second communication processor 214.

According to an embodiment, the first RFIC 222 and the second RFIC 224 may be implemented into at least part of a single package or a single chip. According to an embodiment, the first RFFE 232 and the second RFFE 234 may be implemented into at least part of a single package or a single chip. According to an embodiment, at least one of the first antenna module 242 or the second antenna module 244 may be omitted or may be combined with another antenna module to process RF signals of a corresponding plurality of bands.

According to an embodiment, the third RFIC 226 and the antenna 248 may be disposed at the same substrate to form a third antenna module 246. For example, the wireless communication module 192 or the processor 120 may be disposed at a first substrate (e.g., main PCB). In this case, the third RFIC 226 is disposed in a partial area (e.g., lower surface) of the first substrate and a separate second substrate (e.g., sub PCB), and the antenna 248 is disposed in another partial area (e.g., upper surface) thereof, thus, the third antenna module 246 may be formed. By disposing the third RFIC 226 and the antenna 248 in the same substrate, a length of a transmission line therebetween can be reduced. This may reduce, for example, a loss (e.g., attenuation) of a signal of a high frequency band (e.g., about 6 GHz to about 60 GHz) to be used in 5G network communication by a transmission line. Therefore, the electronic device 101 may improve a quality or speed of communication with the second cellular network 294 (e.g., 5G network).

According to an embodiment, the antenna 248 may be formed in an antenna array including a plurality of antenna elements that may be used for beamforming. In this case, the third RFIC 226 may include a plurality of phase shifters 238 corresponding to a plurality of antenna elements, for example, as part of the third RFFE 236. Upon transmission, each of the plurality of phase shifters 238 may convert a phase of a 5G Above6 RF signal to be transmitted to the outside (e.g., a base station of a 5G network) of the electronic device 101 through a corresponding antenna element. Upon reception, each of the plurality of phase shifters 238 may convert a phase of the 5G Above6 RF signal received from the outside to the same phase or substantially the same phase through a corresponding antenna element. This enables transmission or reception through beamforming between the electronic device 101 and the outside.

The second cellular network 294 (e.g., 5G network) may operate (e.g., stand-alone (SA)) independently of the first cellular network 292 (e.g., legacy network) or may be operated (e.g., non-stand-alone (NSA)) in connection with the first cellular network 292. For example, the 5G network may have only an access network (e.g., 5G radio access network (RAN) or a next generation (NG) RAN and have no core network (e.g., next generation core (NGC)). In this case, after accessing to the access network of the 5G network, the electronic device 101 may access to an external network (e.g., Internet) under the control of a core network (e.g., an evolved packed core (EPC)) of the legacy network. Protocol information (e.g., LTE protocol information) for communication with a legacy network or protocol information (e.g., new radio (NR) protocol information) for communication with a 5G network may be stored in the memory 130 to be accessed by other components (e.g., the processor 120, the first communication processor 212, or the second communication processor 214).

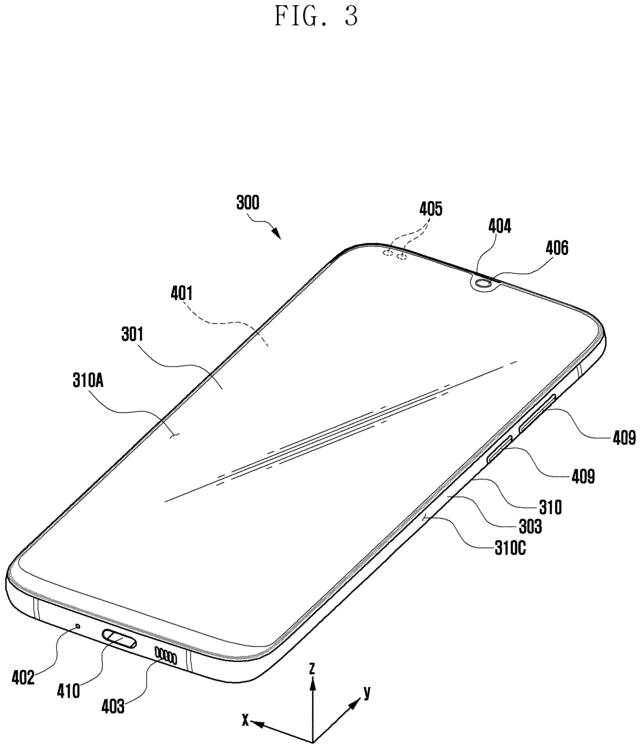

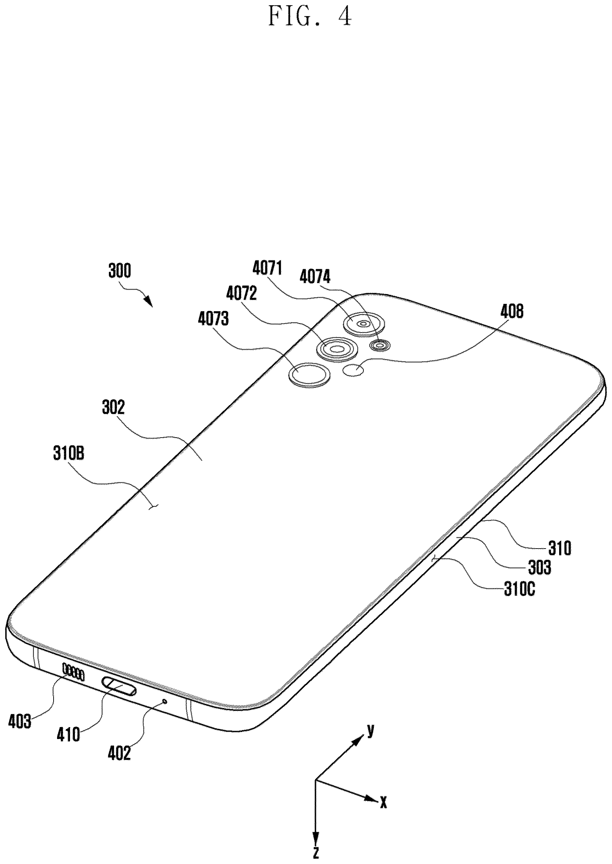

FIG. 3 is a perspective view of an electronic device 300 according to an embodiment. FIG. 4 is a perspective view of the electronic device 300 according to an embodiment.

In various embodiments of the disclosure, for ease of description, the direction in which a display module 401 included in the electronic device 300 is visually exposed (or visible) (e.g., the +z-axis direction) is defined as the front surface, and the opposite direction (e.g., the -z-axis direction) is defined as the rear surface.

Referring to FIGS. 3 and 4, the electronic device 300 (e.g., the electronic device 101 in FIG. 1) may include a housing 310. The housing 310 may provide, for example, a front surface 310A of the electronic device 300, a rear surface 310B of the electronic device 300, and a side surface 310C of the electronic device 300. In various embodiments, the housing 310 may refer to a structure that provides at least some of the front surface 310A, the rear surface 3 10B, and the side surface 310C.

According to an embodiment, the housing 310 may include a front plate (or, a first plate, a front cover, or a first cover) 301, a rear plate (or, a second plate, a rear cover, or a second cover) 302, and a lateral member (or, a lateral bezel structure, a side wall, or a side) 303.

According to an embodiment, the front plate 301 may provide at least a part of the front surface 310A of the electronic device 300. At least a part of the front plate 301 may be substantially transparent. The front plate 301 may include, for example, a polymer plate or a glass plate including various coating layers.

According to an embodiment, the rear plate 302 may provide at least a part of the rear surface 310B of the electronic device 300. The rear plate 302 may be substantially opaque. The rear plate 302 may be formed of, for example, coated or tinted glass, ceramic, polymer, metal (e.g., aluminum, stainless steel (STS), or magnesium), or a combination of at least two of the above materials.

According to an embodiment, the lateral member 303 may provide at least a part of the side surface 310C of the electronic device 300. The lateral member 303 may include a metal material and/or a non-metal material (e.g., polymer).

According to an embodiment, the electronic device 300 may include a display module (or a display) 401, a sound input module (not separately shown), a first sound output module (not separately shown), a second sound output module (not separately shown), a first sensor module 405, a second sensor module (not separately shown), a front camera module 406, multiple rear camera modules 4071, 4072, 4073, and 4074, a light-emitting module 408, one or more key input modules 409, and/or a connection terminal 410. In various embodiments, in the electronic device 300, at least one of the above elements may be omitted, or other elements may be additionally included.

According to an embodiment, a display area (or, a screen display area or an active area) of the display module 401 may be visually seen (or exposed) through the front plate 301.

According to an embodiment, the electronic device 300 may be implemented such that the display area visible through the front plate 301 is as large as possible (e.g., a large screen or a full screen). For example, the display module 401 may be implemented to have an outer contour which has substantially the same shape as the outer contour of the front plate 301. For example, the spacing between the outer contour of the display module 401 and the outer contour of the front plate 301 may be implemented to be substantially the same.

According to various embodiments, the display module 401 may include a touch detection circuit (not separately shown).

According to various embodiments, the display module 401 may include a pressure sensor (not separately shown) capable of measuring the intensity (pressure) of a touch.

According to various embodiments, the display module 401 may be coupled to or positioned adjacent to a digitizer (e.g., an electromagnetic induction panel) (not separately shown) that detects a magnetic field-based electronic pen (e.g., a stylus pen).

According to various embodiments, the display module 401 may be implemented to include a digitizer (not separately shown).

According to an embodiment, the sound input module (not separately shown) may include a microphone (or a mic). The microphone may be positioned in the electronic device 300 so as to correspond to a microphone hole 402 provided in the lateral member 303. The position or number of microphones and microphone holes corresponding to the microphones may vary and is not limited to the illustrated example (not separately shown). In various embodiments, the sound input module may include a microphone hole, formed in the rear surface 310B of the electronic device 300, and a microphone, positioned in the electronic device 300 so as to correspond to the microphone hole (not separately shown).

According to various embodiments, the sound input module may include multiple microphones (not separately shown) used to detect the direction of sound.

According to an embodiment, the first sound output module (not separately shown) may include a first speaker that is used to play back data related to multimedia or recordings. The first speaker may be positioned inside the electronic device 300 so as to correspond to a first speaker hole 403 provided in the lateral member 303. The position or number of first sound output modules including the first speaker may vary (not separately shown).

According to an embodiment, the second sound output module (not separately shown) may include a second speaker used for calls (e.g., a receiver for calls). The second speaker may be positioned in the electronic device 300 so as to correspond to a second speaker hole 404 (e.g., a through-hole or a notch-like opening) provided in the front plate 301 or the lateral member 303 between the front plate 301 and the lateral member 303. The position or number of second sound output modules including the second speaker may vary (not separately shown).

According to various embodiments, the first speaker of the first sound output module may include a piezo speaker, in which case the first speaker hole 403 may be omitted.

According to various embodiments, the second speaker of the second sound output module may include a piezo speaker, in which case the second speaker hole 404 may be omitted.

According to various embodiments, a single hole (not separately shown) may be provided to replace the microphone hole 402 and the first speaker hole 403.

According to various embodiments, a single hole (not separately shown) may be provided to replace the microphone hole 402 and the second speaker hole 404.

According to an embodiment, the first sensor module 405 may be positioned inside the electronic device 300 so as to correspond to the front surface 310A of the electronic device 300. The first sensor module 405 may include, for example, an optical sensor (e.g., a proximity sensor or an illumination sensor). The position of the first sensor module 405 may vary and is not limited to the illustrated example.

According to an embodiment, the first sensor module 405 may overlap the display area of the display module 401 when viewed from above the front surface 310A of the electronic device 300. The first sensor module 405 may be positioned on the backside of the display area or below or beneath the display area. When viewed from outside the electronic device 300, the first sensor module 405, or the position of the first sensor module 405, may not be substantially visually distinguished (or exposed). External light may pass through the front plate 301 and the display area to reach the first sensor module 405.

According to various embodiments, the first sensor module 405 may be positioned in alignment with, or at least partially inserted into, a recess (not separately shown) provided in the backside of the display area. When viewed from outside the electronic device 300, the first sensor module 405, or the position of the first sensor module 405, may not be substantially visually distinguished (or exposed).

According to various embodiments, although separately illustrated, in the display area of the display module 401, a partial area of the display module 401 that at least partially overlaps the first sensor module 405 may include a pixel structure and/or a wiring structure different from that of any other area of the display module 401. For example, a partial area of the display area, which at least partially overlaps the first sensor module 405, may have a pixel density (e.g., the number of pixels per unit area) different from that of any other area. For example, the partial area of the display area, which at least partially overlaps the first sensor module 405, may include substantially no pixels.

According to various embodiments, the first sensor module 405 may be positioned in alignment with, or at least partially inserted into, an opening provided in the display area of the display module 401. External light may pass through the openings in the front plate 301 and the display area to reach the first sensor module 405. The opening in the display area, aligned with or overlapping the first sensor module 405, may be provided in the form of a hole. In various embodiments, when viewed from above the front surface 310A of the electronic device 300, the opening in the display area, which is aligned with or overlaps the first sensor module 405, may be provided as a notch (not separately shown).

According to an embodiment, the second sensor module (not separately shown) may include an optical, capacitive, or ultrasonic biometric sensor (e.g., a fingerprint sensor). The second sensor module may be disposed in the electronic device 300 in a manner that is at least partially identical or similar to that of the first sensor module 405. The electronic device 300 may further include various other third sensor modules (not separately shown).

According to an embodiment, the front camera module 406 and/or the multiple rear camera modules 4071, 4072, 4073, and 4074 may include one or more lenses, image sensor(s), and/or image signal processors (ISPs).

According to an embodiment, the front camera module 406 may be positioned in the electronic device 300 so as to correspond to the front surface 310A of the electronic device 300. External light may pass through the front plate 301 to reach the front camera module 406.

According to an embodiment, the front camera module 406 may be positioned in alignment with an opening provided in the display area of the display module 401, or may be at least partially inserted into the opening. External light may pass through the front plate 301 and the opening in the display area to reach the front camera module 406. The opening in the display area, which is aligned with or overlaps the front camera module 406, may be provided as a notch. In various embodiments, the opening in the display area, which is aligned with or overlaps the front camera module 406, may be provided in the form of a hole (not separately shown).

According to various embodiments, the front camera module 406 may overlap the display area of the display module 401 when viewed from above the front surface 310A of the electronic device 300. The front camera module 406 may be positioned on the backside of the display area, or below or beneath the display area. When viewed from outside the electronic device 300, the front camera module 406, or the position of the front camera module 406, may not be substantially visually distinguished (or exposed). The front camera module 406 may include, for example, a concealed display backside camera (e.g., an under-display camera (UDC)). External light may pass through the front plate 301 and the display area to reach the front camera module 406.

According to various embodiments, the front camera module 406 may be positioned in alignment with a recess (not separately shown) formed in the backside of the display area, or may be at least partially inserted into the recess. When viewed from outside the electronic device 300, the front camera module 406, or the position of the front camera module 406, may not be substantially visually distinguished (or exposed).

According to various embodiments, although not separately shown, a partial area of the display area, which at least partially overlaps the front camera module 406, may include a different pixel structure and/or wiring structure from any other area. The pixel structure and/or the wiring structure, provided in the partial area of the display area which at least partially overlaps the front camera module 406, may be implemented to reduce light loss between the outside of the electronic device 300 and the front camera module 406. The partial area of the display area, which at least partially overlaps the front camera module 406, may have, for example, a different pixel density (e.g., number of pixels per unit area) from any other area. For example, the partial area of the display area, which at least partially overlaps the front camera module 406, may include substantially no pixels.

According to various embodiments, the electronic device 300 may further include a light-emitting module (e.g., a light source) (not separately shown) positioned in the electronic device 300 so as to correspond to the front surface 310A of the electronic device 300. The light-emitting module may, for example, provide state information of the electronic device 300 in the form of light. In various embodiments, the light-emitting module may provide a light source (e.g., a flash) that operates in conjunction with an operation of the front camera module 406. The light-emitting module may include, for example, an LED, an IR LED, or a xenon lamp.

According to an embodiment, the multiple rear camera modules 4071, 4072, 4073, and 4074 may be provided to correspond to the rear surface 310B of the electronic device 300.

According to an embodiment, the rear plate 302 may include multiple openings that correspond one-to-one with the multiple rear camera modules 4071, 4072, 4073, and 4074 when viewed from above the rear plate 302 (e.g., when viewed in the +z-axis direction). The multiple rear camera modules 4071, 4072, 4073, and 4074 may be positioned through the multiple openings in the rear plate 302. In various embodiments, the rear plate 302 may be implemented to include substantially transparent light-transmitting areas in place of the multiple openings corresponding to the multiple rear camera modules 4071, 4072, 4073, and 4074.

According to an embodiment, the multiple rear camera modules 4071, 4072, 4073, and 4074 may have different properties (e.g., the field of view) or functions.

According to various embodiments, the multiple rear camera modules 4071, 4072, 4073, and 4074 may provide different fields of view (or lenses with different fields of view). The electronic device 300 may selectively use the field of view of the rear camera module 4071, 4072, 4073, or 4074 based on a user's selection regarding the field of view.

According to an embodiment, the rear camera module 4071, 4072, 4073, or 4074 may include a wide-angle camera module, a telephoto camera module, a color camera module, a monochrome camera module, or an infrared (IR) camera (e.g., a time-of-flight (TOF) camera, or a structured light camera) module.

According to various embodiments, the rear camera module 4071, 4072, 4073, or 4074 may also operate as at least a part of the sensor module.

According to an embodiment, the light-emitting module(408) may be provided to correspond to the rear surface 310B of the electronic device 300.

According to an embodiment, the rear plate 302 may include an opening corresponding to the light-emitting module 408 when viewed from above the rear plate 302. The light-emitting module 408 may be positioned through the opening of the rear plate 302. In various embodiments, the rear plate 302 may be implemented to include a substantially transparent light-transmitting areas in place of the opening corresponding to the light-emitting module 408. The light-emitting module 408 (e.g., a flash) may include a light source for the multiple rear camera modules 4071, 4072, 4073, and 4074. The light-emitting module 408 may include, for example, an LED or a xenon lamp.

The one or more key input modules 409 may include a key positioned in an opening formed in the side surface 310C of the electronic device 300, and a key signal generator (not separately shown) for generating a key signal in response to pressing or touching of the key. The position or number of the one or more key input modules 409 may vary without being limited to the illustrated example (not separately shown).

According to various embodiments, the electronic device 300 may not include some or all of the one or more key input modules 409, and the key input modules that are not included may be implemented as soft keys using the display module 401.

According to various embodiments, the one or more key input modules 409 may include at least one sensor module.

According to an embodiment, the connection terminal 410 may be positioned in the electronic device 300 so as to correspond to a connector hole provided on the side surface 310C of the electronic device 300. An external electronic device may be electrically connected to the electronic device 300 via the connection terminal 410. The electronic device 300 may receive or transmit power and/or data from or to the external electronic device via the connection terminal 410. The connection terminal 410 may include, for example, a universal serial bus (USB) connector or a high-definition multimedia interface (HDMI) connector. The position or number of connection terminals 410 may vary, without being limited to the illustrated example (not separately shown).

According to various embodiments, the electronic device 300 may include other connection terminals (not separately shown) including an audio connector (e.g., a headphone connector or an earset connector).

According to various embodiments, the electronic device 300 may include other connection terminals (not separately shown) for connecting an external storage medium such as a SIM card (or a universal SIM (USIM) card) or a memory card (e.g., a secure digital memory (SD) card).

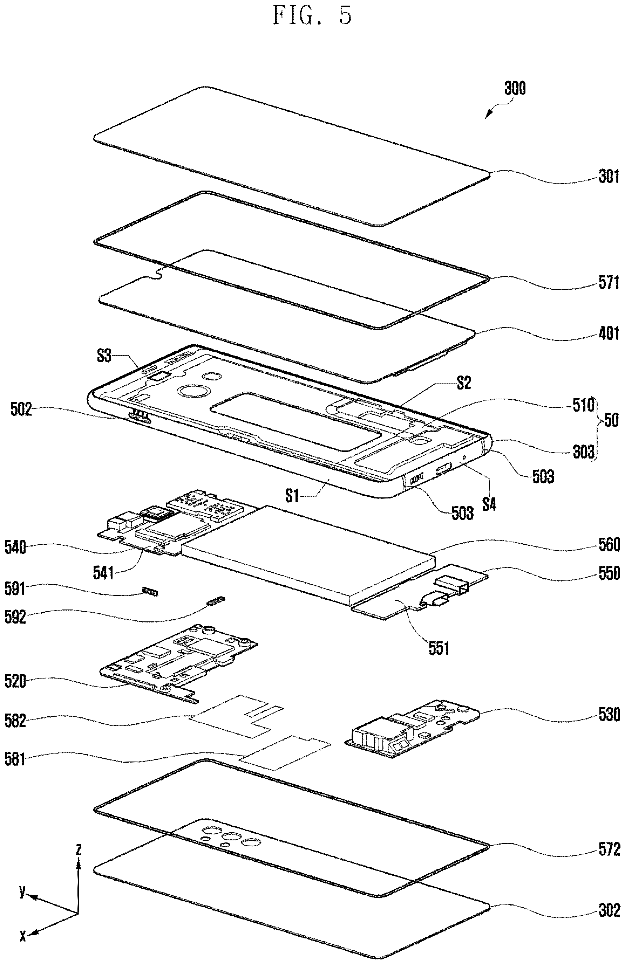

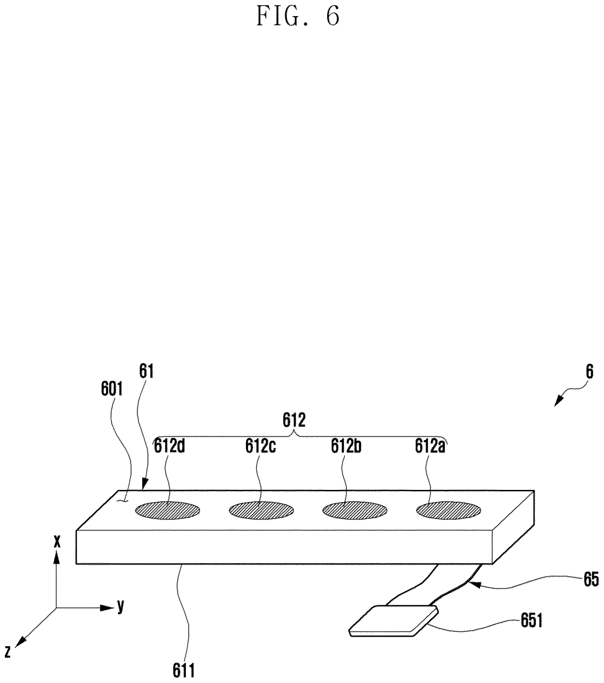

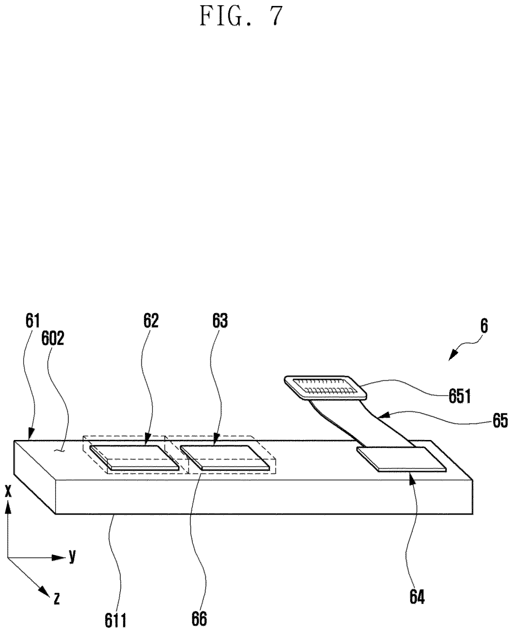

FIG. 5 is an exploded perspective view of the electronic device 300 according to an embodiment. FIGS. 6 and 7 are perspective views of an antenna module 6 according to an embodiment.

Referring to FIG. 5, in an embodiment, the electronic device 300 may include a front plate 301, a rear plate 302, a lateral member 303, a first support member 510, a second support member 520, a third support member 530, a display module (or a display) 401, a first substrate assembly 540, a second substrate assembly 550, a battery 560, a first adhesive member 571, a second adhesive member 572, a first antenna structure 581, a second antenna structure 582, a first antenna module 591, and/or a second antenna module 592. In various embodiments, the electronic device 300 may omit at least one (e.g., the second support member 520 or the third support member 530) of the above elements or may additionally include other elements.

According to an embodiment, the lateral member 303 may include a first side part (or a first bezel part) S1, a second side part (or a second bezel part) S2, a third side part (or a third bezel part) S3, and/or a fourth side part (or a third bezel part) S4. When viewed from above the front plate 301 (e.g., when viewed in the -z-axis direction), the first side part S 1 and the second side part S2 may be spaced apart from each other in a first direction (e.g., the x-axis direction) and may be substantially parallel to each other. The first side part S1 may provide a first side surface of the side surface 310C corresponding to the +x-axis direction of the electronic device 300, and the second side part S2 may provide a second side surface of the side surface 310C corresponding to the -x-axis direction of the electronic device 300. The third side part S3 may connect one end of the first side part S1 to one end of the second side part S2. The fourth side part S4 may connect the other end of the first side part S 1 to the other end of the second side part S2. When viewed from above the front plate 301, the third side part S3 and the fourth side part S4 may be spaced apart from each other in a second direction (e.g., in the y-axis direction) perpendicular to the first direction, and may be substantially parallel to each other. The third side part S3 may provide a third side surface of the side surface 310C corresponding to the +y-axis direction of the electronic device 300, and the fourth side part S4 may provide a fourth side surface of the side surface 310C corresponding to the -y-axis direction of the electronic device 300. A corner where the first side part S1 is connected to the third side part S3, a corner where the first side part S1 is connected to the fourth side part S4, a corner where the second side part S2 is connected to the third side part S3, and/or a corner where the second side part S2 is connected to the fourth side part S4 may be implemented with a smooth curved shape.

According to an embodiment, the lateral member 303 may include multiple insulating parts 503, and multiple conductive parts insulated from each other by the multiple insulating parts 503. The side surface 310C (see FIG. 3) of the electronic device 300 may be provided by the multiple conductive parts and the multiple insulating parts 503. A part of the side surface 310C of the electronic device 300, provided by the multiple conductive parts included in the lateral member 303, and a part of the side surface 310C of the electronic device 300, provided by the multiple insulating parts 503 included in the lateral member 303, may be seamlessly connected without a substantial height difference. The multiple conductive parts included in the lateral member 303 may include, for example, titanium, an amorphous alloy, a metal-ceramic composite material (e.g., cermet), or stainless steel. In various embodiments, the multiple conductive parts included in the lateral member 303 may include magnesium, magnesium alloys, aluminum, aluminum alloys, zinc alloys, or copper alloys. The multiple conductive parts included in the lateral member 303 may include a variety of other metal materials. Hereinafter, the multiple conductive parts included in the lateral member 303 may be referred to by various terms such as "lateral conductive structure", "lateral metal structure", "outer conductive structure", "outer metal structure", "first conductive structure", or "first metal structure" of the electronic device 300.

According to an embodiment, the first support member 510 may be positioned in the electronic device 300 and connected to the lateral member 303, or may be integrally formed with the lateral member 303. The first support member 510 may be formed of, for example, a metal material and/or a non-metal material (e.g., a polymer). In an embodiment, the first support member 510 may include at least one conductive part, and at least one non-conductive part connected to the at least one conductive part. The at least one conductive part included in the first support member 510 may be connected to or integrally formed with at least a part of a lateral conductive structure (e.g., a metal structure that includes the multiple conductive parts of the lateral member 303) of the electronic device 300. The at least one non-conductive part included in the first support member 510 may be connected to or integrally formed with the multiple insulating parts 503 included in the lateral member 303. Hereinafter, the at least one conductive part included in the first support member 510 may be referred to by various terms, such as "internal conductive structure", "inner conductive structure", "inner metal structure", "second conductive structure", or "second metal structure" of the electronic device 300. Hereinafter, the at least one non-conductive part included in the first support member 510 may be referred to by various terms, such as "internal non-conductive structure", "inner non-conductive structure", or "inner polymer structure" of the electronic device 300. The internal conductive structure of the electronic device 300 may include, for example, a different metal material (e.g., magnesium, magnesium alloy, aluminum, aluminum alloy, zinc alloy, or copper alloy) from the lateral conductive structure of the electronic device 300. In another example, the internal conductive structure of the electronic device 300 may include at least partially the same metal material as the lateral conductive structure of the electronic device 300. The internal non-conductive structure of the electronic device 300 may include, for example, a variety of polymers such as engineering plastics (e.g., polycarbonate (PC) or polymethyl methacrylate (PMMA)). The internal non-conductive structure of the electronic device 300 may include, for example, a polymeric resin such as a polyether ether ketone, polyphenylene sulfide, polybutylene terephthalate, polyimide, or polycarbonate. In various embodiments, the internal non-conductive structure of the electronic device 300 may include a material (e.g., fiber reinforced plastic (FRP)) that is a blend of engineering plastics with various reinforcement materials such as glass fiber or carbon fiber. The multiple insulating parts 503 included in the lateral member 303 may include the same non-metal material as the internal non-conductive structure of the electronic device 300).

According to various embodiments, the multiple insulating parts 503 included in the lateral member 303 may include a non-metal material that is different from that of the internal non-conductive structure of the electronic device 300.

According to an embodiment, the first support member 510 and the lateral member 303 together may be referred to as a "front case" 50. Electronic components such as the display module (or display) 401, the first substrate assembly 540, the second substrate assembly 550, or the battery 560, or various members related to the electronic components may be disposed in the front case 50 or the first support member 510, or may be supported by the front case 50 or the first support member 510. The front case 50 or the first support member 510 may be included in the electronic device 300 to withstand loads, thereby contributing to the durability or rigidity (e.g., torsional rigidity) of the electronic device 300.

According to various embodiments, the front case 50 or the first support member 510 may be referred to by various other terms such as "first frame", "first frame structure", or "first framework".

According to various embodiments, the first support member 510 is an internal structure positioned in the inner space of the electronic device 300 and may be referred to by various other terms such as "bracket", "first support", or "first support structure".

According to various embodiments, the first support member 410 may be interpreted as a part of the housing 310 (see FIG. 3).

According to an embodiment, the at least one conductive part (e.g., internal conductive structure) included in the first support member 510 may function as an electromagnetic shield for the display module (or the display) 401, the first substrate assembly 540, and/or the second substrate assembly 550.

According to an embodiment, the display module 401 may be positioned between the first support member 510 and the front plate 301. The display module 401 may be disposed on a surface of the first support member 510 that faces the front plate 301. The display module 401 may be coupled to the front plate 301 using an optical transparent adhesive member such as an optical clear resin (OCA), an optical clear resin (OCR), or a super view resin (SVR).

According to an embodiment, the first substrate assembly 540 and/or the second substrate assembly 550 may be positioned between the first support member 510 and the rear plate 302. The first substrate assembly 540 and/or the second substrate assembly 550 may be disposed on a surface of the first support member 510 that faces the rear plate 302.

According to an embodiment, the battery 560 may be positioned between the first support member 510 and the rear plate 302. The battery 560 may be disposed on the first support member 510.

According to an embodiment, the first substrate assembly 540 may include a first printed circuit board 541 (e.g., a printed circuit board (PCB), or a printed circuit board assembly (PBA)). The first substrate assembly 540 may include various electronic components electrically connected to the first printed circuit board 541. The electronic components may be disposed on the first printed circuit board 541, or may be electrically connected to the first printed circuit board 541 via electrical paths such as cables or flexible printed circuit boards (FPCBs). Referring to FIGS. 3 and 4, the electronic components may include, for example, the second speaker included in the third audio module 404, the sensor module 405, the front camera module 406, the multiple rear camera modules 4071, 4072, 4073, and 4074, the light-emitting module 408, or the input modules 409.

According to an embodiment, when viewed from above the front plate 301 (e.g., when viewed in the -z-axis direction), the second substrate assembly 550 may be disposed to be spaced apart from the first substrate assembly 540 with the battery 560 therebetween. The second substrate assembly 550 may include a second printed circuit board 551 electrically connected to the first printed circuit board 541 of the first substrate assembly 540. The second substrate assembly 550 may include various electronic components electrically connected to the second printed circuit board 551. The electronic components may be disposed on the second printed circuit board 551, or may be electrically connected to the second printed circuit board 551 via electrical paths such as cables or FPCBs. Referring to FIGS. 3 and 4, the electronic components may include, for example, the microphone included in the first audio module 402, the first speaker included in the second audio module 403, or a connector included in the connection terminal module 410.

According to various embodiments, the first substrate assembly 540 or the second substrate assembly 550 may include a primary PCB (or, a main PCB or a master PCB) (not shown), a secondary PCB (or, a slave PCB) disposed to partially overlap the primary PCB (not shown), and/or an interposer substrate between the primary PCB and the secondary PCB (not shown).

The battery 560 is a device for providing power to at least one element of the electronic device 300, and may include, for example, a non-rechargeable primary battery, a rechargeable secondary battery, or a fuel cell. The battery 560 may be integrally disposed in the electronic device 300. In various embodiments, the battery 560 may be removably attached to the electronic device 300.

According to an embodiment, the second support member 520 may be positioned between the first support member 510 and the rear plate 302, and may be coupled to the first support member 510 and/or the first substrate assembly 540 using fastening elements such as screws (or bolts). At least a part of the first substrate assembly 540 may be positioned between the first support member 510 and the second support member 520, and the second support member 520 may cover and protect the first substrate assembly 540. When viewed from above the rear plate 302 (e.g., when viewed in the +z-axis direction), the third support member 530 may be positioned to be at least partially spaced apart from the second support member 520 with the battery 560 therebetween. The third support member 530 may be positioned between the first support member 510 and the rear plate 302, and may be coupled to the first support member 510 and/or the second substrate assembly 550 using fastening elements such as screws. At least a part of the second substrate assembly 550 may be positioned between the first support member 510 and the third support member 530, and the third support member 530 may cover and protect the second substrate assembly 550. The second support member 520 and/or the third support member 530 may be formed of a metal material and/or a non-metal material (e.g., a polymer).

According to various embodiments, the second support member 520 may function as an electromagnetic shield for the first substrate assembly 540, and the third support member 530 may function as an electromagnetic shield for the second substrate assembly 550.

According to various embodiments, the second support member 520 and/or the third support member 530 may be referred to as a "rear case". In various embodiments, the second support member 520 may be referred to by various other terms such as "second support" or "second support structure", and the third support member 530 may be referred to by various other terms such as "third support" or "third support structure". In various embodiments, the second support member 520 and/or the third support member 530 may be interpreted as part of the housing 310 (see FIG. 3).

According to various embodiments, an integrated substrate assembly (not separately shown) including the first substrate assembly 540 and the second substrate assembly 550 may be implemented. For example, when viewed from above the rear plate 302 (e.g., when viewed in the +z-axis direction), the integrated substrate assembly may include a first part and a second part spaced apart from each other with the battery 560 therebetween, and a third part extending between the battery 560 and the lateral member 303 and connecting the first part to the second part. The third part may be implemented to be substantially rigid. In various embodiments, the third part may be implemented to be substantially flexible. In various embodiments, an integrated support member including the second support member 520 and the third support member 530 may be implemented.

According to an embodiment, the second support member 520 (e.g., the rear case) may include a non-conductive member (not shown) formed of a non-metal material (e.g., polymer), and/or multiple conductive patterns (not shown) disposed on the non-conductive member. For example, the conductive patterns may be implemented by laser direct structuring (LDS). LDS may be, for example, a method of drawing (or designing) a pattern on a non-conductive member using a laser, and then plating a conductive material such as copper or nickel on the pattern, thereby forming a conductive pattern. The multiple conductive patterns may be electrically connected to a wireless communication circuit (e.g., the wireless communication module 192 in FIG. 1) included in the first substrate assembly 540 to operate as antenna radiators.

According to an embodiment, at least some conductive parts included in the lateral member 303 may operate as antenna radiators electrically connected to the wireless communication circuit.

According to an embodiment, the wireless communication circuit may process a transmission signal or reception signal in at least one selected or designated frequency band via the at least one antenna radiator. The selected or designated frequency band may include at least one of, for example, a low band (LB) (from about 600 MHz to about 1 GHz), a middle band (MB) (from about 1 GHz to about 2.3 GHz), a high band (HB) (from about 2.3 GHz to about 2.7 GHz), or an ultra-high band (UHB) (from about 2.7 GHz to about 6 GHz). The designated frequency band may include various other frequency bands.

According to an embodiment, the first adhesive member 571 may be positioned between the front plate 301 and the first support member 510, or between the front plate 301 and the lateral member 303. The front plate 301 may be coupled to the first support member 510 or the lateral member 303 using the first adhesive member 571. The first adhesive member 571 may be disposed annularly, for example, adjacent to corners (or edges) of the front plate 301. The first adhesive member 571 may be formed in various other shapes, not limited to the illustrated example.

According to various embodiments, the first adhesive member 571 may include multiple adhesive members (not separately shown) separated from each other. In this case, there may be a separate adhesive member or filling member which connects two separate adhesive members that are separated from each other.

According to an embodiment, the second adhesive member 572 may be disposed between the rear plate 302 and the first support member 510, or between the rear plate 302 and the lateral member 303. The rear plate 302 may be coupled to the first support member 510 or the lateral member 303 using the second adhesive member 572. The second adhesive member 572 may be disposed annularly, for example, adjacent to corners (or edges) of the rear plate 302. The second adhesive member 572 may be formed in various other shapes, not limited to the illustrated example.

According to various embodiments, the second adhesive member 572 may include multiple adhesive members (not separately shown) separated from each other. In this case, there may be a separate adhesive member or filling member which connects two adhesive members that are separated from each other.

According to an embodiment, the first adhesive member 571 or the second adhesive member 572 may include a thermoresponsive adhesive material, a photoresponsive adhesive material, a conventional adhesive, or a double-sided tape.

According to an embodiment, the first antenna structure 581 may be at least partially positioned between the battery 560 and the rear plate 302. The first antenna structure 581 may have various other positions while facing the rear plate 302. The position of the first antenna structure 581 may vary, such as facing the rear plate 302. The first antenna structure 581 may be implemented, for example, in the form of a film, such as an FPCB. The first antenna structure 581 may include at least one conductive pattern used as a loop-shaped radiator. The at least one conductive pattern included in the first antenna structure 581 may include a planar helical conductive pattern (e.g., a planar coil or pattern coil).

According to an embodiment, the at least one conductive pattern included in the first antenna structure 581 may be electrically connected to the wireless communication circuit (e.g., the wireless communication module 192 in FIG. 1) included in the first substrate assembly 540. For example, the at least one conductive pattern included in the first antenna structure 581 may be utilized for short-range wireless communication such as near-field communication (NFC). For example, the at least one conductive pattern included in the first antenna structure 581 may be used for magnetic secure transmission (MST) in which magnetic signals are transmitted and/or received.

According to various embodiments, the at least one conductive pattern included in the first antenna structure 581 may be electrically connected to a power transmission/reception circuit included in the first substrate assembly 540. The power transmission/reception circuit may wirelessly receive power from an external electronic device or wirelessly transmit power to the external electronic device using the at least one conductive pattern included in the first antenna structure 581. The power transmission/reception circuit may include a power management module, and may include, for example, a power management integrated circuit (PMIC) or a charger integrated circuit (IC). The power transmission/reception circuit may charge the battery 560 using power wirelessly received using the at least one conductive pattern included in the first antenna structure 581.

According to an embodiment, the second antenna structure 582 may be at least partially positioned between the second support member 520 and the rear plate 302. The position of the second antenna structure 582 may vary without being limited thereto.

According to an embodiment, when viewed from above the rear plate 302 (e.g., when viewed in the +z-axis direction), the second antenna structure 582 may be disposed to reduce overlapping the first antenna structure 581, or may be disposed so as not to substantially overlap the first antenna structure 581.

According to an embodiment, at least one antenna element (e.g., the conductive pattern) included in the second antenna structure 582 may be electrically connected to the wireless communication circuit (e.g., the wireless communication module 192 in FIG. 1) included in the first substrate assembly 540.

According to an embodiment, a processor (e.g., the processor 120 in FIG. 1) electrically connected to the wireless communication circuit may use the second antenna structure 582 to perform a positioning function (e.g., angle of arrival (AOA)) for a signal source (e.g., a responder, a transmitter, or a transmitter (Tx) device). The processor may perform both positioning for measuring an angle (AOA) and positioning for measuring a distance (ranging), simultaneously. In an embodiment, the processor may identify (or estimate) a distance between the electronic device 300 and the signal source using at least one antenna element (e.g., a first antenna element, a second antenna element, and/or a third antenna element) included in the second antenna structure 582.

According to an embodiment, the processor may identify or estimate the reception angle of a signal relative to a set axis of the electronic device 300 (e.g., the direction of the signal) using at least one of the arrival time difference between response messages to a request message, the arrival distance difference between received signals, or the phase difference therebetween via the at least two antenna elements included in the second antenna structure 582.

According to an embodiment, the electronic device 300 may support a positioning function using a wide bandwidth (e.g., ultra-wide band (UWB)). UWB, for example, is a technology that follows the international standard of IEEE 802.15.4, and may refer to a technology for communicating using a wide bandwidth.

According to an embodiment, the processor may identify or estimate the position of the signal source (e.g., the responder, the transmitter, or the Tx device) relative to the electronic device 300 (e.g., an initiator, a receiver, or an Rx device) using the phase difference of signals received through the multiple antenna elements included in the second antenna structure 582.

According to an embodiment, the second antenna structure 582 may be implemented as a printed circuit board (e.g., a flexible printed circuit board (FPCB)). The second antenna structure 582 may be, for example, a patch antenna including multiple patches (e.g., the first antenna element, the second antenna element, and the third antenna element).

According to an embodiment, the first antenna module 591 or the second antenna module 592 may be the antenna module 6 in FIGS. 6 and 7. Referring to FIGS. 6 and 7, the antenna module 6 may include an antenna structure 61, a communication circuit 62, a power management circuit 63, a connector 64, and/or an electrical path 65. The antenna module 6 may be, for example, the third antenna module 246 in FIG. 2.

According to an embodiment, the antenna structure 61 may include a printed circuit board 611 that includes an antenna array 612. The printed circuit board 611 may include a first surface 601 and a second surface 602 that faces in an opposite direction to the first surface 601. The first surface 601 and the second surface 602 may be substantially parallel, for example. The antenna array 612 may include multiple antenna elements 612a, 612b, 612c, and 612d positioned on the first surface 601, or inside the printed circuit board 611 and closer to the first surface 601 than to the second surface 602. The multiple antenna elements 612a, 612b, 612c, and 612d may be, for example, the antenna 248 in FIG. 2. In an embodiment, the multiple antenna elements 612a, 612b, 612c, and 612d may have substantially the same shape and may be arranged at regular intervals. In an embodiment, the multiple antenna elements 612a, 612b, 612c, and 612d may transmit and/or receive signals in substantially the same frequency band.

According to an embodiment, the printed circuit board 611 may include multiple conductive layers (e.g., multiple conductive pattern layers) (not separately shown) and multiple non-conductive layers (e.g., insulating layers) (not separately shown) alternately stacked with the multiple conductive layers. The multiple antenna elements 612a, 612b, 612c, and 612d may be implemented with at least some of the multiple conductive layers, for example. In various embodiments, the number or position of antenna elements included in the antenna array 612 may vary, without being limited to the embodiment illustrated in FIG. 6.

According to an embodiment, the multiple antenna elements 612a, 612b, 612c, and 612d may operate as patch antennas.

According to various embodiments, the shape of the multiple antenna elements 612a, 612b, 612c, and 612d may vary and is not limited to the circular shape according to the embodiment of FIG. 6. For example, the multiple antenna elements 612a, 612b, 612c, and 612d may be formed in a polygonal shape such as rectangle, or an elliptical shape.

According to an embodiment, the antenna elements 612a, 612b, 612c, and 612d may be formed as a single layer structure included in the printed circuit board 611.

According to various embodiments, the antenna elements 612a, 612b, 612c, and 612d may be implemented as a stacked structure including multiple conductive parts (e.g., conductive patches) which are positioned on different layers of the printed circuit board 611 and overlap each other.

According to various embodiments, the number or position of antenna arrays may vary without being limited to the embodiment illustrated in FIG. 6.

According to various embodiments, although not illustrated, the antenna structure 61 may further include an antenna array including multiple antenna elements operating as dipole antennas.

According to various embodiments, the multiple antenna elements 612a, 612b, 612c, and 612d may also operate as antennas other than patch antennas or dipole antennas.

According to an embodiment, the communication circuit (or wireless communication circuit) 62 may be disposed on the second surface 602 of the printed circuit board 611 using a conductive adhesive material such as solder. For example, the communication circuit 62 may be electrically connected to the multiple antenna elements 612a, 612b, 612c, and 612d via wirings (e.g., electrical paths formed of conductive patterns or conductive vias) included in the printed circuit board 611. In another example, the communication circuit 62 may be disposed on a printed circuit board (e.g., the first printed circuit board 541 in FIG. 5 on which elements such as the processor 120, the memory 130, or the communication module 190 in FIG. 1 are disposed) different from the printed circuit board 611.

According to an embodiment, the communication circuit 62 may include a radio frequency integrate circuit (RFIC). For example, the communication circuit 62 may be the third RFIC 226 in FIG. 2.

According to an embodiment, the communication circuit 62 may transmit and/or receive signals in at least some of frequency bands ranging from about 3 GHz to about 100 GHz via the antenna array 612. The communication circuit 62 may up-convert or down-convert frequencies of the transmitted or received signals. For example, the communication circuit 62 may receive an intermediate frequency (IF) signal from a wireless communication circuit (e.g., the wireless communication module 192 in FIG. 1) disposed on another printed circuit board and up-convert the received IF signal to a radio frequency (RF) signal (e.g., a millimeter wave). In another example, the communication circuit 62 may down-convert an RF signal received via the antenna array 612 to an IF signal, and the IF signal may be provided to a wireless communication circuit (e.g., the wireless communication module 192 in FIG. 1) disposed on another printed circuit board.

According to an embodiment, the communication circuit 62 may be configured to transmit or receive signals via the multiple antenna elements 612a, 612b, 612c, and 612d using dual feeding including vertical polarization feeding and horizontal polarization feeding.

According to an embodiment, the multiple antenna elements 612a, 612b, 612c, and 612d may be directly or indirectly fed with power from the communication circuit 62 to operate as antenna radiators.

According to various embodiments, the antenna structure 61 may further include multiple dummy elements (e.g., dummy antennas, dummy patches, or conductive patches) (not shown). The multiple dummy elements may be positioned to overlap one-to-one with the multiple antenna elements 612a, 612b, 612c, and 612d, for example, when viewed from above the first surface 601, and may be in an electrically floating state. The printed circuit board 611 may include multiple stacked conductive layers, and one conductive layer including multiple dummy antenna elements may be positioned closer to the first surface 601 than other conductive layers including the multiple antenna elements 612a, 612b, 612c, and 612d. In another example, when viewed from above the first surface 601, the antenna structure 61 may include multiple feeding antenna elements (not shown) that at least partially overlap the multiple antenna elements 612a, 612b, 612c, and 612d and are physically separated from the multiple antenna elements 612a, 612b, 612c, and 612d. The printed circuit board 611 may include multiple stacked conductive layers, and one conductive layer including the multiple antenna elements 612a, 612b, 612c, and 612d may be positioned closer to the first surface 601 than one conductive layer including the multiple feeding antenna elements. The multiple feeding antenna elements may be electrically connected to the communication circuit 62, and the multiple antenna elements 612a, 612b, 612c, and 612d may be indirectly fed with power from the multiple feed antenna elements to operate as antenna radiators.

According to an embodiment, the antenna structure 61 may include a ground plane (or, a ground layer) (not separately shown) that is implemented with at least some of the multiple conductive layers included on the printed circuit board 611. The ground plane may be disposed between the antenna array 612 and the second surface 602, and may at least partially overlap the antenna array 612 when viewed from above the first surface 601. In various embodiments (not shown), the antenna module 6 may further include an antenna array that operates as a dipole antenna. In this case, when viewed from above the first surface 601 (e.g., when viewed in the -x-axis direction), the ground plane included in the printed circuit board 611 may not overlap the antenna array operating as a dipole antenna.

According to an embodiment, the power management circuit 63 may be disposed on the second surface 602 of the printed circuit board 611 using a conductive adhesive material such as solder. In another example, the power management circuit 63 may be disposed on a printed circuit board (e.g., the first printed circuit board 541 in FIG. 5 on which elements such as the processor 120, the memory 130, or the communication module 190 in FIG. 1 are disposed) different from the printed circuit board 611. The power management circuit 63 may be electrically connected to the communication circuit 62, or various other elements (e.g., the connector 64 or passive elements) disposed on the printed circuit board 611, via wirings (e.g., electrical paths formed of conductive patterns or conductive vias) included on the printed circuit board 611. In an embodiment, the power management circuit 63 may be a power management integrated circuit (PMIC).

According to an embodiment, the connector 64 may be disposed on the second surface 602 of the printed circuit board 611 using a conductive adhesive material such as solder. One end of the electrical path 65 such as a flexible printed circuit board may be connected to the connector 64 (e.g., an FPCB connector). In various embodiments, one end of the electrical path 65 may be electrically connected to conductive terminals (e.g., lands or copper foil pads) positioned on the second surface 602 of the printed circuit board 611 using a conductive adhesive material such as solder, in which case the connector 64 may be omitted. The other end of the electrical path 65 may include a connector 651 for electrical connection with another printed circuit board (e.g., the first printed circuit board 541 in FIG. 5 on which elements such as the processor 120, the memory 130, or the communication module 190 in FIG. 1 are disposed).

According to various embodiments, the antenna module 6 may be defined or interpreted with at least one element (e.g., the electrical path 65) omitted, or one or more other elements may be added to the antenna module 6.

According to various embodiments, the antenna module 6 may further include a shielding member (or an electromagnetic shielding member) 66 positioned on the second surface 602 to wrap around at least one of the communication circuit 62 and/or the second power management circuit 63. The shielding member 66 may electromagnetically shield the communication circuit 62 and/or the power management circuit 63. The shielding member 66 may include a conductive member such as a shield can, for example. In another example, the shielding member 66 may include a protective member such as a urethane resin, and a conductive paint, such as an electromagnetic interference (EMI) paint applied to the outer surface of the protective member. In various embodiments, the shielding member 66 may be implemented as various shielding sheets disposed to cover the second surface 602.

According to various embodiments (not separately shown), the antenna module 6 may further include frequency adjustment circuit disposed on the printed circuit board 611. For example, the frequency adjustment circuit, such as a tuner or a passive element, may perform impedance matching, or shift a resonant frequency to a designated frequency, or shifting the resonant frequency by a designated amount.

According to an embodiment, the antenna structure 61 of the first antenna module 591 may be positioned inside the electronic device 300 so as to correspond to the first side part S 1. The antenna structure 61 of the first antenna module 591 may be positioned closer to the first side part S 1 than to the second side part S2. The first surface 601 of the antenna structure 61 included in the first antenna module 591 may substantially face the first side part S1. When viewed from above the first surface 601 of the antenna structure 61 included in the first antenna module 591 (e.g., when viewed in the -x-axis direction), the antenna array 612 of the antenna structure 61 may at least partially overlap the first side part S 1. When the communication circuit 62 provides (or feeds) an electromagnetic signal (or, an RF signal or a radiation current) to the antenna structure 61, the electromagnetic signal provided (or fed) from the communication circuit 62 may be transmitted to the outside of the electronic device 300 by substantially passing through the first side part S1 via the antenna array 612. The antenna array 612 of the first antenna module 591 may receive an electromagnetic signal passing through the first side part S 1 from the outside of the electronic device 300. The first antenna module 591 may form a beam pattern for (or corresponding to) coverage (or beam coverage). The beam pattern for coverage may include an effective area in which the antenna array 612 can emit (or radiate or transmit) or detect (or receive) electromagnetic waves (or radio waves). The beam pattern for coverage may include an effective area in which electromagnetic wave energy (or wave energy) is concentrated in at least one designated direction or in which electromagnetic signals can be transmitted and received. The first antenna module 591 may form a beam pattern for coverage that corresponds to a direction toward the first side part S1 (e.g., the +x-axis direction), for example.

According to an embodiment, the electronic device 300 may include a first radio frequency window area (a first RF window area) corresponding to the first antenna module 591. The first RF window area may be an area of the electronic device 300 through which electromagnetic signals pass when the electromagnetic signals are transmitted to the outside of the electronic device 300 or received from the outside of the electronic device 300 via the antenna structure 61 of the first antenna module 591. For example, the first side part S1 of the lateral member 303 may include a non-conductive part 502 positioned to correspond to the antenna structure 61 of the first antenna module 591. The non-conductive part 502 of the first side part S1 may be positioned to correspond to the beam pattern or coverage formed by the antenna structure 61 of the first antenna module 591 and may be included in the first RF window area. When the communication circuit 62 provides an electromagnetic signal to the antenna structure 61 of the first antenna module 591, the electromagnetic signal provided from the communication circuit 62 may be transmitted to the outside of the electronic device 300 by passing through the non-conductive part 502 via the antenna array 612. The antenna array 612 of the first antenna module 591 may receive an electromagnetic signal that passes through the non-conductive part 502 from the outside of the electronic device 300. When viewed from above the first surface 601 of the antenna structure 61 included in the first antenna module 591 (e.g., when viewed in the -x-axis direction), the non-conductive part 502 may be aligned with and overlap the antenna array 612 of the antenna structure 61. The lateral conductive structure (e.g., a metal structure including the multiple conductive parts of the lateral member 303) of the electronic device 300 may include an opening (not shown), and the non-conductive part 502 may be positioned in the opening of the lateral conductive structure. The non-conductive part 502 of the lateral member 303 may be formed, for example, by filling an opening formed in the lateral conductive structure of the electronic device 300 with a non-conductive material (e.g., a polymer). The non-conductive part 502 of the lateral member 303 may form a part of the side surface 310C of the electronic device 300. A part of the side surface 310C of the electronic device 300, formed by the lateral conductive structure, and a part of the side surface 310C of the electronic device 300, formed by the non-conductive part 502, may be seamlessly connected to each other without a substantial height difference. The non-conductive part 502 may reduce the influence of the lateral conductive structure of the electronic device 300 formed by the lateral member 303 on the antenna radiation performance, radio wave transmission/reception performance, or coverage (or beam coverage) of the first antenna module 591, compared to a comparative example in which the lateral conductive structure is extended without the non-conductive part 502.

According to an embodiment, the non-conductive part 502 may include various polymers.

According to an embodiment, the non-conductive part 502 may have a permittivity in which that the non-conductive part 502 has a reduced electromagnetic influence or has no substantial influence on the first antenna module 591. The non-conductive part 502 may have a permittivity that can reduce the influence on the antenna radiation performance, radio wave transmission/reception performance, or coverage of the first antenna module 591. The non-conductive part 502 may have a permittivity that contributes to not degrading the antenna radiation performance or radio wave transmission/reception performance of the first antenna module 591 to a threshold level or lower. The non-conductive part 502 may have a permittivity that does not substantially influence the coverage formed by the first antenna module 591. The non-conductive part 502 may have a permittivity that has an influence to the extent that the coverage formed by the first antenna module 591 does not deviate from the range to be achieved. The non-conductive part 502 may include, for example, a low-permittivity material.

According to an embodiment, in order to make the non-conductive part 502 and the lateral conductive structure (e.g., the metal structure including the multiple conductive parts of the lateral member 303) of the electronic device 300 visually indistinguishable, the non-conductive part 502 may have substantially the same color as the lateral conductive structure.

According to various embodiments, the side surface 310C of the electronic device 300 may be coated with a material of various colors or textures, and thus the boundary between the non-conductive part 502 and the lateral conductive structure of the electronic device 300 may be obscured.

According to various embodiments, the first antenna module 591 may form a first beam pattern for first coverage corresponding to a direction toward the first side part S1 (e.g., the +x-axis direction), and a second beam pattern for second coverage corresponding to a direction between the +x-axis direction and the +z-axis direction. The first beam pattern may form the first coverage for a corresponding angle range in the +x-axis direction. The second beam pattern may form the second coverage for a corresponding angle range in the direction between the +x-axis direction and the +z-axis direction. An electromagnetic signal from the first antenna module 591 may be transmitted to the outside of the electronic device 300 by passing through the first side part S1 corresponding to the first coverage. An electromagnetic signal from the outside of the electronic device 300 may be received by the first antenna module 591 by passing through the first side part S1 corresponding to the first coverage. An electromagnetic signal from the first antenna module 591 may be transmitted to the outside of the electronic device 300 by passing through an area of the front plate 301 which is adjacent to the first side part S1 and corresponds to the second coverage. An electromagnetic signal from the outside of the electronic device 300 may be received by the first antenna module 591 by passing through the area of the front plate 301 which is adjacent to the first side part S1 and corresponds to the second coverage. The area of the front plate 301, which is adjacent to the first side part S1 and corresponds to the second coverage, may be included in the first RF window area corresponding to the first antenna module 591.

According to an embodiment, the first RF window area corresponding to the first antenna module 591 may include various other dielectrics positioned to correspond to the beam pattern or the coverage formed by the first antenna module 591. The first RF window area corresponding to the first antenna module 591 may further include, for example, a part of the first support member 510, an air gap, or an additional member. At least one dielectric included in the first RF window area corresponding to the first antenna module 591 may have a permittivity that reduces an electromagnetic influence on the first antenna module 591 or does not substantially influence the first antenna module 591. The at least one dielectric included in the first RF window area corresponding to the first antenna module 591 may have a permittivity that can reduce an influence on the antenna radiation performance, radio wave transmission/reception performance, or coverage of the first antenna module 591. The at least one dielectric included in the first RF window area corresponding to the first antenna module 591 may have a permittivity that contributes to not degrading the antenna radiation performance or radio wave transmission/reception performance of the first antenna module 591 to a threshold level or lower. The at least one dielectric included in the first RF window area corresponding to the first antenna module 591 may have a permittivity that does not substantially influence the coverage formed by the first antenna module 591. The at least one dielectric included in the first RF window area corresponding to the first antenna module 591 may have a permittivity that has an influence to the extent that the coverage formed by the first antenna module 591 does not deviate from the range desired to be achieved.

According to various embodiments, the antenna module 6 may be positioned to correspond to the second side part S2, the third side part S3, or the fourth side part S4, without being limited to the illustrated example.

According to an embodiment, the antenna structure 61 of the second antenna module 592 may be positioned in the electronic device 300 so as to correspond to the rear plate 302. The first surface 601 of the antenna structure 61 included in the second antenna module 592 may substantially face the rear plate 302. When viewed from above the first surface 601 of the antenna structure 61 included in the second antenna module 592 (e.g., when viewed in the +z-axis direction), the antenna array 612 of the antenna structure 61 may overlap the rear plate 302. When the communication circuit 62 provides an electromagnetic signal to the antenna structure 61, the electromagnetic signal provided by the communication circuit 62 may be transmitted to the outside of the electronic device 300 by passing through the rear plate 302 via the antenna array 612. The antenna array 612 of the second antenna module 592 may receive an electromagnetic signal that passes through the rear plate 302 from the outside of the electronic device 300. The second antenna module 592 may form a beam pattern for (or corresponding to) coverage. The second antenna module 592 may form, for example, a beam pattern for coverage that corresponds to a direction directed toward the rear plate 302 (e.g., the -z-axis direction).

According to an embodiment, the electronic device 300 may include a second RF window area corresponding to the second antenna module 592. The second RF window area may be an area of the electronic device 300 through which electromagnetic signals pass when the electromagnetic signals are transmitted to the outside of the electronic device 300 or received from the outside of the electronic device 300 via the antenna structure 61 of the second antenna module 592. For example, a part of the rear plate 302 may be positioned to correspond to the antenna structure 61 of the second antenna module 592 and may be included in the second RF window area. When the communication circuit 62 provides an electromagnetic signal to the antenna structure 61 of the second antenna module 592, the electromagnetic signal provided by the communication circuit 62 may be radiated (or transmitted) outside the electronic device 300 by passing through a part of the rear plate 302 and substantially included in the second RF window area via the antenna array 612. The antenna array 612 of the second antenna module 592 may receive, from the outside of the electronic device 300, an electromagnetic signal that passes through the part of the rear plate 302 included in the second RF window area. When viewed from above the first surface 601 of the antenna structure 61 included in the second antenna module 592, the part of the rear plate 302 included in the second RF window area may be aligned with and overlap the antenna array 612 of the antenna structure 61.

According to an embodiment, the part of the rear plate 302 included in the second RF window area may include a non-conductive material. The rear plate 302 may include, for example, an opening positioned to correspond to the second antenna module 592, and the part of the rear plate 302 included in the second RF window area may include a non-conductive material (e.g., polymer) positioned in (or filling) the opening. The remaining part of the rear plate 302 other than the part included in the second RF window area may include a conductive material.

According to various embodiments, the remaining part of the rear plate 302 other than the part included in the second RF window area may include a non-metal material different from the RF window area.

According to various embodiments, the entire rear plate 302 may be substantially formed of a non-conductive material.

According to various embodiments, the second RF window area corresponding to the second antenna module 592 may further include various other dielectrics positioned to correspond to the beam pattern or coverage formed by the second antenna module 592. For example, the second RF window area corresponding to the second antenna module 592 may further include a dielectric or an air gap, which is at least partially positioned between the rear plate 302 and the antenna structure 61 included in the second antenna module 592.

According to an embodiment, at least one dielectric included in the second RF window area corresponding to the second antenna module 592 may have a permittivity that reduces an electromagnetic influence on the second antenna module 592 or does not substantially influence the second antenna module 592. The at least one dielectric included in the second RF window area corresponding to the second antenna module 592 may have a permittivity that can reduce an influence on the antenna radiation performance, radio wave transmission/reception performance, or coverage of the second antenna module 592. The at least one dielectric included in the second RF window area corresponding to the second antenna module 592 may have a permittivity that contributes to not degrading the antenna radiation performance or radio wave transmission/reception performance of the second antenna module 592 to a threshold level or lower. The at least one dielectric included in the second RF window area corresponding to the second antenna module 592 may have a permittivity that does not substantially influence the coverage formed by the second antenna module 592. The at least one dielectric included in the second RF window area corresponding to the second antenna module 592 may have a permittivity that has an influence to the extent that the coverage formed by the second antenna module 592 does not deviate from the range desired to be achieved.

According to various embodiments, the first RF window area corresponding to the first antenna module 591 may include a dielectric lens (or an electromagnetic lens), or at least one dielectric included in the first RF window area may be implemented as a dielectric lens. The second RF window area corresponding to the second antenna module 592 may include a dielectric lens, or at least one dielectric included in the second RF window area may be implemented as a dielectric lens. The dielectric lens may focus or diverge an electromagnetic wave, for example, in the same way that an optical lens refracts a light wave. At least a part of energy (or an electromagnetic wave) radiated from the antenna structure 61 may be guided by the dielectric lens and travel. The dielectric lens may influence the at least part of energy radiated from the antenna structure 61 to contribute to ensuring antenna radiation performance or radio wave transmission/reception performance. The dielectric lens may contribute to forming a main beam (e.g., a beam, among beam patterns, which radiates relatively more energy in the maximum emission direction (or maximum radiation direction) (bioresight)) with improved antenna radiation performance or radio wave transmission/reception performance in a desired direction. The dielectric lens may contribute to ensuring an effective area (or coverage) in which electromagnetic wave energy can be concentrated in at least one designated direction or electromagnetic signals can be transmitted and received.

The electronic device 300 may further include various elements depending on the provided form thereof. These elements may have various variations depending on the convergence trend of the electronic device 300, and thus cannot all be enumerated. However, elements equivalent to the above-mentioned elements may be additionally included in the electronic device 300. In various embodiments, depending on the provided form, specific elements may be excluded from the above-mentioned elements or replaced with other elements.

In various embodiments of the disclosure, the electronic device 300 including the antenna module 6 has a bar-type or plate-type exterior, but is not limited thereto. For example, the electronic device including the antenna module 6 may be implemented as a foldable electronic device, a slidable electronic device, a stretchable electronic device, or a rollable electronic device.

"Comparative examples" referred to in the disclosure are presented solely for comparison with embodiments of the disclosure and are not intended to have a prior position over the embodiments of the disclosure.

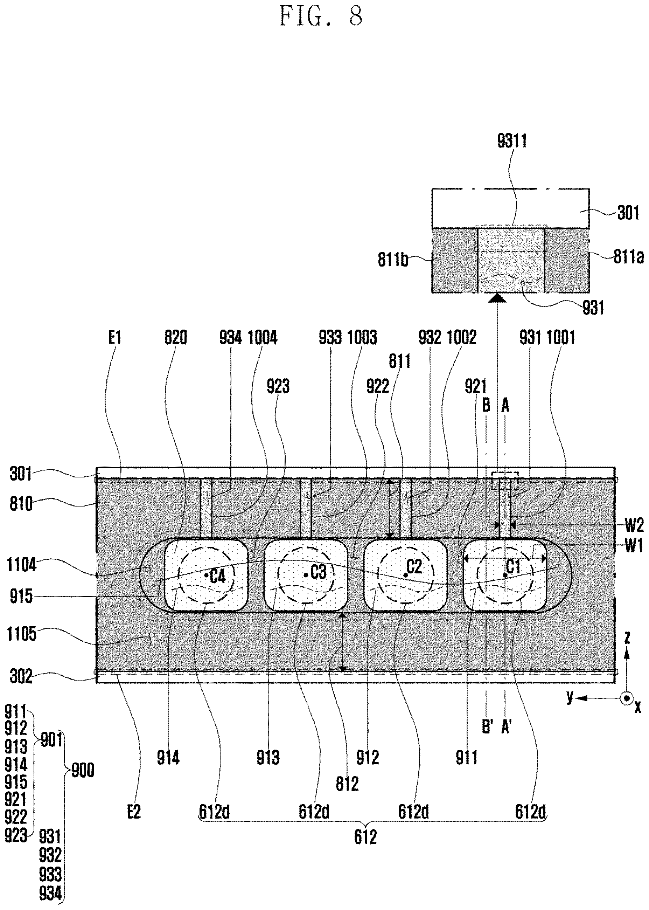

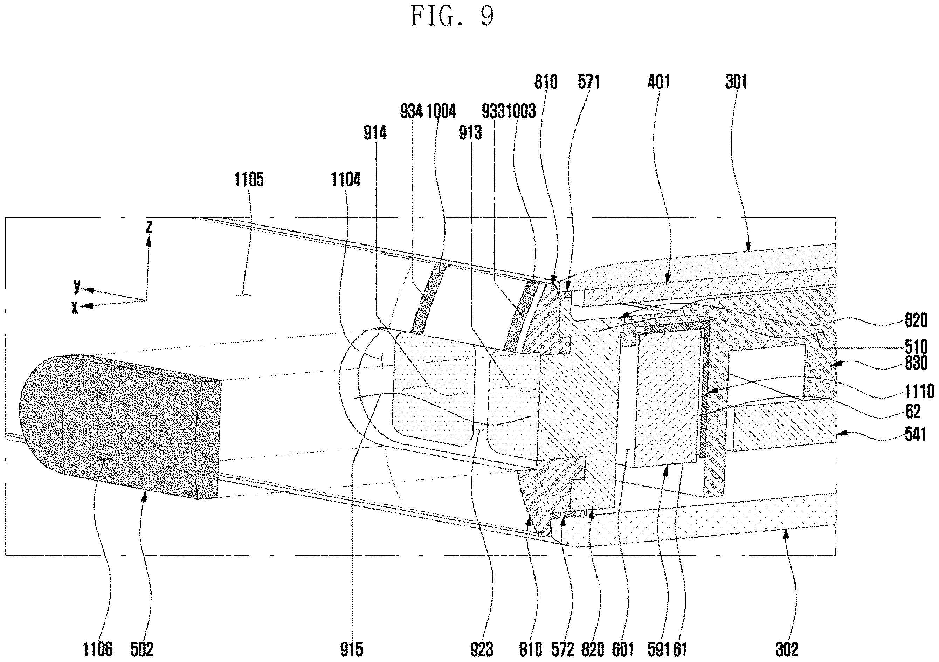

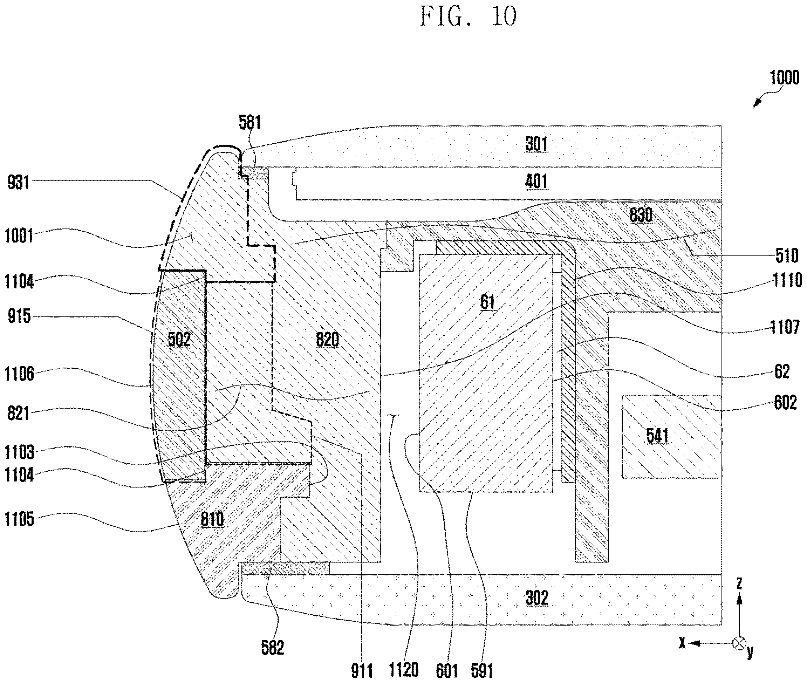

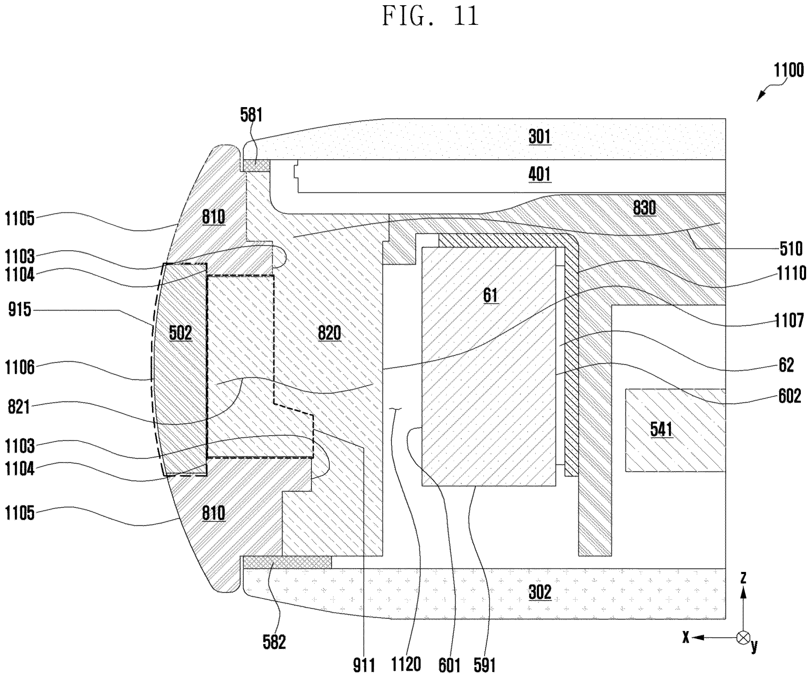

FIG. 8 is a view (e.g., a side view of the y-z plane) illustrating the electronic device 300 according to an embodiment, viewed in the -x-axis direction in FIG. 3. FIG. 9 is a partial cross-sectional perspective view of the electronic device 300 according to an embodiment. FIG. 10 is a cross-sectional view 1000 of the electronic device 300 according to an embodiment, taken along line A-A' in FIG. 8. FIG. 11 is a cross-sectional view 1100 of the electronic device according to an embodiment, taken along line B-B' in FIG. 8.

Referring to FIGS. 8, 9, 10, and 11, the electronic device 300 may include the front plate 301, the rear plate 302, a lateral conductive structure 810, the non-conductive part 502, an internal non-conductive structure 820, an internal conductive structure 830, the first antenna module 591, a fourth support member 1110, the display module 401, and/or the first printed circuit board 541.

According to an embodiment, the lateral conductive structure (or lateral conductive area) 810 may be a metal structure including the multiple conductive parts included in the lateral member 303 (see FIG. 5). The internal non-conductive structure 820 may be at least one non-conductive part included in the first support member (e.g., the bracket) 510. The internal conductive structure 830 may be at least one conductive part included in the first support member 510. The first adhesive member 571 may be positioned between the front plate 301 and the first support member 510, and the front plate 301 may be coupled to the first support member 510 using the first adhesive member 571. A first attachment area in the first support member 510 where the first adhesive member 571 is disposed is illustrated as being formed by the internal non-conductive structure 820. However, the disclosure is not limited thereto, and at least a part of the first attachment area may be formed by the internal conductive structure 830. In various embodiments, the lateral member 303 (see FIG. 5) may form at least a part of the first attachment area where the first adhesive member 571 is disposed. The display module 401 may be positioned between the first support member 510 and the front plate 301. The second adhesive member 572 may be positioned between the rear plate 302 and the first support member 510, and the rear plate 302 may be coupled to the first support member 510 using the second adhesive member 572. A second attachment area in the first support member 510 where the second adhesive member 572 is disposed is illustrated as being formed by the internal non-conductive structure 820 and the internal conductive structure 830. However, the disclosure is not limited thereto, and at least a part of the second attachment area may be formed by the internal non-conductive structure 820 or the internal conductive structure 830, for example. In various embodiments, the lateral member 303 (see FIG. 5) may form at least a part of the second attachment area where the second adhesive member 571 is disposed. The first printed circuit board 541 may be positioned between the first support member 510 and the rear plate 302.

According to an embodiment, the first antenna module 591 may be positioned in the electronic device 300 using the fourth support member 1110. The antenna structure 61 may be connected to the first support member 510, for example, using the fourth support member 1110. The fourth support member 1110 may contribute to allowing the antenna structure 61 to be stably positioned in the inner space of the electronic device 300. The fourth support member 1110 may contribute to the durability of the antenna structure 61. In an embodiment, the fourth support member 1110 may be coupled to the first support member 510 using bonding that includes an adhesive member, or a mechanical fastening such as a screw fastening. The fourth support member 1110 may include a seating structure capable of stably positioning the antenna structure 61. The seating structure may include, for example, a recess structure or a fitting structure that allows the antenna structure 61 to be stably positioned on the fourth support member 1110 without wobbling. In an embodiment, the fourth support member 1110 may include an opening or a recess in which an element (e.g., the communication circuit 62, the power management circuit 63, the connector 64, or the shielding member 66 in FIG. 7) disposed on the second surface 602 of the antenna structure 61 may be placed. In an embodiment, the fourth support member 1110 may be implemented as an integrated metal structure that includes a bent part. The fourth support member 1110 may include, for example, titanium, an amorphous alloy, a metal-ceramic composite material (e.g., a cermet), or stainless steel. In another example, the fourth support member 1110 may include magnesium, a magnesium alloy, aluminum, an aluminum alloy, a zinc alloy, or a copper alloy. The fourth support member 1110 may include various other metal materials. In an embodiment, the fourth support member 1110 formed of a metal material may reduce an electromagnetic influence (e.g., EMI) on the antenna structure 61. In various embodiments, the fourth support member 1110 may include a non-metal material. The fourth support member 1110 may be modified in various shapes, without being limited to the illustrated example, in order to stably or robustly connect the antenna structure 61 to the first support member 510. The fourth support member 1110, as an element for stably positioning the antenna structure 61 in the inner space of the electronic device 300, may be referred to by various other terms, such as "connection structure", "connection member", "bracket", "antenna module support member", "antenna module support structure", "antenna module bracket", or "frame".

According to an embodiment, an adhesive member may be positioned between the fourth support member 1110 and the antenna structure 61. For example, the antenna structure 61 may be coupled to the fourth support member 1110 using a thermoresponsive adhesive material, a photoresponsive adhesive material, a conventional adhesive, or double-sided tape. In various embodiments, a flexible member such as rubber may be positioned between the fourth support member 1110 and the antenna structure 61. In various embodiments, a flexible member such as rubber may be positioned between the fourth support member 1110 and the first support member 510. The adhesive member or the flexible member between the fourth support member 1110 and the antenna structure 61, and/or the flexible member between the fourth support member 1110 and the first support member 510 may reduce the stress impact on the antenna structure 61, the stress impact between the antenna structure 61 and the fourth support member 1110, or the stress impact between the fourth support member 1110 and the first support member 510 when an external impact is applied to the electronic device 300

According to an embodiment, by conduction which is the flow of heat from a hotter part to a cooler part, heat dissipated from the antenna structure 61, and an electronic component (e.g., the communication circuit 62 or the power management circuit 63 in FIG. 7) disposed in the antenna structure 61 may be moved to the first support member 510 via the fourth support member 1110. The first support member 510 may function as a heat spreader, for example. The fourth support member 1110 may be a heat transfer path between the antenna structure 61 and the heat spreader (e.g., the first support member 510). Heat spreading or heat dissipation using the fourth support member 1110 and the first support member 510 may prevent overheating, thereby reducing performance degradation of or damage to the antenna structure 61 and the electronic component disposed on the antenna structure 61. At least a part of the fourth support member 1110 may be in physical contact with the first support member 510. In various embodiments, a thermally conductive material (or thermally conductive member), such as a thermal interface material (TIM), may be interposed between at least a part of the fourth support member 1110 and the first support member 510 to improve heat transfer performance. In various embodiments, a thermally conductive material (or thermally conductive member), such as a TIM, may be interposed between the fourth support member 1110 and the antenna structure 61 or between the fourth support member 1110 and the electronic component disposed on the antenna structure 61 to improve heat transfer performance.

According to various embodiments, the antenna structure 61 may also be disposed on the first support member 510 without the fourth support member 1110.

According to an embodiment, the first surface 601 of the antenna structure 61 may face the non-conductive part 502 disposed in the lateral conductive structure 810. A beam pattern (or a radiation pattern) (e.g., a beam width or a beam direction) may be formed by summing the beams formed by the multiple antenna elements 612a, 612b, 612c, and 612d included in the antenna structure 61. The electronic device 300 may perform beamforming via the antenna array 612. The electronic device 300 may store codebook information regarding beamforming in a memory (e.g., the memory 130 in FIG. 1). The electronic device 300 may efficiently control (e.g., assign or arrange), based on the codebook information, multiple beams through the multiple antenna elements 612a, 612b, 612c, and 612d of the antenna array 612. The electronic device 300 may form a beam pattern by adjusting, based on the codebook information, the phase of a current supplied to the multiple antenna elements 612a, 612b, 612c, and 612d of the antenna array 612. In an embodiment, by beamforming, the antenna array 612 may form a beam that radiates (or transmits) a relatively large amount of energy in front of the first surface 601.

According to an embodiment, when viewed from above the first surface 601 of the antenna structure 61 (e.g., when viewed in the -x-axis direction), the non-conductive part 502 disposed in the lateral conductive structure 810 may be aligned with and overlap the antenna array 612 of the antenna structure 61. The non-conductive part 502 may reduce the influence of the lateral conductive structure 810 on the antenna radiation performance, radio wave transmission/reception performance, or coverage (or beam coverage) of the first antenna module 591, compared to a comparative example where the lateral conductive structure 810 is expanded without the non-conductive part 502. The non-conductive part 502 may reduce the influence of the lateral conductive structure 810 on an electromagnetic signal transmitted from the antenna array 612, thereby reducing deformation (e.g., distortion) of the beam pattern, as compared to the comparative example where the lateral conductive structure 810 is expanded without the non-conductive part 502.

According to an embodiment, the lateral conductive structure 810 may include an opening structure 900 formed to correspond to the first antenna module 591. The opening structure 900 may include a recess 915 corresponding to the non-conductive part 502. The recess 915 may include a recessed space in the side surface 310C of the electronic device 300 (see FIG. 3). The non-conductive part 502 may be disposed in (or inserted into) the recess 915. A fifth surface 1105 of the side surface 310C of the electronic device 300, formed by the lateral conductive structure 810, and a sixth surface 1106 of the side surface 310C of the electronic device 300, formed by the non-conductive part 502, may be seamlessly connected to each other without a substantial height difference. The opening structure 900 may include multiple openings 911, 912, 913, and 914 formed in the recesses 915 and corresponding to the multiple antenna elements 612a, 612b, 612c, and 612d of the antenna structure 61. The lateral conductive structure 810 may include a third surface 1103 facing the first surface 601 of the antenna structure 61, and a fourth surface 1104 positioned opposite the third surface 1103. The fourth surface 1104 may be part of a surface forming the recess 915, and may be formed lower in the -x-axis direction (e.g., the direction faced by the second surface 602 of the antenna structure 61) than the fifth surface 1105 of the side surface 310C of the electronic device 300 that is formed by the lateral conductive structure 810. The third surface 1103 may be referred to as the "inner side surface" of the lateral conductive structure 810, and the fourth surface 1104 and the fifth surface 1105 together may be referred to as the "outer side surface" of the lateral conductive structure 810. The multiple openings 911, 912, 913, and 914 may be in the form of through holes that extend between the third surface 1103 and the fourth surface 1104. The multiple openings 911, 912, 913, and 914 may be positioned in one-to-one correspondence with the multiple antenna elements 612a, 612b, 612c, and 612d of the antenna array 612 included in the antenna structure 61. The multiple openings 911, 912, 913, and 914 may be arranged in the y-axis direction. The y-axis direction may be perpendicular to a direction (e.g., the +x-axis direction) faced by the first surface 601 of the antenna structure 61 and perpendicular to a direction from the rear plate 302 to the front plate 301 (e.g., the +z-axis direction). The multiple openings 911, 912, 913, and 914 may include a first opening 911 corresponding to a first antenna element 612a, a second opening 912 corresponding to a second antenna element 612b, a third opening 913 corresponding to a third antenna element 612c, and a fourth opening 914 corresponding to a fourth antenna element 612d. The first opening 911 may be aligned with or overlap the first antenna element 612a when viewed from above the first surface 601 of the antenna structure 61 (e.g., when viewed in the -x-axis direction). The second opening 912 may be aligned or overlapped with the second antenna element 612b, when viewed from above the first surface 601 of the antenna structure 61. The third opening 913 may be aligned or overlapped with the third antenna element 612c when viewed from above the first surface 601 of the antenna structure 61. The fourth opening 914 may be aligned or overlapped with the fourth antenna element 612d when viewed from above the first surface 601 of the antenna structure 61. A hole structure 901 including the recess 915 and the multiple openings 911, 912, 913, and 914 may include a first wall (or a first partition wall) 921 between the first opening 911 and the second opening 912, a second wall (or a second partition wall) 922 between the second opening 912 and the third opening 913, a third wall (or a third partition wall) 923 between the third opening 913 and the fourth opening 94. An area in the fourth surface 1104 that does not correspond to the multiple openings 911, 912, 913, and 914 may support the non-conductive part 502 disposed in the recess 915. The recess 915 may overlap the multiple openings 911, 912, 913, and 914 when viewed from above the first surface 601 of the antenna structure 61, and the space in the recess 915 may be connected to spaces in the multiple openings 911, 912, 913, and 914. Hereinafter, a connection between a space contained in one element and a space contained in another element is defined or interpreted as "spatial connection". The multiple openings 911, 912, 913, and 914 may be formed, for example, in a shape similar to a rectangle including four corners when viewed from above the first surface 601, but may be formed, without being limited thereto, in various other shapes such as circular, elliptical, or polygonal.

According to an embodiment, the opening structure 900 may include multiple slits 931, 932, 933, and 934. The multiple slits 931, 932, 933, and 934 may be formed in a peripheral conductive area of the lateral conductive structure 810 that surrounds the hole structure 901. The peripheral conductive area of the lateral conductive structure 810, which surrounds the hole structure 901, may include, for example, a first conductive area 811 positioned toward the front plate 301 and a second conductive area 812 positioned toward the rear plate 302 with respect to the hole structure 901. In an embodiment, the multiple slits 931, 932, 933, and 934 may be formed in the first conductive area 811. The lateral conductive structure 810 may include a first edge E1 corresponding to the edge of the front plate 301. The multiple slits 931, 932, 933, and 934 may extend from the hole structure 901 to the first edge E1.

According to various embodiments, the illustrated example may be modified so that the multiple slits 931, 932, 933, and 934 are formed in the second conductive area 812.

According to various embodiments, the opening structure 900 may further include multiple slits (not shown) formed in the second conductive area 812. The lateral conductive structure 810 may include a second edge E2 corresponding to the edge of the rear plate 302. The multiple slits formed in the second conductive area 812 may extend from the hole structure 901 to the second edge E2.

According to an embodiment, the multiple slits 931, 932, 933, and 934 may be positioned in one-to-one correspondence with the multiple openings 911, 912, 913, and 914. The multiple slits 931, 932, 933, and 934 may include a first slit 931 corresponding to the first opening 911, a second slit 932 corresponding to the second opening 912, a third slit 933 corresponding to the third opening 913, and/or a fourth slit 934 corresponding to the fourth opening 914. The first slit 931 may be formed to extend from one position in the first opening 911 to one surface of the lateral conductive structure 810. For example, when viewed from above the fifth surface 1105 (e.g., when viewed in the x-axis direction), the first slit 931 may be formed in the first conductive area 811 to extend straight (e.g., in the +z-axis direction) from the first opening 911 to the first edge E1 of the lateral conductive structure 810. The first slit 931 may be defined or interpreted as a first cut having a narrower width than the first opening 911 when viewed from above the fifth surface 1105. In various embodiments, the first slit 931 may be defined or interpreted as an "extended opening" or "extended space" from the first opening 911. The second slit 932 may be formed to extend from one position in the second opening 912 to one surface of the lateral conductive structure 810. For example, when viewed from above the fifth surface 1105, the second slit 932 may be formed in the first conductive area 811 to extend straight (e.g., in the +z-axis direction) from the second opening 912 to the first edge E1 of the lateral conductive structure 810. The second slit 932 may be defined or interpreted as a second cut having a narrower width than the second opening 912 when viewed from above the fifth surface 1105. In various embodiments, the second slit 932 may be defined or interpreted as an "extended opening" or "extended space" from the second opening 912. The third slit 933 may be formed to extend from one position in the third opening 913 to one surface of the lateral conductive structure 810. For example, when viewed from above the fifth surface 1105, the third slit 933 may be formed in the first conductive area 811 to extend straight (e.g., in the +z-axis direction) from the third opening 913 to the first edge E1 of the lateral conductive structure 810. The third slit 933 may be defined or interpreted as a third cut having a narrower width than the third opening 913 when viewed from above the fifth surface 1105. In various embodiments, the third slit 933 may be defined or interpreted as an "extended opening" or "extended space" from the third opening 913. The fourth slit 934 may be formed to extend from one position in the fourth opening 914 to one surface of the lateral conductive structure 810. For example, when viewed from above the fifth surface 1105, the fourth slit 934 may be formed in the first conductive area 811 to extend straight (e.g., in the +z-axis direction) from the fourth opening 914 to the first edge E1 of the lateral conductive structure 810. The fourth slit 934 may be defined or interpreted as a fourth cut having a narrower width than the fourth opening 914 when viewed from above the fifth surface 1105. In various embodiments, the fourth slit 934 may be defined or interpreted as an "extended opening" or "extended space" from the fourth opening 914.

According to an embodiment, when the communication circuit 62 provides an electromagnetic signal to the antenna structure 61, the electromagnetic signal may be transmitted from the antenna array 612 to the outside of the electronic device 300 via the opening structure 900 including the hole structure 901 and the multiple slits 931, 932, 933, and 934. An electromagnetic signal from the outside of the electronic device 300 may be received by the antenna array 612 of the antenna structure 61 via the opening structure 900 including the hole structure 901 and the multiple slits 931, 932, 933, and 934. Electromagnetic waves may pass through the first opening 911 and/or the first slit 931 to be transmitted and received between the first antenna element 612a and the outside of the electronic device 300. Electromagnetic waves may pass through the second opening 912 and/or the second slit 932 to be transmitted and received between the second antenna element 612b and the outside of the electronic device 300. Electromagnetic waves may pass through the third opening 913 and/or the third slit 933 to be transmitted and received between the third antenna element 612c and the outside of the electronic device 300. Electromagnetic waves may pass through the fourth opening 914 and/or the fourth slit 934 to be transmitted and received between the fourth antenna element 612d and the outside of the electronic device 300.

The hole structure 901 including the recess 915 and the multiple openings 911, 912, 913, and 914 may reduce the influence of the lateral conductive structure 810 on the antenna radiation performance, radio wave transmission/reception performance, or coverage (or beam coverage) of the first antenna module 591, compared to a comparative example in which the hole structure 901 is omitted. The slit 931, 932, 933, or 934 may contribute to improving antenna radiation performance, radio wave transmission/reception performance, or coverage of the first antenna module 591, compared to a comparative example in which the slits are omitted.

According to an embodiment, when viewed from above the first surface 601 of the antenna structure 61 (e.g., when viewed in the -x-axis direction), the centers (e.g., symmetry centers) (C1, C2, C3, and C4) of the multiple antenna elements 612a, 612b, 612c, and 612d may be arranged in the y-axis direction. The antenna element (e.g., the first antenna element 612a, the second antenna element 612b, the third antenna element 612c, or the fourth antenna element 612d) may have the shape of a flat or planar plate that is substantially parallel to the first surface 601. The centers of the antenna elements are the points of intersection of a first axis (e.g., the y axis) and a second axis (e.g., the z axis) orthogonal to the first axis, and the antenna elements may be symmetrical with respect to the first axis and/or symmetrical with respect to the second axis. In the illustrated example, the antenna elements may be substantially circular when viewed from above the first surface 601, and the centers of the antenna elements may be interpreted as the center of the circles. In various embodiments, the antenna elements may be elliptical when viewed from above the first surface 601, and the centers of the antenna elements may be interpreted as the centers of ellipses. In various embodiments, the antenna elements may be rectangular when viewed from above the first surface 601, and the centers of the antenna elements may be interpreted as the centers of the rectangles.

According to an embodiment, the first slit 931 may be aligned in the z-axis direction with the center C1 of the first antenna element 612a when viewed from above the first surface 601 of the antenna structure 61. The second slit 932 may be aligned in the z-axis direction with the center C2 of the second antenna element 612b when viewed from above the first surface 601 of the antenna structure 61. The third slit 933 may be aligned in the z-axis direction with the center C3 of the third antenna element 612c when viewed from above the first surface 601 of the antenna structure 61. The fourth slit 934 may be aligned in the z-axis direction with the center C4 of the fourth antenna element 612d when viewed from above the first surface 601 of the antenna structure 61.

According to an embodiment, when viewed from above the first surface 601 of the antenna structure 61 (e.g., when viewed in the -x-axis direction), in the y-axis direction, the width W2 of the first slit 931 may be smaller than the width W1 of the first opening 911. In various embodiments, the width W2 of the first slit 931 may be substantially the same as the width W1 of the first opening 911, and when viewed from above the first surface 601, the first slit 931 and the first opening 911 may be aligned in the z-axis direction. The second opening 912 and the corresponding second slit 932 may be formed in substantially the same or similar manner as the first opening 911 and the corresponding first slit 931. The third opening 913 and the corresponding third slit 933 may be formed in substantially the same or similar manner as the first opening 911 and the corresponding first slit 931. The fourth opening 914 and the corresponding fourth slit 934 may be formed in substantially the same or similar manner as the first opening 911 and the corresponding first slit 931.

According to an embodiment, the slit 931, 932, 933, or 934 may allow electromagnetic waves to be radiated (or transmitted) from the antenna structure 61 to the outside of the electronic device 300, thereby reducing degradation of the antenna radiation performance or radio wave transmission/reception performance of the antenna structure 61 compared to a comparative example in which the slits are omitted. For example, even when an external dielectric at least partially covers the hole structure 901, as in a situation where the electronic device 300 is held in the hand, a part of an electromagnetic wave from the antenna structure 61 may be radiated (or transmitted) to the outside of the electronic device 300 through the slit 931, 932, 933, or 934. For example, even when an external dielectric at least partially covers the hole structure 901, as in a situation where the electronic device 300 is held in the hand, an electromagnetic wave from the outside of the electronic device 300 may be received by the antenna structure 61 through the slit 931, 932, 933, or 934. Due to a position relative to the hole structure 901, the slit 931, 932, 933, or 934 may be less likely to be covered by the hand when the electronic device 300 is held in the hand compared to the hole structure 901.

According to an embodiment, the first slit 931 may include a slit end 9311 corresponding to the first edge E1 of the lateral conductive structure 810. The slit end 9311 may be formed in an open shape. The open shape of the slit end 9311 may be defined or interpreted as, for example, a substantial gap being formed due to the absence of a conductive material (e.g., a part of the first conductive area 811). A part of the first conductive area 811 of the lateral conductive structure 810, which includes the first slit 931, may include two conductive areas 811a and 811b separated by the first slit 931. Even when an external dielectric covers a part of the first slit 931 other than the slit end 9311, as in a situation where the electronic device 300 is held in a hand, a part of an electromagnetic wave from the antenna structure 61 may be radiated (or transmitted) outside the electronic device 300 through the slit end 9311. The slit end 9311 may be less likely to be covered by the hand when the electronic device 300 is held in the hand, compared to the part of the first slit 931 other than the slit end 9311. The second slit 932, the third slit 933, or the fourth slit 934 may be formed to be substantially the same as or similar to the first slit 931.

According to an embodiment, the electronic device 300 may include a first non-conductive member 1001 disposed at least partially in the first slit 931, a second non-conductive member 1002 disposed at least partially in the second slit 932, a third non-conductive member 1003 disposed at least partially in the third slit 933, and a fourth non-conductive member 1004 disposed at least partially in the fourth slit 934. The first non-conductive member 1001, the second non-conductive member 1002, the third non-conductive member 1003, and the fourth non-conductive member 1004 may form a part of the side surface 310C (see FIG. 3) of the electronic device 300. The part of the side surface 310C of the electronic device 300, formed by the first non-conductive member 1001, the second non-conductive member 1002, the third non-conductive member 1003, and the fourth non-conductive member 1004, may be seamlessly connected to the fifth surface 1105 of the side surface 310C of the electronic device 300, formed by the lateral conductive structure 810, without a substantial height difference. The first non-conductive member 1001, the second non-conductive member 1002, the third non-conductive member 1003, or the fourth non-conductive member 1004 is a part of the internal non-conductive structure 820 and may be coupled to the lateral conductive structure 810. In various embodiments, the first non-conductive member 1001, the second non-conductive member 1002, the third non-conductive member 1003, or the fourth non-conductive member 1004 may be a separate member that is connected to the internal non-conductive structure 820, and may include a material the same as or different from that of the internal non-conductive structure 820.

According to an embodiment, the first non-conductive member 1001, the second non-conductive member 1002, the third non-conductive member 1003, and the fourth non-conductive member 1004 may each have a permittivity that reduces an electromagnetic influence on the first antenna module 591 or does not substantially influence the first antenna module 591. The first non-conductive member 1001, the second non-conductive member 1002, the third non-conductive member 1003, and the fourth non-conductive member 1004 may each have a permittivity that reduces an influence on the antenna radiation performance, radio wave transmission/reception performance, or coverage of the first antenna module 591. The first non-conductive member 1001, the second non-conductive member 1002, the third non-conductive member 1003, and the fourth non-conductive member 1004 may each have a permittivity that contributes to not degrading the antenna radiation performance or radio wave transmission/reception performance of the first antenna module 591 to a threshold level or lower.

According to an embodiment, a part 821 of the internal non-conductive structure 820 may be positioned at least partially in front of the first surface 601 of the antenna structure 61. The part 821 of the internal non-conductive structure 820, positioned to correspond to the antenna structure 61, may include a part disposed in each of the first opening 911, the second opening 912, the third opening 913, and/or the fourth opening 914 of the opening structure 900. The portion 821 of the internal non-conductive structure 820, positioned to correspond to the antenna structure 61, may include a part disposed in each of the multiple slits 931, 932, 933, and 934. The part 821 of the internal non-conductive structure 820, positioned to correspond to the antenna structure 61, may include a seventh surface 1107 that faces the first surface 601 of the antenna structure 61. An air gap 1120 may be formed between the first surface 601 of the antenna structure 61 and the seventh surface 1107 of the internal non-conductive structure 820. There may be a comparative example in which the internal non-conductive structure 820 is in contact with the first surface 601 of the antenna structure 61 without the air gap 1120. An embodiment in which there is the air gap 1120 between the first surface 601 and the seventh surface 1107 may reduce the degradation of antenna radiation performance (or radio wave transmission/reception performance) of the antenna structure 61 compared to the comparative example. The air gap 1120 may allow the part 821 of the internal non-conductive structure 820, positioned to correspond to the antenna structure 61, to be spaced apart from the antenna structure 61, thereby reducing the influence on the antenna radiation performance of the antenna structure 61. The part 821 of the internal non-conductive structure 820, positioned to correspond to the antenna structure 61, may have a permittivity that can reduce degradation of the antenna radiation performance of the antenna structure 61. The part 821 of the internal non-conductive structure 820, positioned to correspond to the antenna structure 61, may have a permittivity that does not degrade the antenna radiation performance of the antenna structure 61 to a threshold level or lower. The part 821 of the internal non-conductive structure 820, positioned to correspond to the antenna structure 61, may have, for example, a permittivity (e.g., a low permittivity) that is smaller than the permittivity of the lateral conductive structure 810 and can reduce the difference in permittivity from the air gap 1120. In various embodiments, a dielectric may be disposed between the first surface 601 and the seventh surface 1107, so that the air gap 1120 may not be substantially formed, or the air gap 1120 may be reduced compared to the illustrated example. The dielectric between the first surface 601 and the seventh surface 1107 may have a permittivity that can reduce degradation of the antenna radiation performance of the antenna structure 61. The dielectric between the first surface 601 and the seventh surface 1107 may have, for example, a permittivity that can reduce the difference from the permittivity of air.

According to various embodiments, the part 821 of the internal non-conductive structure 820, positioned to correspond to the antenna structure 61, may be omitted.

According to various embodiments, the part 821 of the internal non-conductive structure 820, positioned to correspond to the antenna structure 61, may include an opening corresponding to the antenna array 612 or the antenna element 612a, 612b, 612c, or 612d.

According to an embodiment, the electronic device 300 may include the first RF window area corresponding to the first antenna module 591. The first RF window area may be an area of the electronic device 300 through which electromagnetic signals pass when electromagnetic signals are transmitted to or received from the outside of the electronic device 300 via the antenna structure 61 of the first antenna module 591. The first RF window area may include at least one dielectric positioned corresponding to a beam pattern or coverage formed by the antenna structure 61 when the wireless communication circuit (e.g., the wireless communication module 192 in FIG. 1) provides an electromagnetic signal to the antenna structure 61. The first RF window area may include, for example, the opening structure 900, the non-conductive part 502, the air gap 1120, and the part 821 of the internal non-conductive structure 820 positioned to correspond to the antenna structure 61, but may further include other dielectrics not shown, without being limited thereto. At least one dielectric included in the first RF window area corresponding to the first antenna module 591 may have a permittivity that can reduce an electromagnetic influence on the first antenna module 591. The at least one dielectric included in the first RF window area corresponding to the first antenna module 591 may have a permittivity that can reduce an influence on the antenna radiation performance, radio wave transmission/reception performance, or coverage of the first antenna module 591.

According to various embodiments, the first RF window area corresponding to the first antenna module 591 may include a dielectric lens (or a radio wave lens), or at least one dielectric included in the first RF window area may be implemented as a dielectric lens. At least a part of energy (or an electromagnetic wave) radiated from the antenna structure 61 may be guided by the dielectric lens and travel. For example, the part 821 of the internal non-conductive structure 820, positioned to correspond to the antenna structure 61, may include a dielectric lens, or may be implemented as a dielectric lens. In another example, the part 821 of the internal non-conductive structure 820, positioned to correspond to the antenna structure 61, may include an opening corresponding to the antenna array 612 or the antenna element 612a, 612b, 612c, or 612d, and a dielectric lens of a non-conductive material different from the internal non-conductive structure 820 may be disposed in the opening.

According to various embodiments, some of the multiple slits 931, 932, 933, and 934 may be omitted. The number, position, or shape of slits included in the opening structure 900 may vary without being limited to the illustrated example. For example, the slits included in the opening structure 900 may be implemented such that, when viewed from above the first surface 601 of the antenna structure 61 (e.g., when viewed in the -x-axis direction), the slits narrow or widen in the y-axis direction toward the front plate 301. For example, the slits included in the opening structure 900 are not limited to extending straight from the hole structure 901 to the first edge E1 of the lateral conductive structure 810 when viewed from above the first surface 601 of the antenna structure 61 as in the illustrated example, but may be implemented in various other shapes such as a sloped shape or a zigzag shape.

According to various embodiments, at least some of the first wall 921, the second wall 922, and the third wall 923 may be omitted. For example, when the first wall 921 is omitted, a single opening that replaces the first opening 911 and the second opening 912 may be formed. For example, when the second wall 922 is omitted, a single opening that replaces the second opening 912 and the third opening 913 may be formed. For example, when the third wall 923 is omitted, a single opening that replaces the third opening 913 and the fourth opening 914 may be formed. For example, when the first wall 921 and the second wall 922 are omitted, a single opening that replaces the first opening 911, the second opening 912, and the third opening 913 may be formed. For example, when the second wall 923 and the third wall 923 are omitted, a single opening that replaces the second opening 912, the third opening 913, and the fourth opening 914 may be formed. For example, when the first wall 921, the second wall 923, and the third wall 923 are omitted, a single opening that replaces the first opening 911, the second opening 912, the third opening 913, and the fourth opening 914 may be formed.

According to various embodiments, when the first wall 921 is omitted, the opening structure 900 may include at least one slit formed in the first conductive area 811 or the second conductive area 812 of the lateral conductive structure 810 and aligned between the first antenna element 612a and the second antenna element 612b when viewed from above the first surface 601 of the antenna structure 6 (e.g., when viewed in the -x-axis direction).

According to various embodiments, when the second wall 922 is omitted, the opening structure 900 may include at least one slit formed in the first conductive area 811 or the second conductive area 812 of the lateral conductive structure 810 and aligned between the second antenna element 612b and the third antenna element 612c when viewed from above the first surface 601 of the antenna structure 61 (e.g., when viewed in the -x-axis direction).

According to various embodiments, when the third wall 923 is omitted, the opening structure 900 may include at least one slit formed in the first conductive area 811 or the second conductive area 812 of the lateral conductive structure 810 and aligned between the third antenna element 612c and the fourth antenna element 612d when viewed from above the first surface 601 of the antenna structure 61 (e.g., when viewed in the -x-axis direction).

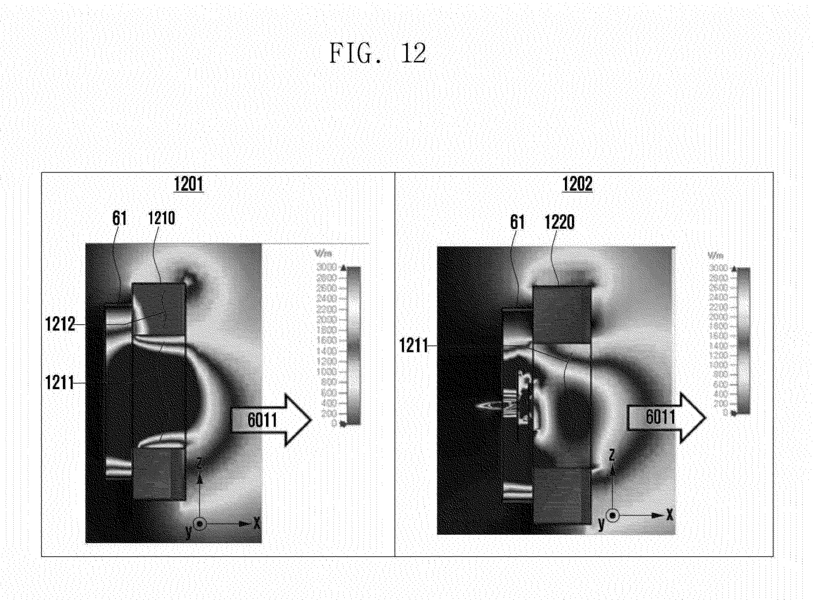

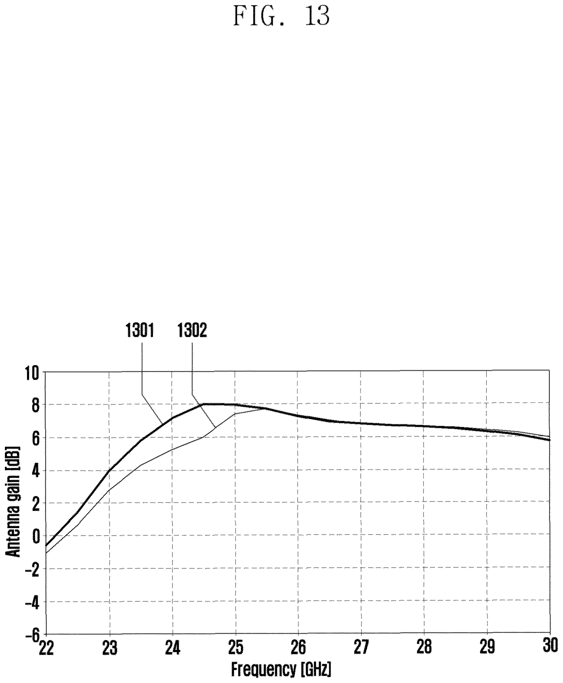

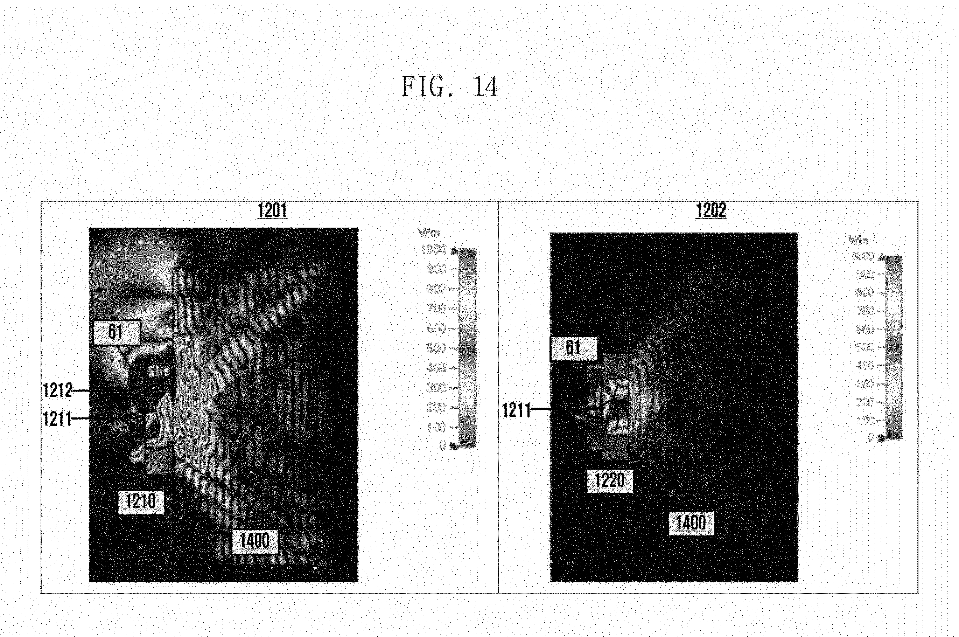

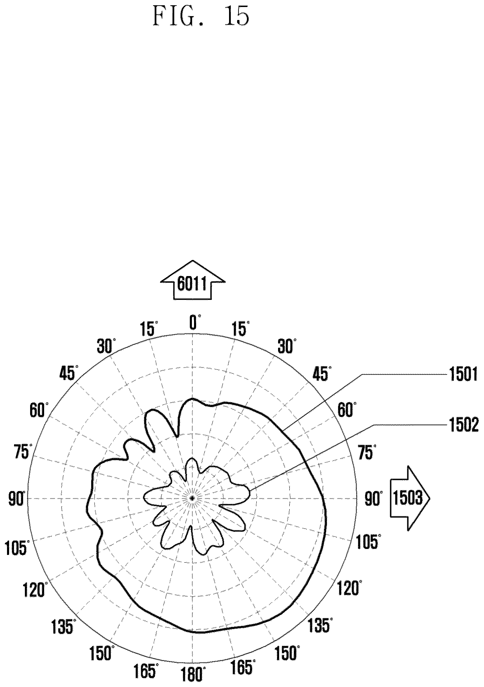

FIG. 12 illustrates an electric field distribution in a radiating structure 1201 according to an embodiment, and an electric field distribution in a radiating structure 1202 according to a comparative example. FIG. 13 is a graph depicting an antenna gain 1301 in the radiating structure 1201 according to an embodiment, and an antenna gain 1302 in the radiating structure 1202 according to a comparative example. FIG. 14 illustrates an electric field distribution when an external dielectric 1400 is adjacent to the radiating structure 1201 according to an embodiment, and an electric field distribution when the external dielectric 1400 is adjacent to the radiating structure 1202 according to a comparative example. FIG. 15 illustrates a radiation pattern when the external dielectric 1400 is adjacent to the radiating structure 1201 according to an embodiment, and the radiation pattern when the external dielectric 1400 is adjacent to the radiating structure 1202 according to a comparative example.

Referring to FIG. 12, the radiating structure 1201 according to an embodiment may include the antenna structure 61 and a conductive housing 1210 positioned to face the antenna structure 61. The conductive housing 1210 may form the exterior of an electronic device (e.g., the electronic device 101 in FIG. 1), and may be, for example, the lateral conductive structure 810 in FIG. 10. The conductive housing (or conductive exterior member) 1210 may include a hole structure 1211 (e.g., the hole structure 901 in FIG. 8) and at least one slit 1212 (e.g., the slit 931, 932, 933, or 934 in FIG. 8). The radiating structure 1202 according to the comparative example may include a conductive housing 1220 that includes the hole structure 1211 without any slit, compared to the radiating structure 1201 according to an embodiment. When an electromagnetic signal (or a radiation current) is provided to the antenna structure 61, the electromagnetic wave may be radiated (or transmitted), through the hole structure 1211, in front of (see reference numeral "6011") the first surface 601 (see FIG. 6) included in the antenna structure 61. In the radiating structure 1201 according to an embodiment, a part of the electromagnetic wave may be radiated to the outside through at least one slit 1212, when compared to the radiating structure 1202 according to a comparative example. Referring to FIG. 13, the radiating structure 1201 according to an embodiment may improve or substantially equally maintain the antenna gain compared to the radiating structure 1202 according to a comparative example.

Referring to FIGS. 14 and 15, reference numeral "1501" indicates a radiation pattern when the external dielectric 1400 is adjacent to the radiating structure 1201 according to an embodiment, and reference numeral "1502" indicates a radiation pattern when the external dielectric 1400 is adjacent to the radiating structure 1202 according to a comparative example. Reference numeral "1503" indicates a direction in which the at least one slit 1212 is positioned relative to the hole structure 1211. When the external dielectric 1400 (e.g., a user's hand) at least partially covers the hole structure 1211, the radiating structure 1202 according to the comparative example may have a difficulty in radiating (or transmitting) an electromagnetic wave to the outside due to the external dielectric 1400. When compared to the radiating structure 1202 according to the comparative example, the radiating structure 1201 according to an embodiment may allow a part of an electromagnetic wave to be radiated to the outside through the at least one slit 1212 even when the external dielectric 1400 at least partially covers the hole structure 1211.

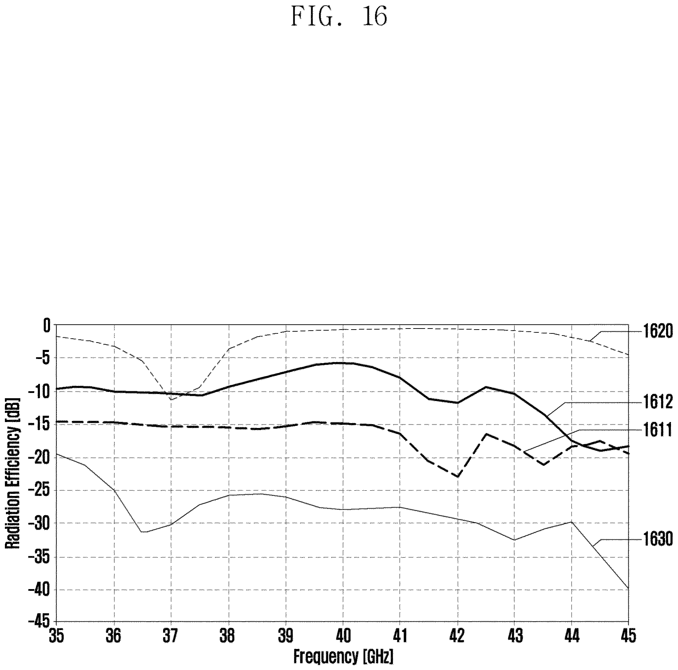

FIG. 16 is a graph depicting antenna radiation performance of the radiating structure 1201 (see FIG. 14) according to an embodiment, and antenna radiation performance of the radiating structure 1202 (see FIG. 14) according to a comparative example.

Referring to FIGS. 14 and 16, reference numeral "1611" shows antenna radiation performance when the external dielectric 1400 is adjacent to the radiating structure 1201 in which the at least one slit 1212 is formed to have a width (e.g., the width W2 in FIG. 8) of about 1 mm. Reference numeral "1612" shows the antenna radiation performance of the antenna structure 61 when the external dielectric 1400 is adjacent to the radiating structure 1201 in which the at least one slit 1212 is formed to have a width of about 2 mm. Reference numeral "1620" shows antenna radiation performance when there is no external dielectric adjacent to the radiating structure 1201 according to an embodiment. Reference numeral "1630" shows antenna radiation performance when the external dielectric 1400 is adjacent to the radiating structure 1202 according to a comparative example where the slits are omitted. When compared to the radiating structure 1202 according to the comparative example, the radiating structure 1201 according to an embodiment may ensure antenna radiation performance by allowing a part of an electromagnetic wave to be radiated to the outside through the at least one slit 1212 even when the external dielectric 1400 at least partially covers the hole structure 1211. As the width of the at least one slit 1212 is formed wider, the amount of an electromagnetic wave radiated to the outside through the at least one slit 1212 may increase. Thus, even when the external dielectric 1400 at least partially covers the hole structure 121, it is possible to have the antenna radiation performance that can reduce the difference from the antenna radiation performance in the case where there is no external dielectric adjacent to the radiating structure 1201 (reference numeral "1620").

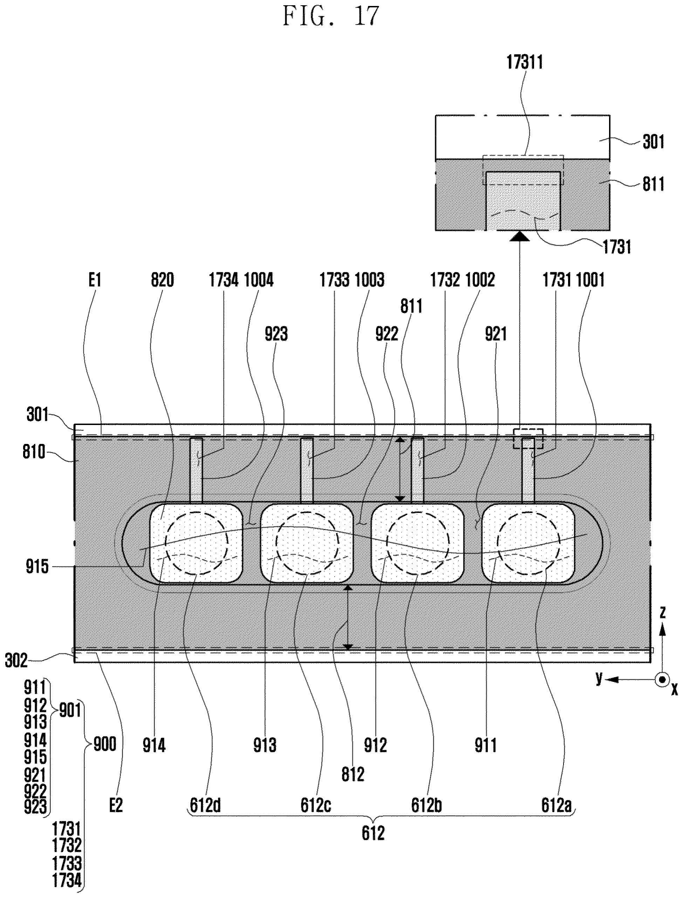

FIG. 17 is a view (e.g., a side view in the y-z plane) illustrating the electronic device 300 in another embodiment that is a variation of the embodiment of FIG. 8.

Referring to FIG. 17, a first slit 1731 may include a slit end 17311 corresponding to the first edge E1 of the lateral conductive structure 810. The slit end 17311 may be formed in a closed shape. The closed shape of the slit end 17311 may be defined or interpreted as, for example, no gap being formed due to the disposition of a conductive material (e.g., a part of the first conductive area 811). The first slit 1731 including the closed slit end 17311 may have a physical size (e.g., an electrical size or electrical length as a ratio of wavelength λ) that can ensure antenna radiation performance or reduce degradation of antenna radiation performance. In an embodiment, the first antenna element 612a may be an electrically small antenna, which is an antenna having a size much smaller than a wavelength, and, for example, may have a size that is less than or equal to a ratio (e.g., λ/10, about λ/8, or about λ/4) of a selected or designated wavelength. The electrical length of the first slit 1731, which includes the closed slit end 17311, may have an electrical length that is greater than or equal to a ratio of the selected or designated wavelength in order to reduce degradation of antenna radiation performance (or radio wave transmission/reception performance) of the first antenna element 612a operating as an electrical small antenna. For example, the electrical length of the first slit 1731 including the closed slit end 17311 may be greater than or equal to 1.1 mm, or greater than or equal to about 1 with respect to about λ/10 as a ratio of the selected or designated wavelength. A second slit 1732, a third slit 1733, or a fourth slit 1734 may be formed to be substantially the same as or similar to the first slit 1731.

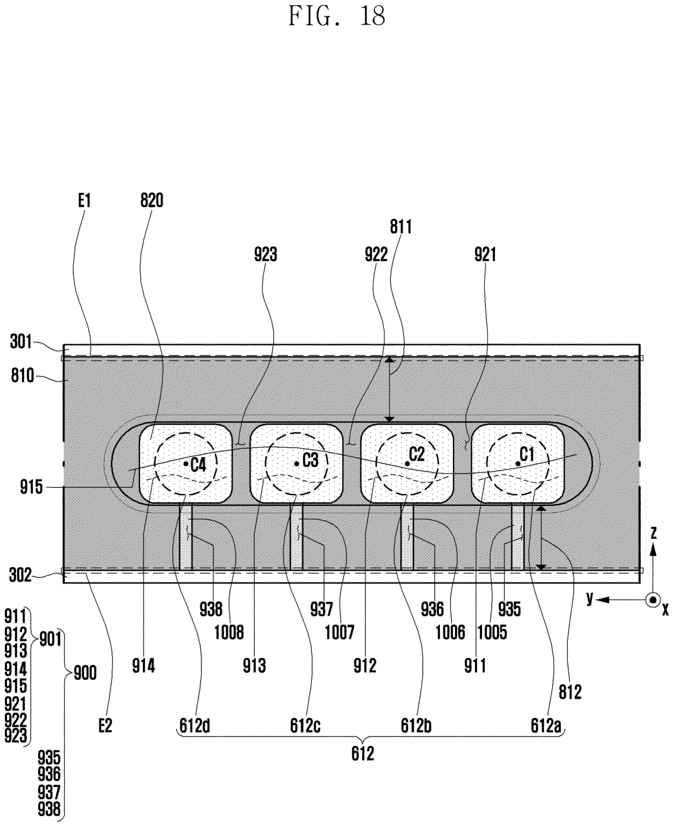

FIG. 18 is a view (a side view of the y-z plane) illustrating the electronic device 300 in another embodiment that is a variation of the embodiment of FIG. 8.

Referring to FIG. 18, the opening structure 900 may include multiple slits 935, 936, 937, and 938 formed in the second conductive area 812 of the lateral conductive structure 810. The multiple slits 935, 936, 937, and 938 may include a fifth slit 935 corresponding to the first opening 911, a sixth slit 936 corresponding to the second opening 912, a seventh slit 937 corresponding to the third opening 913, and an eighth slit 938 corresponding to the fourth opening 914. The electronic device 300 may include a fifth non-conductive member 1005 at least partially disposed in the fifth slit 935, a sixth non-conductive member 1006 at least partially disposed in the sixth slit 936, a seventh non-conductive member 1007 at least partially disposed in the seventh slit 937, and an eighth non-conductive member 1008 at least partially disposed in the eighth slit 938. The fifth non-conductive member 1005, the sixth non-conductive member 1006, the seventh non-conductive member 1007, or the eighth non-conductive member 1008 is a part of the internal non-conductive structure 820 and may be coupled to the lateral conductive structure 810.

According to various embodiments, the fifth non-conductive member 1005, the sixth non-conductive member 1006, the seventh non-conductive member 1007, or the eighth non-conductive member 1008 may be a separate member connected to the internal non-conductive structure 820, and may include a material which is the same as or different from that of the internal non-conductive structure 820.

According to an embodiment, the fifth slit 935, the sixth slit 936, the seventh slit 937, or the eighth slit 938 may include an open-shaped slit end corresponding to the second edge E2 of the lateral conductive structure 810, substantially identical to the open-shaped slit end 9311 included in the first slit 931 in the embodiment of FIG. 8.

According to various embodiments, the fifth slit 935, the sixth slit 936, the seventh slit 937, or the eighth slit 938 may include a closed slit end corresponding to the second edge E2 of the lateral conductive structure 810, substantially identical to the closed slit end 17311 included in the first slit 1731 in the embodiment of FIG. 17.

According to an embodiment, the fifth slit 935 may be aligned in the z-axis direction with the center C1 of the first antenna element 612a when viewed from above the first surface 601 of the antenna structure 61 (see FIG. 10). The sixth slit 936 may be aligned in the z-axis direction with the center C2 of the second antenna element 612b when viewed from above the first surface 601 of the antenna structure 61. The seventh slit 937 may be aligned in the z-axis direction with the center C3 of the third antenna element 612c when viewed from above the first surface 601 of the antenna structure 61. The fourth slit 934 may be aligned in the z-axis direction with the center C4 of the fourth antenna element 612d, as viewed from above the first surface 601 of the antenna structure 61.

According to various embodiments, some of the multiple slits 935, 936, 937, and 938 may be omitted. The number, position, or shape of slits included in the opening structure 900 may vary without being limited to the illustrated example.

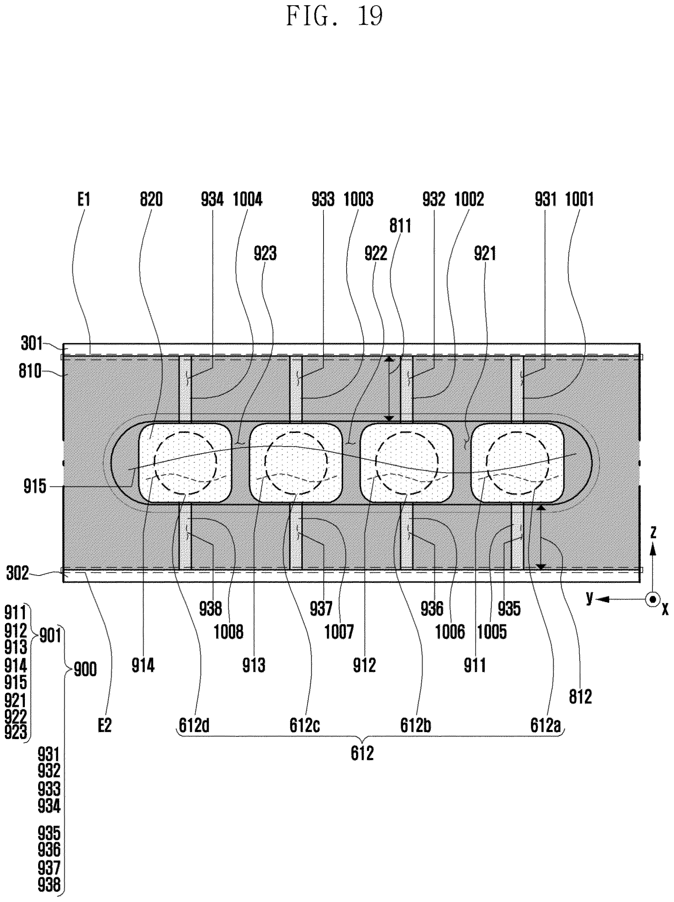

FIG. 19 a view (e.g., a side of the y-z plane) illustrating the electronic device 300 in another embodiment that is a variation of the embodiment of FIG. 8.

Referring to FIG. 19, the opening structure 900 may include multiple slits 931, 932, 933, and 934 formed in the first conductive area 811 of the lateral conductive structure 810, and multiple slits 935, 936, 937, and 938 formed in the second conductive area 812 of the lateral conductive structure 810. The first slit 931 and the fifth slit 935 may be formed to correspond to the first opening 911. The second slit 931 and the sixth slit 936 may be formed to correspond to the second opening 912. The third slit 933 and the seventh slit 937 may be formed to correspond to the third opening 913. The fourth slit 934 and the eighth slit 938 may be formed to correspond to the fourth opening 914. The electronic device 300 may include a first non-conductive member 1001 disposed in the first slit 931, a second non-conductive member 1002 disposed in the second slit 932, a third non-conductive member 1001 disposed in the third slit 933, a fourth non-conductive member 1004 disposed in the fourth slit 934, a fifth non-conductive member 1005 disposed in the fifth slit 935, a sixth non-conductive member 1006 disposed in the sixth slit 936, and a seventh non-conductive member 1007 disposed in the seventh slit 937, and/or an eighth non-conductive member 1008 disposed in the eighth slit 938.

According to an embodiment, the first slit 931 and the fifth slit 935 may be aligned in the z-axis direction with the center of the first antenna element 612a when viewed from above the first surface 601 of the antenna structure 61 (see FIG. 10). The second slit 932 and the sixth slit 936 may be aligned in the z-axis direction with the center of the second antenna element 612b when viewed from above the first surface 601 of the antenna structure 61. The third slit 933 and the seventh slit 937 may be aligned in the z-axis direction with a center of the third antenna element 612c when viewed from above the first surface 601 of the antenna structure 61. The fourth slit 934 and the eighth slit 938 may be aligned in the z-axis direction with a center of the fourth antenna element 612d when viewed from above the first surface 601 of the antenna structure 61.

According to various embodiments, the first slit 931 and the fifth slit 935 may not be aligned in the z-axis direction when viewed from above the first surface 601 of the antenna structure 61 (see FIG. 10). The second slit 932 and the sixth slit 936 may not be aligned in the z-axis direction when viewed from above the first surface 601 of the antenna structure 61. The third slit 933 and the seventh slit 937 may not be aligned in the z-axis direction when viewed from above the first surface 601 of the antenna structure 61. The fourth slit 934 and the eighth slit 938 may not be aligned in the z-axis direction when viewed from above the first surface 601 of the antenna structure 61.

According to an embodiment, the first slit 931, the second slit 932, the third slit 933, or the fourth slit 934 may include an open slit end (e.g., the slit end 9311 in FIG. 8) or a closed slit end (e.g., the slit end 17311 in FIG. 17) corresponding to the first edge E1 of the lateral conductive structure 810.

According to an embodiment, the fifth slit 935, the sixth slit 936, the seventh slit 937, or the eighth slit 938 may include an open slit end or a closed slit end corresponding to the second edge E2 of the lateral conductive structure 810.

According to various embodiments, some of the multiple slits 931, 932, 933, 934, 935, 936, 937, and 938 may be omitted. The number, position, or shape of the slits included in the opening structure 900 may vary without being limited to the illustrated example.

According to various embodiments, in the embodiment of FIG. 8, the embodiment of FIG. 17, the embodiment of FIG. 18, or the embodiment of FIG. 19, the recess 915 and the non-conductive part 502 disposed in the recess 915 (see FIG. 9) may be omitted. In this case, the lateral conductive structure 810 may be implemented in a corresponding form such that the fourth surface 1104 (see FIG. 8) provides a part of the side surface 310C (see FIG. 3) of the electronic device 300 and is seamlessly connected to the fifth side 1105 (see FIG. 8) without a substantial height difference. The part 821 (see FIG. 10) of the internal non-conductive structure 820, including a part disposed in the first opening 911, the second opening 912, the third opening 913, and/or the fourth opening 914 of the opening structure 900, may provide a part of the side surface 310C of the electronic device 300, wherein the part of the side surface 310C provided by the portion 821 of the internal non-conductive structure 820 may be seamlessly connected to the fourth surface 1104 and the fifth surface 1105 without a substantial height difference.

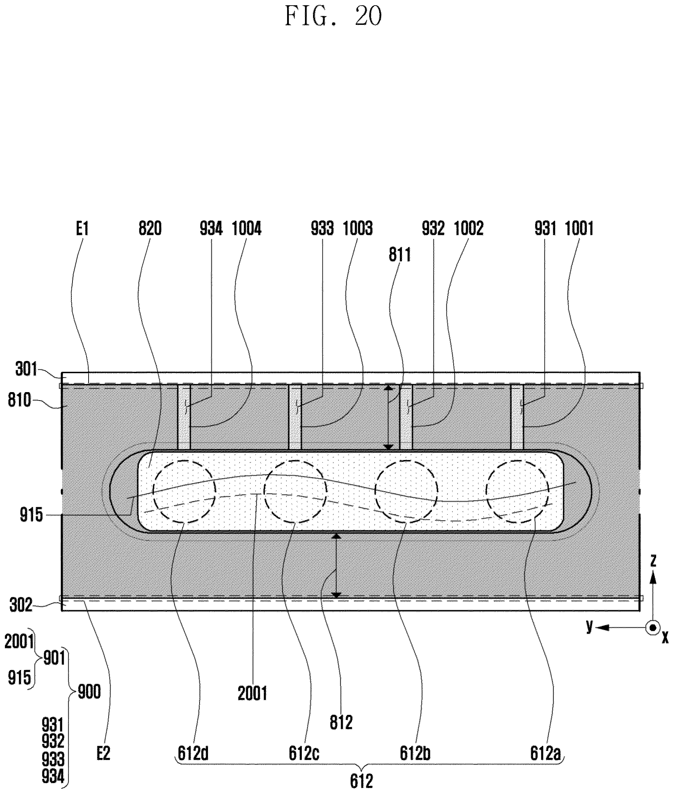

FIG. 20 is a view (a side view of the y-z plane) illustrating the electronic device 300 in another embodiment that is a variation of the embodiment of FIG. 8.

Referring to FIG. 20, compared to the embodiment of FIG. 8, a single opening 2001 may be formed to replace the first opening 911, the second opening 912, the third opening 913, and the fourth opening 914 without the first wall 921, the second wall 923, and the third wall 923.

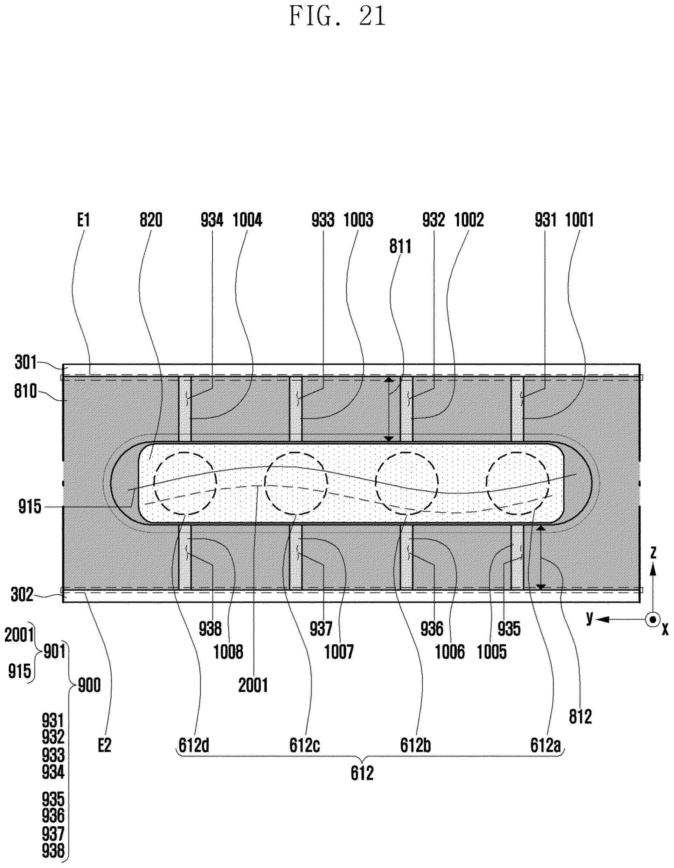

FIG. 21 is a view (a side view of the y-z plane) illustrating the electronic device 300 in another embodiment that is a variation of the embodiment of FIG. 20.

Referring to FIG. 21, compared to the embodiment of FIG. 20, a fifth slit 935, a sixth slit 936, a seventh slit 937, an eighth slit 938, a fifth non-conductive member 1005, a sixth non-conductive member 1006, a seventh non-conductive member 1007, and an eighth non-conductive member 1008 may be further implemented.

According to various embodiments, by modifying the embodiment of FIG. 21, the multiple slits 931, 932, 933, and 934 formed in the first conductive area 811 of the lateral conductive structure 810, and the multiple non-conductive members 1001, 1002, 1003, and 1004 corresponding thereto may be omitted.

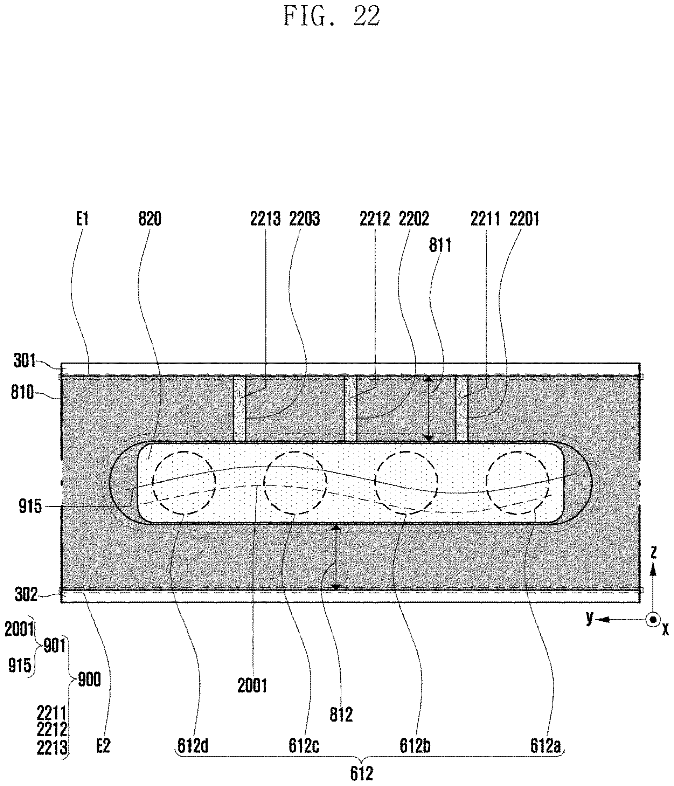

FIG. 22 is a view (a side view of the y-z plane) illustrating the electronic device 300 in another embodiment that is a variation of the embodiment of FIG. 20.

Referring to FIG. 22, compared to the embodiment of FIG. 20, a first slit 2211, a second slit 2212, a third slit 2213, a first non-conductive member 2201 disposed in the first slit 2211, a second non-conductive member 2202 disposed in the second slit 2213, a third slit 2213, and a third non-conductive member 2203 disposed in the third slit 2213 may be implemented. For example, when viewed from above the first surface 601 of the antenna structure 61 (see FIG. 10) (e.g., when viewed in the -x-axis direction), the first slit 2211 may be formed in the first conductive area 811 of the lateral conductive structure 810 while being aligned between the first antenna element 612a and the second antenna element 612b. When viewed from above the first surface 601 of the antenna structure 61, the second slit 2212 may be formed in the first conductive area 811 of the lateral conductive structure 810 while being aligned between the second antenna element 612b and the third antenna element 612c. When viewed from above the first surface 601 of the antenna structure 61, the third slit 2213 may be formed in the first conductive area 811 of the lateral conductive structure 810 while being aligned between the third antenna element 612c and the fourth antenna element 612d. The first non-conductive member 2201, the second non-conductive member 2202, or the third non-conductive member 2203 is a part of the internal non-conductive structure 820 and may be coupled to the lateral conductive structure 810.

According to various embodiments, the first non-conductive member 2201, the second non-conductive member 2202, or the third non-conductive member 2203 may be a separate member that is connected to the internal non-conductive structure 820, and may include a material which is the same as or different from that of the internal non-conductive structure 820.

According to an embodiment, the first slit 2211, the second slit 2212, or the third slit 2213 may include an open slit end (e.g., the slit end 9311 in FIG. 8) or a closed slit end (e.g., the slit end 17311 in FIG. 17) corresponding to the first edge E1 of the lateral conductive structure 810.

According to various embodiments, some of the multiple slits 2211, 2213, and 2214 may be omitted. The number, position, or shape of slits included in the opening structure 900 may vary without being limited to the illustrated example.

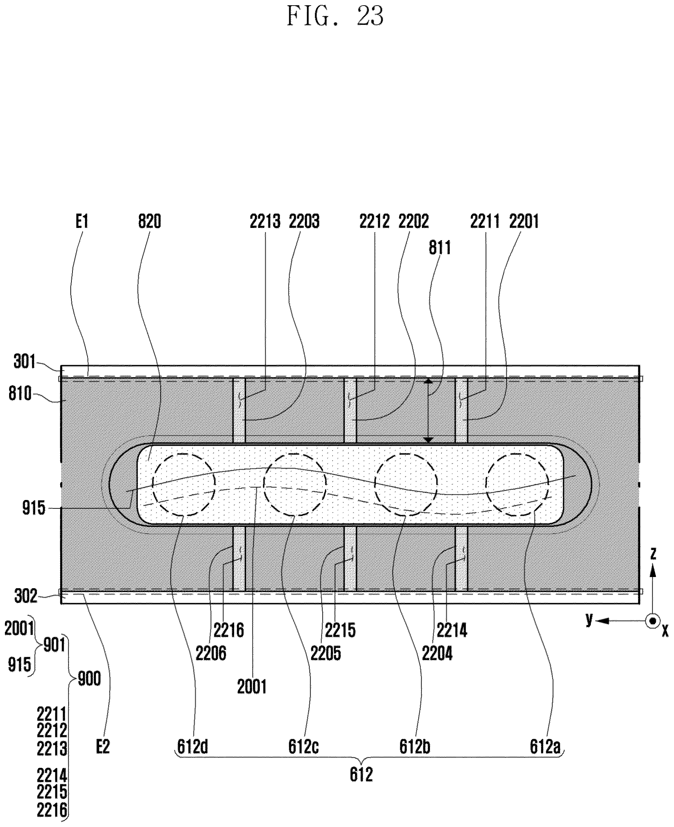

FIG. 23 is a view (a side view of the y-z plane) illustrating the electronic device 300 in another embodiment that is a variation of the embodiment of FIG. 22.

Referring to FIG. 23, compared to the embodiment of FIG. 22, a fourth slit 2214, a fifth slit 2215, a sixth slit 2216, a fourth non-conductive member 2204 disposed in the fourth slit 2214, a fifth non-conductive member 2205 disposed in the fifth slit 2215, and a sixth non-conductive member 2206 disposed in the sixth slit 2216 may be further implemented. When viewed from above the first surface 601 of the antenna structure 61 (see FIG. 10) (e.g., when viewed in the -x-axis direction), the fourth slit 2214 may be formed in the second conductive area 812 of the lateral conductive structure 810 while being aligned between the first antenna element 612a and the second antenna element 612b. When viewed from above the first surface 601 of the antenna structure 61, the fifth slit 2215 may be formed in the second conductive area 812 of the lateral conductive structure 810 while being aligned between the second antenna element 612b and the third antenna element 612c. When viewed from above the first surface 601 of the antenna structure 61, the sixth slit 2216 may be formed in the second conductive area 812 of the lateral conductive structure 810 while being aligned between the third antenna element 612c and the fourth antenna element 612d. The fourth non-conductive member 2204, the fifth non-conductive member 2205, or the sixth non-conductive member 2206 is a part of the internal non-conductive structure 820 and may be coupled to the lateral conductive structure 810.

According to various embodiments, the fourth non-conductive member 2204, the fifth non-conductive member 2205, or the sixth non-conductive member 2206 may be a separate member that is connected to the internal non-conductive structure 820, and may include a material which is the same as or different from that of the internal non-conductive structure 820.

According to an embodiment, the first slit 2211 and the fourth slit 2214 may be aligned in the z-axis direction when viewed from above the first surface 601 of the antenna structure 61 (see FIG. 10). The second slit 2212 and the fifth slit 2215 may be aligned in the z-axis direction, when viewed from above the first surface 601 of the antenna structure 61. The third slit 2212 and the sixth slit 2216 may be aligned in the z-axis direction when viewed from above the first surface 601 of the antenna structure 61.

According to various embodiments, the first slit 2211 and the fourth slit 2214 may not be aligned in the z-axis direction, when viewed from above the first surface 601 of the antenna structure 61 (see FIG. 10). The second slit 2212 and the fifth slit 2215 may not be aligned in the z-axis direction when viewed from above the first surface 601 of the antenna structure 61. The third slit 2212 and the sixth slit 2216 may not be aligned in the z-axis direction when viewed from above the first surface 601 of the antenna structure 61.

According to an embodiment, the first slit 2211, the second slit 2212, or the third slit 2213 may include an open slit end (e.g., the slit end 9311 in FIG. 8) or a closed slit end (e.g., the slit end 17311 in FIG. 17) corresponding to the first edge E1 of the lateral conductive structure 810.

According to an embodiment, the fourth slit 2214, the fifth slit 2215, or the sixth slit 2216 may include an open slit end or a closed slit end corresponding to the second edge E2 of the lateral conductive structure 810.

According to various embodiments, by modifying the embodiment of FIG. 23, the multiple slits 2211, 2212, and 2213 formed in the first conductive area 811 of the lateral conductive structure 810, and the multiple non-conductive members 2201, 2202, and 2203 corresponding thereto may be omitted.

According to various embodiments, some of the multiple slits 2211, 2212, 2213, 2214, 2215, and 2216 may be omitted. The number, position, or shape of slits included in the opening structure 900 may vary without being limited to the illustrated example.

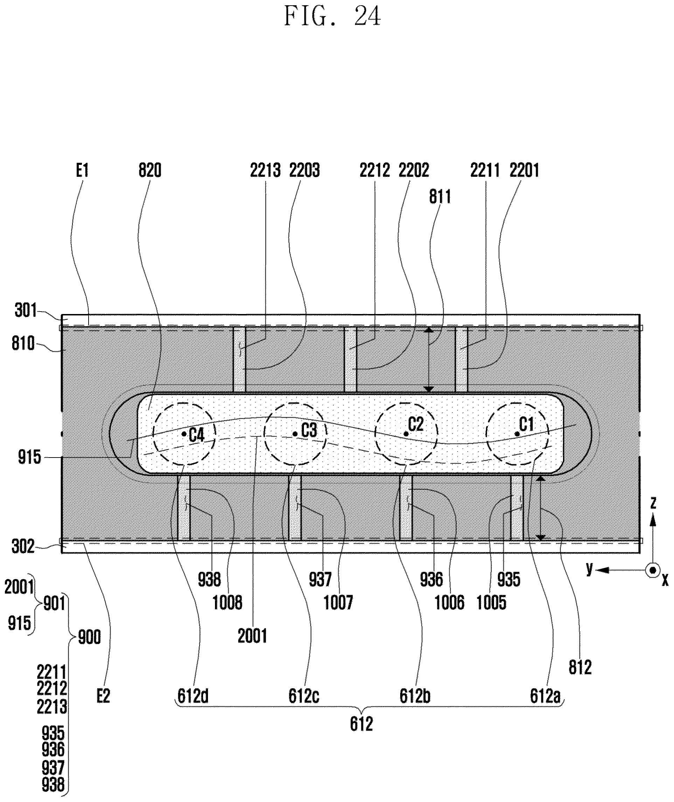

FIG. 24 is a view (a side view of the y-z plane) illustrating the electronic device 300 in another embodiment that is a variation of the embodiment of FIG. 22.

Referring to FIG. 24, compared to the embodiment of FIG. 22, a fifth slit 935, a sixth slit 936, a seventh slit 937, an eighth slit 938, a fifth non-conductive member 1005, a sixth non-conductive member 1006, a seventh non-conductive member 1007, and an eighth non-conductive member 1008 may be further implemented.

According to an embodiment, when viewed from above the first surface 601 of the antenna structure 61 (see FIG. 10) (e.g., when viewed in the -x-axis direction), the first slit 2211 may not be aligned in the z-axis direction with the center C1 of the first antenna element 612a. When viewed from above the first surface 601 of the antenna structure 61, the second slit 2212 may not be aligned in the z-axis direction with the center C2 of the second antenna element 612b. When viewed from above the first surface 601 of the antenna structure 61, the third slit 2213 may not be aligned in the z-axis direction with the center C3 of the third antenna element 612c.

According to an embodiment, when viewed from above the first surface 601 of the antenna structure 61 (see FIG. 10) (e.g., when viewed in the -x-axis direction), the fifth slit 935 may be aligned in the z-axis direction with the center C1 of the first antenna element 612a. When viewed from above the first surface 601 of the antenna structure 61, the sixth slit 936 may be aligned in the z-axis direction with the center C2 of the second antenna element 612b. When viewed from above the first surface 601 of the antenna structure 61, the seventh slit 937 may be aligned in the z-axis direction with the center C3 of the third antenna element 612c. When viewed from above the first surface 601 of the antenna structure 61, the eighth slit 938 may be aligned in the z-axis direction with the center C4 of the fourth antenna element 612d.

According to an embodiment, the first slit 2211, the second slit 2212, or the third slit 2213 may include an open slit end (e.g., the slit end 9311 in FIG. 8) or a closed slit end (e.g., the slit end 17311 in FIG. 17) corresponding to the first edge E1 of the lateral conductive structure 810.

According to an embodiment, the fifth slit 935, the sixth slit 936, the seventh slit 937, or the eighth slit 938 may include an open slit end or a closed slit end corresponding to the second edge E2 of the lateral conductive structure 810.

According to various embodiments, some of the multiple slits 2211, 2212, 2213, 935, 936, 937, and 938 may be omitted. The number, position, or shape of slits included in the opening structure 900 may vary without being limited to the illustrated example.

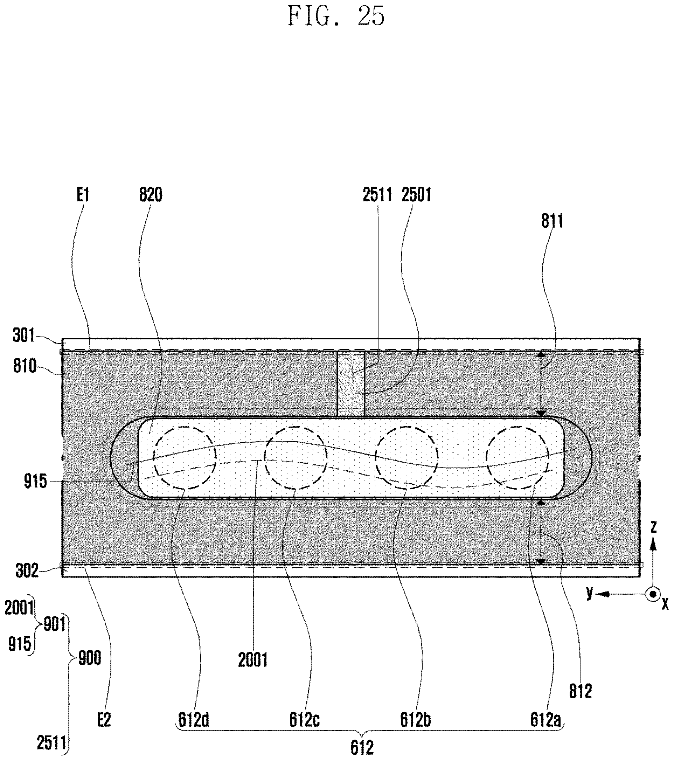

FIG. 25 is a view (a side view of the y-z plane) illustrating the electronic device 300 in another embodiment that is a variation of the embodiment of FIG. 22.

Referring to FIG. 25, compared to the embodiment of FIG. 22, the opening structure 900 may include one first slit 2511 formed in the first conductive area 811 of the lateral conductive structure 810. The electronic device 300 may include a non-conductive member 2501 at least partially disposed in the first slit 2511. The non-conductive member 2501 is a part of the internal non-conductive structure 820 and may be coupled to the lateral conductive structure 810.

According to various embodiments, the non-conductive member 2501 may be a separate member that is connected to the internal non-conductive structure 820, and may include a material which is the same as or different from that of the internal non-conductive structure 820.

According to an embodiment, when viewed from above the first surface 601 of the antenna structure 61 (e.g., when viewed in the -x-axis direction), the first slit 2511 may be formed in the first conductive area 811 of the lateral conductive structure 810 while being aligned between the second antenna element 612b and the third antenna element 612c.

According to an embodiment, the first slit 2511 may include an open slit end (e.g., the slit end 9311 in FIG. 8) or the closed slit end (e.g., the slit end 17311 in FIG. 17) corresponding to the first edge E1 of the lateral conductive structure 810.

According to various embodiments, when viewed from above the first surface 601 of the antenna structure 61 (e.g., when viewed in the -x-axis direction), the first slit 2511 may be formed in the first conductive area 811 of the lateral conductive structure 810 while being aligned between the first antenna element 612a and the second antenna element 612b.

According to various embodiments, when viewed from above the first surface 601 of the antenna structure 61 (e.g., when viewed in the -x-axis direction), the first slit 2511 may be formed in the first conductive area 811 of the lateral conductive structure 810 while being aligned between the third antenna element 612c and the fourth antenna element 612d.

According to various embodiments, the first slit 2511 may be formed with a width that extends further in the +y-axis direction or in the -y-axis direction, without being limited to the illustrated example.

According to various embodiments, the number, position, or shape of slits included in the opening structure 900 may vary without being limited to the illustrated example.

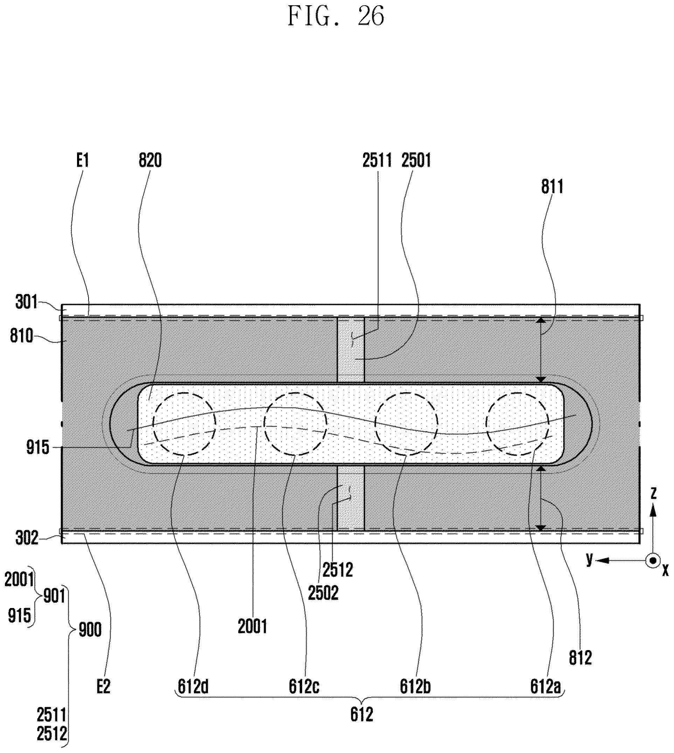

FIG. 26 is a view (a side view of the y-z plane) illustrating the electronic device 300 in another embodiment that is a variation of the embodiment of FIG. 25.

Referring to FIG. 26, compared to the embodiment of FIG. 25, the opening structure 900 may further include a fifth slit 2512 formed in the second conductive area 811 of the lateral conductive structure 810. The electronic device 300 may further include another non-conductive member 2502 at least partially disposed in the fifth slit 2512. The non-conductive member 2502 is a part of the internal non-conductive structure 820 and may be coupled to the lateral conductive structure 810.

According to various embodiments, the non-conductive member 2502 may be a separate member which is connected to the internal non-conductive structure 820, and may include a material that is the same as or different from that of the internal non-conductive structure 820.

According to an embodiment, when viewed from above the first surface 601 of the antenna structure 61 (e.g., when viewed in the -x-axis direction), the fifth slit 2512 may be formed in the second conductive area 812 of the lateral conductive structure 810 while being aligned between the second antenna element 612b and the third antenna element 612c.

According to an embodiment, the first slit 2511 formed in the first conductive area 811 and the fifth slit 2512 formed in the second conductive area 812 may be aligned in the z-axis direction. For example, the first slit 2511 formed in the first conductive area 811 and the fifth slit 2512 formed in the second conductive area 812 may be aligned in the z-axis direction, and may have substantially the same width in the y-axis direction when viewed from above the first surface 601 of the antenna structure 61 (e.g., when viewed in the -x-axis direction).

According to an embodiment, the fifth slit 2512 may include an open slit end or a closed slit end corresponding to the second edge E2 of the lateral conductive structure 810.

According to various embodiments, when viewed from above the first surface 601 of the antenna structure 61 (e.g., when viewed in the -x-axis direction), the fifth slit 2512 may be formed in the second conductive area 812 of the lateral conductive structure 810 while being aligned between the first antenna element 612a and the second antenna element 612b.

According to various embodiments, when viewed from above the first surface 601 of the antenna structure 61 (e.g., when viewed in the -x-axis direction), the fifth slit 2512 may be formed in the second conductive area 811 of the lateral conductive structure 810 while being aligned between the third antenna element 612c and the fourth antenna element 612d.

According to various embodiments, when viewed from above the first surface 601 of the antenna structure 61 (e.g., when viewed in the -x-axis direction), the first slit 2511 formed in the first conductive area 811 and the fifth slit 2512 formed in the second conductive area 812 may not be aligned in the z-axis direction.

According to various embodiments, when viewed from above the first surface 601 of the antenna structure 61 (e.g., when viewed in the -x-axis direction), the width of the first slit 2511 formed in the first conductive area 811 and extending in the y-axis direction may be different from the width of the fifth slit 2512 formed in the second conductive area 812 and extending in the y-axis direction.

According to various embodiments, the number, position, or shape of slits included in the opening structure 900 may vary without being limited to the illustrated example.

According to various embodiments, in the embodiment of FIG. 20, the embodiment of FIG. 21, the embodiment of FIG. 22, the embodiment of FIG. 23, the embodiment of FIG. 24, the embodiment of FIG. 25, or the embodiment of FIG. 26, the recess 915 and the non-conductive part 502 disposed in the recess 915 (see FIG. 9) may be omitted. In this case, the lateral conductive structure 810 may be implemented in a corresponding form so that the fourth surface 1104 (see FIG. 8) provides a part of the side surface 310C (see FIG. 3) of the electronic device 300 and is seamlessly connected to the fifth surface 1105 (see FIG. 8) without a substantial height difference. The part of the internal non-conductive structure 820, including a part disposed in the opening 2001 of the opening structure 900, may provide a part of the side surface 310C of the electronic device 300 that is seamlessly connected to the fourth surface 1104 and the fifth surface 1105 without a substantial height difference.

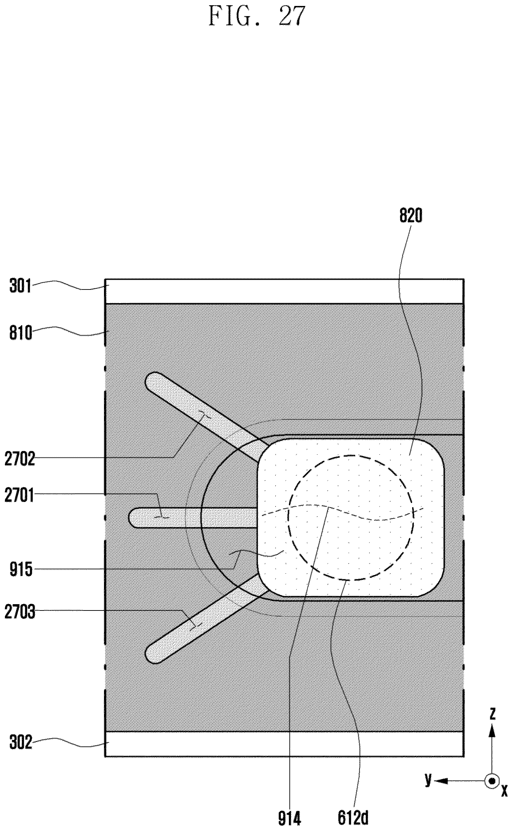

FIG. 27 is a view (a side view of the y-z plane) illustrating the electronic device 300 according to various embodiments.

Referring to FIG. 27, the lateral conductive structure 810 may include a first slit 2701, a second slit 2702, and/or a third slit 2703 spatially connected to the fourth opening 914. When viewed from above the first surface 601 of the antenna structure 61 (see FIG. 10) (e.g., when viewed in the -x-axis direction), the first slit 2701 may be formed to extend from the fourth opening 914 in the +y-axis direction. When viewed from above the first surface 601 of the antenna structure 61, the second slit 2702 may be formed to extend from the fourth opening 914 in a direction between the +y-axis direction and the +z-axis direction. When viewed from above the first surface 601 of the antenna structure 61, the third slit 2703 may be formed to extend from the fourth opening 914 in a direction between the +y-axis direction and the -z-axis direction. A non-conductive member may be disposed in the first slit 2701, the second slit 2702, and the third slit 2703. The non-conductive member is a part of the internal non-conductive structure 820 and may be coupled to the lateral conductive structure 810.

According to various embodiments, the non-conductive member may be a separate member that is connected to the internal non-conductive structure 820, and may include a material which is the same as or different from that of the internal non-conductive structure 820.

According to various embodiments, some of the first slit 2701, the second slit 2702, and the third slit 2703 may be omitted.

According to various embodiments, although not illustrated, like at least one slit (e.g., the first slit 2701, the second slit 2702, or the third slit 2703) for the fourth opening 914, there may be at least one slit extending from the first opening 911, the second opening 912, or the third opening 913 in FIG. 8, and a non-conductive member disposed in the at least one slit.

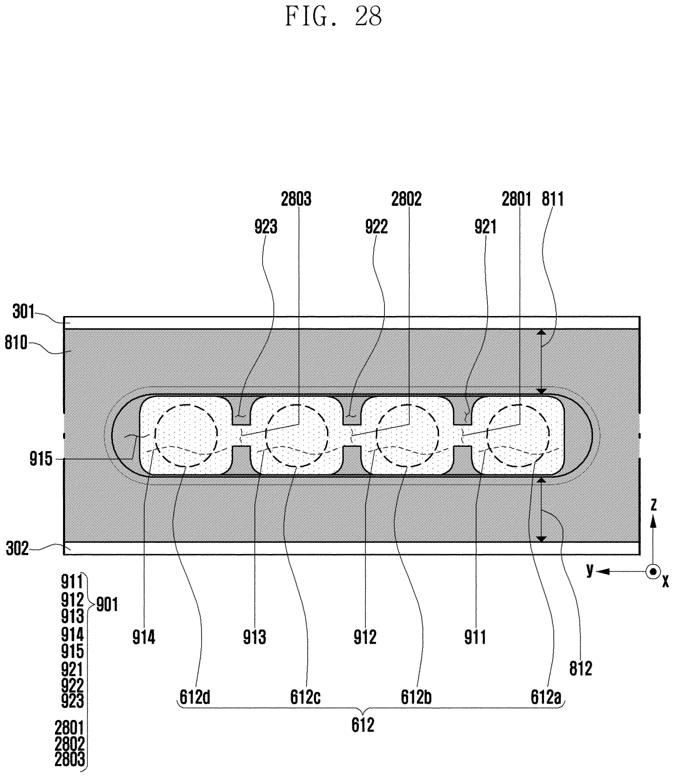

FIG. 28 is a view (a side view of the y-z plane) illustrating the electronic device 300 according to various embodiments.

Referring to FIG. 28, the hole structure 901 corresponding to the antenna array 612 in the lateral conductive structure 810 may include a first opening 911, a second opening 912, a third opening 913, a fourth opening 914, a first wall 921, a second wall 922, a third wall 923, a first slit 2801, a second slit 2802, and/or a third slit 2802. The first slit 2801 may be formed in the first wall 921. The second slit 2802 may be formed in the second wall 922. The third slit 2803 may be formed in the third wall 923. The first slit 2801 may be spatially connected to the first opening 911 and the second opening 912. The second slit 2802 may be spatially connected to the second opening 912 and the third opening 913. The third slit 273 may be spatially connected to the third opening 913 and the fourth opening 914.

According to an embodiment, even when an external dielectric at least partially covers the first opening 911 of the hole structure 901, as in a situation where the electronic device 300 is held in a user's hand, a part of an electromagnetic wave from the first antenna element 612a may bel radiated (or transmitted) outside the electronic device 300 through the first slit 2801. Even when an external dielectric at least partially covers the first opening 911 of the hole structure 901, as in a situation where the electronic device 300 is held in the user's hand, an electromagnetic wave from the outside of the electronic device 300 may reach the first antenna element 612a through the first slit 2801.

According to an embodiment, even when an external dielectric at least partially covers the second opening 912 of the hole structure 901 as in a situation where the electronic device 300 is held in the user's hand, a part of an electromagnetic wave from the second antenna element 612b may be radiated (or transmitted) outside the electronic device 300 through the first slit 2801 or the second slit 2802. Even when an external dielectric at least partially covers the second opening 912 of the hole structure 901, as in a situation where the electronic device 300 is held in the user's hand, an electromagnetic wave from the outside of the electronic device 300 may reach the second antenna element 612b through the first slit 2801 or the second slit 2802.

According to an embodiment, even when an external dielectric at least partially covers the third opening 913 of the hole structure 901, as in a situation where the electronic device 300 is held in the user's hand, a part of an electromagnetic wave from the third antenna element 612c may be radiated (or transmitted) outside the electronic device 300 through the second slit 2802 or the third slit 2803. Even when an external dielectric at least partially covers the third opening 913 of the hole structure 901, as in a situation where the electronic device 300 is held in the user's hand, an electromagnetic wave from the outside of the electronic device 300 may reach the third antenna element 612c through the second slit 2802 or the third slit 2803.

According to an embodiment, even when an external dielectric at least partially covers the fourth opening 914 of the hole structure 901, such as in a situation where the electronic device 300 is held in the user's hand, a part of an electromagnetic wave from the fourth antenna element 612d may bel radiated (or transmitted) outside the electronic device 300 through the third slit 2803. Even when an external dielectric at least partially covers the fourth opening 914 of the hole structure 901, such as in a situation where the electronic device 300 is held in a user's hand, an electromagnetic wave from the outside of the electronic device 300 may reach the third antenna element 612c through the third slit 2803.

According to various embodiments, unlike in the illustrated example, the first slit 2801 may extend further so that the first wall 921 is substantially absent. In another example, unlike the illustrated example, the second slit 2802 may extend further so that the second wall 922 is substantially absent. In another example, unlike the illustrated example, the third slit 2803 may extend further so that the third wall 923 is substantially absent.

According to various embodiments, some of the first slit 2801, the second slit 2802, and the third slit 2803 may be omitted.

According to various embodiments, in the embodiment of FIG. 28, the recess 915 and the non-conductive part 502 (see FIG. 9) disposed in the recess 915 may be omitted. In this case, the lateral conductive structure 810 may be implemented in a corresponding form such that the fourth surface 1104 (see FIG. 8) provides a part of the side surface 310C (see FIG. 3) of the electronic device 300 and is seamlessly connected to the fifth surface 1105 (see FIG. 8) without a substantial height difference. A part of the internal non-conductive structure 820, including parts disposed in the first opening 911, the second opening 912, the third opening 913, the fourth opening 914, the first slit 2801, the second slit 2802, and the third slit 2802, may provide a part of the side surface 310C of the electronic device 300 that is seamlessly connected to the fourth surface 1104 and the fifth surface 1105 without a substantial height difference.

According to various embodiments, it is possible to implement the opening structure 900 according to the embodiment of FIG. 8, the opening structure 900 according to the embodiment of FIG. 17, the opening structure 900 according to the embodiment of FIG. 18, the opening structure 900 according to the embodiment of FIG. 19, the opening structure 900 according to the embodiment of FIG. 20, the opening structure 900 according to the embodiment of FIG. 21, the opening structure 900 according to the embodiment of FIG. 22, the opening structure 900 according to the embodiment of FIG. 23, the opening structure 900 according to the embodiment of FIG. 24, the opening structure 900 according to the embodiment of FIG. 25, the opening structure 900 according to the embodiment of FIG. 26, the slit according to the embodiment of FIG. 27, and the hole structure 901 according to the embodiment of FIG. 28.

According to an embodiment, at least a part of the lateral conductive structure 810 according to the embodiment of FIGS. 8, 17, 18, 19, 20, 21, 22, 23, 24, 25, 26, 27, or 28 may be electrically connected to a wireless communication circuit (e.g., the wireless communication module 192 in FIG. 1) to operate as an antenna radiator. The at least part of the lateral conductive structure 810 may include a feeding point (or a feeder) electrically connected to the wireless communication circuit and a ground point (or a grounding part) electrically connected to a ground of the electronic device 300 (e.g., a ground structure including a ground plane included on the first printed circuit board 541 in FIG. 5 and a ground plane included on the second printed circuit board 551 in FIG. 5). When the wireless communication circuit supplies a radiation current to the feeding point, the at least part of the lateral conductive structure 810 may form a signal path between the feeding point and the ground point. The at least part of the lateral conductive structure 810 may form an electrical length (electrical path) (e.g., a length represented by a ratio of wavelengths) corresponding to the signal path to operate as an antenna radiator having a resonant frequency corresponding to the electrical length.

The opening structure 900 according to the embodiment of FIG. 8 may be implemented as at least a part of the lateral conductive structure 810 which is an antenna radiator. At least some of the hole structure 901 and/or the multiple slits 931, 932, 933, and 934 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 17 may be implemented as at least a part of the lateral conductive structure 810 which is an antenna radiator. At least some of the hole structure 901 and/or the multiple slits 1731, 1732, 1733, and 1734 may contribute to adjusting an electrical length or a signal path for the part of the lateral conductive structure 810 intended to be implemented as the antenna radiator, thereby ensuring the antenna radiation performance thereof.

The opening structure 900 according to the embodiment of FIG. 18 may be implemented as at least a part of the lateral conductive structure 810 which is an antenna radiator. At least some of the hole structure 901 and/or the multiple slits 935, 936, 937, and 938 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 19 may be implemented as at least a part of the lateral conductive structure 810 which is an antenna radiator. At least some of the hole structure 901 and/or the multiple slits 931, 932, 933, 934, 935, 936, 937, and 938 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 20 may be implemented as at least a part of the lateral conductive structure 810 which is an antenna radiator. At least some of the hole structure 901 and/or the multiple slits 931, 932, 933, 934 may contribute to adjusting an electrical length or a signal path for the part of the lateral conductive structure 810 intended to be implemented as the antenna radiator, thereby securing the antenna radiation performance thereof.

The opening structure 900, according to the embodiment of FIG. 21, may be implemented as at least a part of the lateral conductive structure 810 which is an antenna radiator. At least some of the hole structure 901 and/or the multiple slits 931, 932, 933, 934, 935, 936, 937, and 938 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 22 may be implemented as at least a part of the lateral conductive structure 810 which is an antenna radiator. At least some of the hole structure 901 and/or the multiple slits 2211, 2212, and 2213 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 23 may be implemented as at least a part of the lateral conductive structure 810 which is an antenna radiator. At least some of the hole structure 901 and/or the multiple slits 2211, 2212, 2213, 2214, 2215, and 2216 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 24 may be implemented as at least a part of the lateral conductive structure 810 which is an antenna radiator. At least some of the hole structure 901 and/or the multiple slits 2211, 2212, 2213, 2214, 935, 936, 937, and 938 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 25 may be implemented as at least a part of the lateral conductive structure 810 which is an antenna radiator. At least some of the hole structure 901 and/or the first slit 2511 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 26 may be implemented as at least a part of the lateral conductive structure 810 which is an antenna radiator. At least some of the hole structure 901 and/or the multiple slits 2511 and 2512 may contribute to adjusting an electrical length or a signal path for the part of the lateral conductive structure 810 intended to be implemented as the antenna radiator, thereby securing the antenna radiation performance thereof.

The opening structure 900 according to the embodiment of FIG. 27 may be implemented as at least a part of the lateral conductive structure 810 which is an antenna radiator. At least some of the hole structure 901 and/or the multiple slits 2701, 2702, and 2703 may contribute to adjusting an electrical length or a signal path for the part of the lateral conductive structure 810 intended to be implemented as the antenna radiator, thereby securing the antenna radiation performance thereof.

The hole structure 901 according to the embodiment of FIG. 28 may be implemented as at least a part of the lateral conductive structure 810 which is an antenna radiator. At least a part of the hole structure 901 may contribute to adjusting an electrical length or a signal path for the part of the lateral conductive structure 810 intended to be implemented as the antenna radiator, thereby securing the antenna radiation performance thereof.

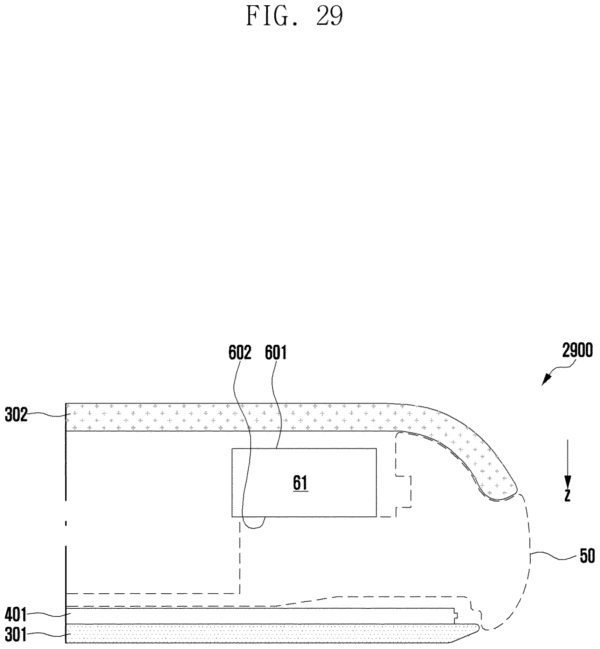

FIG. 29 is a cross-sectional view 2900 of the electronic device 300 according to an embodiment.

Referring to FIG. 29, the electronic device 300 may include the front plate 301, the rear plate 302, the front case 50, the display module (or display) 401, and/or the antenna structure 61.

According to an embodiment, the antenna structure 61 may be included in the second antenna module 592 in FIG. 5, and may be disposed in the front case 50. The antenna structure 61 may be coupled to the first support member 510 (see FIG. 5) of the front case 50 using bonding, including adhesive members, or mechanical fastening, such as screw fastening.

According to various embodiments, the antenna structure 61 may be connected to the first support member 510 using a separate support member, such as in FIG. 10, where the antenna structure 61 is connected to the first support member 510 using the fourth support member 1110.

According to various embodiments, the antenna structure 61 may be disposed on the first printed circuit board 541 or the second printed circuit board 551.

According to an embodiment, the antenna structure 61 may be positioned in the electronic device 300 so as to correspond to the rear plate 302. The first surface 601 of the antenna structure 61 may substantially face the rear plate 302. When viewed from above the first surface 601 of the antenna structure 61 (e.g., when viewed in the -x-axis direction), the antenna array 612 (see FIG. 6) of the antenna structure 61 may overlap the rear plate 302. When the communication circuit 62 (see FIG. 6) provides an electromagnetic signal to the antenna structure 61, the electromagnetic signal provided by the communication circuit 62 may be transmitted to the outside of the electronic device 300 by passing through the rear plate 302 via the antenna array 612. The antenna array 612 of the second antenna module 592 may receive an electromagnetic signal passing through the rear plate 302 from the outside of the electronic device 300. The antenna structure 61 may form a beam pattern for coverage that corresponds to a direction toward the rear plate 302 (e.g., the -z-axis direction), for example.

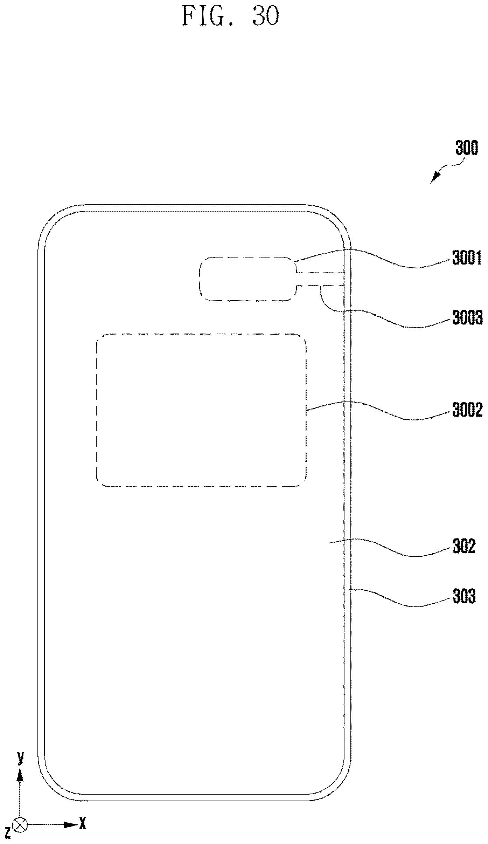

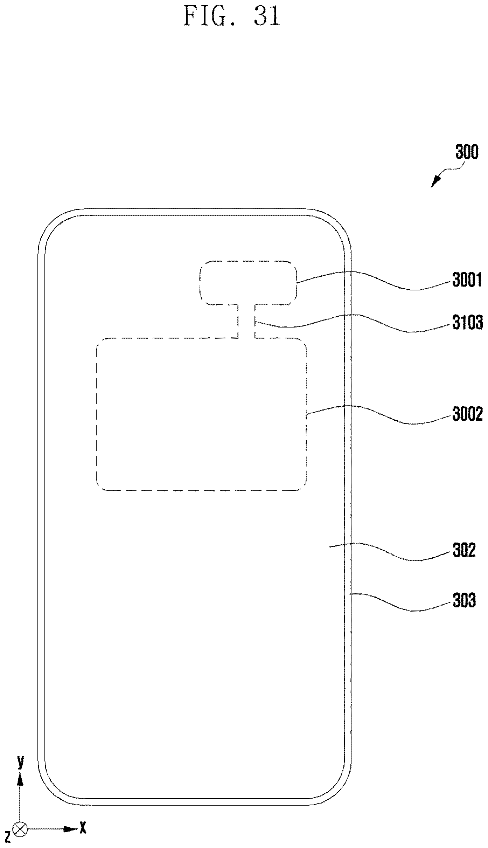

FIG. 30 is a view (e.g., an x-y plan view) illustrating the electronic device 300 according to an embodiment. FIG. 31 is a view (e.g., an x-y plan view) illustrating the electronic device 300 according to another embodiment.

Referring to FIG. 30, the rear plate 302 may include a first opening 3001 that overlaps the antenna structure 61 of the second antenna module 592 when viewed from above the rear plate 302 (e.g., when viewed in the +z-axis direction). The first opening 3001 may be aligned with and overlap the first surface 61 (see FIG. 29) of the antenna structure 61. The first opening 3001 may be aligned with and overlap the first surface 61 (see FIG. 29) of the antenna structure 61. The rear plate 302 may include a second opening 3002 that overlaps the second antenna structure 582 (see FIG. 5) when viewed from above the rear plate 302. The rear plate 302 may include a slit 3003 extending from the first area 3001 to the edge of the rear plate 302, which forms a boundary with a lateral member 303. The slit 3003 may include an open slit end, such as the open slit end 9311 included in the first slit 931 in the embodiment of FIG. 8. In various embodiments, the slit 3003 may include a closed slit end, such as the closed slit end 17311 included in the first slit 1731 in the embodiment of FIG. 17. The rear plate 302 may include a first non-conductive part disposed in the first opening 3001 and the slit 3003 to form a part of the rear surface 310B of the electronic device 300. The rear plate 302 may include a second non-conductive part disposed in the second opening 3002 to form a part of the rear surface 310B of the electronic device 300. The first opening 3001, the slit 3003, and the first non-conductive portion may be a first RF window area corresponding to the antenna structure 61 of the rear plate 302. The first non-conductive portion may include a non-conductive material having a permittivity that can reduce degradation of the antenna radiation performance of the antenna structure 61. The second opening 3002 and the second non-conductive portion may be a second RF window area corresponding to the second antenna structure 582 of the back plate 302. The second non-conductive portion may have a non-conductive material with a permittivity that can reduce degradation of the antenna radiation performance of the second antenna structure 582. The non-conductive material included in the first non-conductive portion may be the same as or different from the non-conductive material included in the second non-conductive portion. An area in the rear plate 302 other than the first opening 3001, the second opening 3002, and the slit 3003 may be formed as a conductive area formed of metal material.

According to various embodiments, multiple openings may be included in place of the second opening 3001, and the multiple openings may be aligned one-to-one with, for example, the multiple antenna elements 612a, 612b, 612c, and 612d (see FIG. 6) included in the antenna structure 61. As in the embodiment of FIG. 28, the slit 3103 may be formed in a wall between two neighboring openings among the multiple openings.

Referring to FIG. 31, when compared to the embodiment of FIG. 31, a slit 3103 may be formed to spatially connect the first opening 3001 to the second opening 3002.

According to an embodiment, the slit 3003 according to the embodiment of FIG. 30 or the slit 3103 according to the embodiment of FIG. 31 may allow some of the electromagnetic waves from the antenna structure 61 to be radiated (or transmitted) to the outside of the electronic device 300 through the slit 3003 according to the embodiment of FIG. 30 or the slit 3103 according to the embodiment of FIG. 31, even when an external dielectric at least partially covers the first opening 3001 of the rear plate 302, such as in a situation where the electronic device 300 is held in the hand. Even when an external dielectric at least partially covers the first opening 3001 of the rear plate 302, such as in a situation where the electronic device 300 is held in the hand, an electromagnetic wave from the outside of the electronic device 300 may reach the antenna structure 61 through the slits 3003 according to the embodiment of FIG. 30 or the slits 3103 according to the embodiment of FIG. 31. Without being limited to the slits 3003 according to the embodiment of FIG. 30 or the slits 3103 according to the embodiment of FIG. 31, the number, position, or shape of slits may vary without being limited to the illustrated examples.

According to an example embodiment of the disclosure, an electronic device (e.g., the electronic device 300 in FIG. 3) may include a housing (e.g., the housing 310 in FIG. 3) including a conductive area (e.g., the lateral conductive structure 810 in FIG. 8) that form an exterior of the electronic device. The electronic device may include an antenna structure (e.g., the antenna structure 61 in FIG. 10) positioned in an inner space of the housing. The antenna structure may include a printed circuit board (e.g., the printed circuit board 611 in FIG. 6). The printed circuit board may include a first surface (e.g., the first surface 601 in FIG. 10) and a second surface (e.g., the second surface 602 in FIG. 10) facing in an opposite direction to the first surface. The first surface may face at least one opening (e.g., the multiple openings 911, 912, 913, and 914 in FIG. 8) formed in the conductive area and corresponding to the antenna structure. The antenna structure may include at least one antenna element (e.g., the multiple antenna elements 612a, 612b, 612c, and 612d in FIG. 8) positioned on the first surface or positioned in the printed circuit board and closer to the first surface than to the second surface. The conductive area may include at least one slit (e.g., the multiple slits 931, 932, 933, and 934 in FIG. 8) extending from the at least one opening.

According to an example embodiment of the disclosure, the at least one slit (e.g., the first slit 931, the second slit 932, the third slit 933, or the fourth slit 934 in FIG. 8) may include an open slit end (e.g., the slit end 9311 in FIG. 8) formed at an edge (e.g., the first edge E1 or the second edge E2 in FIG. 8) of the conductive area (e.g., the lateral conductive structure 810 in FIG. 8).

According to an example embodiment of the disclosure, the at least one slit (e.g., the first slit 1731, the second slit 1732, the third slit 1733, or the fourth slit 1734 in FIG. 17) may include a closed slit end (e.g., the slit end 17311 in FIG. 17) formed at an edge (e.g., the first edge E1 or the second edge E2 in FIG. 17) of the conductive area (e.g., the lateral conductive structure 810 in FIG. 17).

According to an example embodiment of the disclosure, the at least one antenna element may include multiple antenna elements (e.g., the multiple antenna elements 612a, 612b, 612c, and 612d in FIG. 8). The at least one opening may include multiple openings (e.g., the multiple openings 911, 912, 913, and 914 in FIG. 8) which overlap and are aligned one-to-one with the multiple antenna elements.

According to an example embodiment of the disclosure, the at least one antenna element may include multiple antenna elements (e.g., the multiple antenna elements 612a, 612b, 612c, and 612d in FIG. 8). The at least one opening may be a single opening (e.g., the opening 2001 in FIG. 20) overlapping the multiple antenna elements.

According to an example embodiment of the disclosure, the housing may include a front plate (e.g., the front plate 301 in FIG. 5) at least partially forming a front surface of the electronic device, a rear plate (e.g., the rear plate 302 in FIG. 5) at least partially forming a rear surface of the electronic device, and a lateral member (e.g., the lateral member 303 in FIG. 5) at least partially surrounding a space between the front plate and the rear plate and at least partially forming a side surface of the electronic device. The conductive area (e.g., the lateral conductive structure 810 in FIG. 8) may be included in the lateral member.

According to an example embodiment of the disclosure, the at least one slit (e.g., the first slit 931, the second slit 932, the third slit 933, or the fourth slit 934 in FIG. 8) may extend from the at least one opening (e.g., the first opening 911, the second opening 912, the third opening 913, or the fourth opening 914 in FIG. 8) to an edge (e.g., the first edge E1 in FIG. 8) of the conductive area (e.g., the lateral conductive structure 810 in FIG. 8) corresponding to the front plate (e.g., the front plate 301 in FIG. 8).

According to an example embodiment of the disclosure, the at least one slit (e.g., the fifth slit 935, the sixth slit 936, the seventh slit 937, or the eighth slit 938 in FIG. 18) may extend from the at least one opening (e.g., the first opening 911, the second opening 912, the third opening 913, or the fourth opening 914 in FIG. 18) to an edge (e.g., the second edge E2 in FIG. 18) of the conductive area (e.g., the lateral conductive structure 810 in FIG. 18) corresponding to the rear plate (e.g., the rear plate 302 in FIG. 18).

According to an example embodiment of the disclosure, the at least one antenna element may include a first antenna element (e.g., the first antenna element 612a in FIG. 8) and a second antenna element (e.g., the second antenna element 612b in FIG. 8). The at least one opening may include a first opening (e.g., the first opening 911 in FIG. 8) aligned with and overlapping the first antenna element, and a second opening (e.g., the second opening 912 in FIG. 8) aligned with and overlapping the second antenna element. The at least one slit may include a slit (e.g., the first slit 931 or the second slit 932 in FIG. 8) extending from the first opening or the second opening to a first edge (e.g., the first edge E1 in FIG. 8) of the conductive area (e.g., the lateral conductive structure 810 in FIG. 8) corresponding to the front plate (e.g., the front plate 301 in FIG. 8), or a slit (e.g., the fifth slit 935 or the sixth slit 936 in FIG. 18) extending to a second edge (e.g., the second edge E2 in FIG. 18) of the conductive area corresponding to the rear plate (e.g., the rear plate 302 in FIG. 18).

According to an example embodiment of the disclosure, the at least one antenna element may include a first antenna element and a second antenna element. The at least one opening may be a single opening (e.g., the opening 2001 in FIG. 20) overlapping the first antenna element and the second antenna element. The at least one slit may include a slit (e.g., the first slit 2211, the second slit 2212, or the third slit 2313 in FIG. 23) aligned between the first antenna element and the second antenna element and extending from the single opening to a first edge (e.g., the first edge E1 in FIG. 23) of the conductive area (e.g., the lateral conductive structure 810 in FIG. 23) corresponding to the front plate (e.g., the front plate 301 in FIG. 23), or a slit (e.g., the fourth slit 2314, the fifth slit 2315, or the sixth slit 2316 in FIG. 23) extending to a second edge (e.g., the second edge E2 in FIG. 23) of the conductive area corresponding to the rear plate.

According to an example embodiment of the disclosure, the at least one antenna element may include a first antenna element and a second antenna element. The at least one opening may include a first opening aligned with and overlapping the first antenna element, and a second opening aligned with and overlapping the second antenna element. The at least one slit may include a slit (e.g., the first slit 2801 , the second slit 2802, or the third slit 2803 in FIG. 28) formed in a wall between the first opening and the second opening of the conductive area.

According to an example embodiment of the disclosure, the housing may further include a non-conductive area (e.g., the internal non-conductive structure 820) disposed in the at least one opening and the at least one slit and coupled to the conductive area.

According to an example embodiment of the disclosure, the housing may include a front plate (e.g., the front plate 301 in FIG. 5) at least partially forming the front surface of the electronic device, a rear plate (e.g., the rear plate 302 in FIG. 5) at least partially forming the rear surface of the electronic device, and a lateral member (e.g., the lateral member 303 in FIG. 5) at least partially surrounding a space between the front plate and the rear plate and at least partially forming the side surface of the electronic device. The conductive area (e.g., the lateral conductive structure 810 in FIG. 8) may be included in the lateral member. The conductive area may be included in the rear plate (e.g., the rear plate 302 in FIG. 29).

According to an example embodiment of the disclosure, the electronic device may further include a second antenna structure (e.g., the second antenna structure 582 in FIG. 5) positioned in an inner space of the housing while facing the rear plate (e.g., the rear plate 302 in FIG. 29). The electronic device may further include a second opening (e.g., the second opening 3002 in FIG. 31) formed in the rear plate while overlapping the second antenna structure. The at least one slit may include a slit (e.g., 3103 in FIG. 31) configured to connect the at least one opening (e.g., the first opening 3001 in FIG. 31) to the second opening.

According to an example embodiment of the disclosure, the second antenna structure (e.g., the second antenna structure 582 in FIG. 5) may transmit and/or receive RF signals related to UWB.

According to an example embodiment of the disclosure, an electronic may include a housing (e.g., the housing 310 in FIG. 3). The housing may include a front plate (e.g., the front plate 301 in FIG. 5) at least partially forming a front surface of the electronic device, a rear plate (e.g., the rear plate 302 in FIG. 5) at least partially forming a rear surface of the electronic device, and a lateral member (e.g., the lateral member 303 in FIG. 5) at least partially surrounding a space between the front plate and the rear plate and at least partially forming a side surface of the electronic device. The electronic device may include an antenna structure (e.g., the antenna structure 61 in FIG. 10) positioned in an inner space of the housing. The antenna structure may include a printed circuit board (e.g., the printed circuit board 611 in FIG. 6). The printed circuit board may include a first surface (e.g., the first surface 601 in FIG. 10) and a second surface (e.g., the second surface 602 in FIG. 10) facing in an opposite direction to the first surface. The first surface may face at least one opening (e.g., the multiple openings 911, 912, 913, and 914 in FIG. 8) formed in a lateral conductive structure (e.g., the lateral conductive structure 810 in FIG. 8) included in the lateral member. The antenna structure may include at least one antenna element (e.g., the multiple antenna elements 612a, 612b, 612c, and 612d in FIG. 8) positioned on the first surface or positioned in the printed circuit board and closer to the first surface than to the second surface. The lateral conductive structure may include at least one slit (e.g., the multiple slits 931, 932, 933, and 934 in FIG. 8) extending from the at least one opening.

According to an example embodiment of the disclosure, the at least one slit may include a slit (e.g., the first slit 931, the second slit 932, the third slit 933, or the fourth slit 934 in FIG. 8) extending from the at least one opening (e.g., the first opening 911, the second opening 912, the third opening 913, or the fourth opening 914 in FIG. 8) to a first edge (e.g., the first edge E1 in FIG. 8) of the lateral conductive structure (e.g., the lateral conductive structure 810 in FIG. 8) corresponding to the front plate (e.g., the front plate 301 in FIG. 8), or a slit (e.g., the fifth slit 935, the sixth slit 936, the seventh slit 937, or the eighth slit 938 in FIG. 18) extending to a second edge (e.g., the second edge E2 in FIG. 18) of the lateral conductive structure corresponding to the rear plate (e.g., the rear plate 302 in FIG. 18).

According to an example embodiment of the disclosure, the at least one antenna element may include a first antenna element and a second antenna element. The at least one opening may include a first opening (e.g., the first opening 911 in FIG. 8) aligned with and overlapping the first antenna element, and a second opening (e.g., the second opening 912 in FIG. 8) aligned with and overlapping the second antenna element. The at least one slit may include a slit (e.g., the first slit 931 or the second slit 932 in FIG. 8) extending from the first opening or the second opening to a first edge (e.g., the first edge E1 in FIG. 8) of the lateral conductive structure (e.g., the lateral conductive structure 810 in FIG. 8) corresponding to the front plate (e.g., the front plate 301 in FIG. 8), or a slit (e.g., the fifth slit 935 or the sixth slit 936 in FIG. 18) extending to a second edge (e.g., the second border E2 in FIG. 18) of the lateral conductive structure corresponding to the rear plate (e.g., the rear plate 302 in FIG. 18).

According to an example embodiment of the disclosure, the at least one antenna element may include a first antenna element and a second antenna element. The at least one opening may be a single opening (e.g., the opening 2001 in FIG. 20) overlapping the first antenna element and the second antenna element. The at least one slit may include a slit (e.g., the first slit 2211 in FIG. 23) aligned between the first antenna element and the second antenna element and extending from the single opening to a first edge (e.g., the first edge E1 in FIG. 23) of the lateral conductive structure (e.g., the lateral conductive structure 810 in FIG. 23) corresponding to the front plate (e.g., the front plate 301 in FIG. 23), or a slit (e.g., the fourth slit 2214 in FIG. 23) extending to a second edge (e.g., the second edge E2 in FIG. 23) of the lateral conductive structure corresponding to the rear plate (e.g., the rear plate 302 in FIG. 23).

According to an example embodiment of the disclosure, the at least one antenna element may include a first antenna element and a second antenna element. The at least one opening may include a first opening (e.g., the first opening 911 in FIG. 28) aligned with and overlapping the first antenna element, and a second opening (e.g., the second opening 912 in FIG. 28) aligned with and overlapping the second antenna element. The at least one slit may include a slit (e.g., the first slit 2801 in FIG. 28) formed in a wall (e.g., the first wall 921 in FIG. 28) between the first opening and the second opening of the lateral conductive structure.

The embodiments disclosed in the disclosure and the drawings are merely specific examples presented to easily explain the technical content and aid in understanding the embodiments, and are not intended to limit the scope of the embodiments. Therefore, the scope of the various embodiments of the disclosure should be interpreted to include changed or modified forms in addition to the embodiments disclosed herein.

## Claims

1. An electronic device comprising:
a housing comprising a conductive area forming an exterior of the electronic device; and
an antenna structure positioned in an inner space of the housing, the antenna structure comprising: a printed circuit board comprising a first surface, which faces at least one opening formed in the conductive area and corresponding to the antenna structure, and a second surface facing in an opposite direction to the first surface; and at least one antenna element positioned on the first surface, or positioned in the printed circuit board and closer to the first surface than to the second surface,
wherein the conductive area comprises at least one slit extending from the at least one opening.

2. The electronic device of claim 1, wherein the at least one slit comprises an open slit end formed at an edge of the conductive area.

3. The electronic device of claim 1, wherein the at least one slit comprises a closed slit end formed at an edge of the conductive area.

4. The electronic device of claim 1, wherein the at least one antenna element comprises multiple antenna elements, and
wherein the at least one opening comprises multiple openings which overlap and are aligned one-to-one with the multiple antenna elements.

5. The electronic device of claim 1, wherein the at least one antenna element comprises multiple antenna elements, and
wherein the at least one opening is a single opening overlapping the multiple antenna elements.

6. The electronic device of claim 1, wherein the housing comprises a front plate at least partially forming a front surface of the electronic device, a rear plate at least partially forming a rear surface of the electronic device, and a lateral member at least partially surrounding a space between the front plate and the rear plate and at least partially forming a side surface of the electronic device, and
wherein the conductive area is included in the lateral member.

7. The electronic device of claim 6, wherein the at least one slit extends from the at least one opening to an edge of the conductive area corresponding to the front plate.

8. The electronic device of claim 6, wherein the at least one slit extends from the at least one opening to an edge of the conductive area corresponding to the rear plate.

9. The electronic device of claim 6, wherein the at least one antenna element comprises a first antenna element and a second antenna element,
wherein the at least one opening comprises a first opening aligned with and overlapping the first antenna element, and a second opening aligned with and overlapping the second antenna element, and
wherein the at least one slit comprises a slit extending from the first opening or the second opening to a first edge of the conductive area corresponding to the front plate or to a second edge of the conductive area corresponding to the rear plate.

10. The electronic device of claim 6, wherein the at least one antenna element comprises a first antenna element and a second antenna element,
wherein the at least one opening is a single opening overlapping the first antenna element and the second antenna element, and
wherein the at least one slit comprises a slit aligned between the first antenna element and the second antenna element and extending from the single opening to a first edge of the conductive area corresponding to the front plate or to a second edge of the conductive area corresponding to the rear plate.

11. The electronic device of claim 1, wherein the at least one antenna element comprises a first antenna element and a second antenna element,
wherein the at least one opening comprises a first opening aligned with and overlapping the first antenna element, and a second opening aligned with and overlapping the second antenna element,
wherein the at least one slit comprises a slit formed in a wall between the first opening and the second opening of the conductive area.

12. The electronic device of claim 1, wherein the housing further comprises a non-conductive area disposed in the at least one opening and the at least one slit and coupled to the conductive area.

13. The electronic device of claim 1, wherein the housing comprises a front plate at least partially forming the front surface of the electronic device, a rear plate at least partially forming the rear surface of the electronic device, and a lateral member at least partially surrounding a space between the front plate and the rear plate and at least partially forming the side surface of the electronic device, and
wherein the conductive area is included in the rear plate.

14. The electronic device of claim 13, further comprising:
a second antenna structure positioned in an inner space of the housing while facing the rear plate; and
a second opening formed in the rear plate while overlapping the second antenna structure,
wherein the at least one slit comprises a slit configured to connect the at least one opening to the second opening.

15. The electronic device of claim 14, wherein the second antenna structure is configured to transmit and/or receive radio frequency (RF) signals related to ultra-wide band (UWB).
